# EUROPEAN PATENT SPECIFICATION

(11) **EP 2 980 986 B1**
(45) Date of publication and mention of the grant of the patent: **18.12.2019**
(21) Application number: 14773581.5
(22) Date of filing: 27.03.2014
(51) Int. Cl.: H02P 23/14, H02P 6/04

(54) **SERVO ADJUSTMENT METHOD FOR MOTOR DRIVE DEVICE**
SERVOEINSTELLVERFAHREN FÜR MOTORANTRIEBSVORRICHTUNG
PROCÉDÉ DE RÉGLAGE ASSERVI DE DISPOSITIF D'ENTRAÎNEMENT DE MOTEUR

(30) Priority: 29.03.2013 JP 2013071715
(43) Date of publication of application: 03.02.2016
(73) Proprietor: Panasonic Intellectual Property Management Co., Ltd., Osaka-shi, Osaka 540-6207 (JP)
(72) Inventor: SUZUKI, Kenichi, Osaka 540-6207 (JP); NISHIZONO, Masaru, Osaka 540-6207 (JP); FUJIWARA, Hiroshi, Osaka 540-6207 (JP)
(74) Representative: SSM Sandmair
(86) International application number: PCT/JP2014/001769
(87) International publication number: WO 2014/156164

(56) References cited:
- EP-A2- 0 428 950
- JP-A- H03 169 284
- JP-A- 2005 168 166
- JP-A- 2005 168 166
- JP-A- 2007 034 781
- JP-A- 2007 034 781
- JP-A- 2007 336 792
- JP-A- 2007 336 792
- JP-A- 2011 244 668
- US-A1- 2004 085 035

## Description

### TECHNICAL FIELD

The present invention relates to a servo adjustment method in a motor drive device that controls a servo motor.

### BACKGROUND ART

Thanks to recent high performance of an integrated microcomputer such as an RISC (Reduced Instruction Set Computer) microcomputer, a DSP (Digital Signal Processor), and development of an integrated circuit in which customizable elements are combined with a conventional ASIC (Application Specific Integrated Circuit) such as FPGA (Field Programmable Gate Array) and an SOC (System-on-a-Chip), various automatic adjustment functions are installed on a current motor drive device in addition to basic functions for driving and controlling of a servo motor as commanded externally, such as position/speed/current controls.

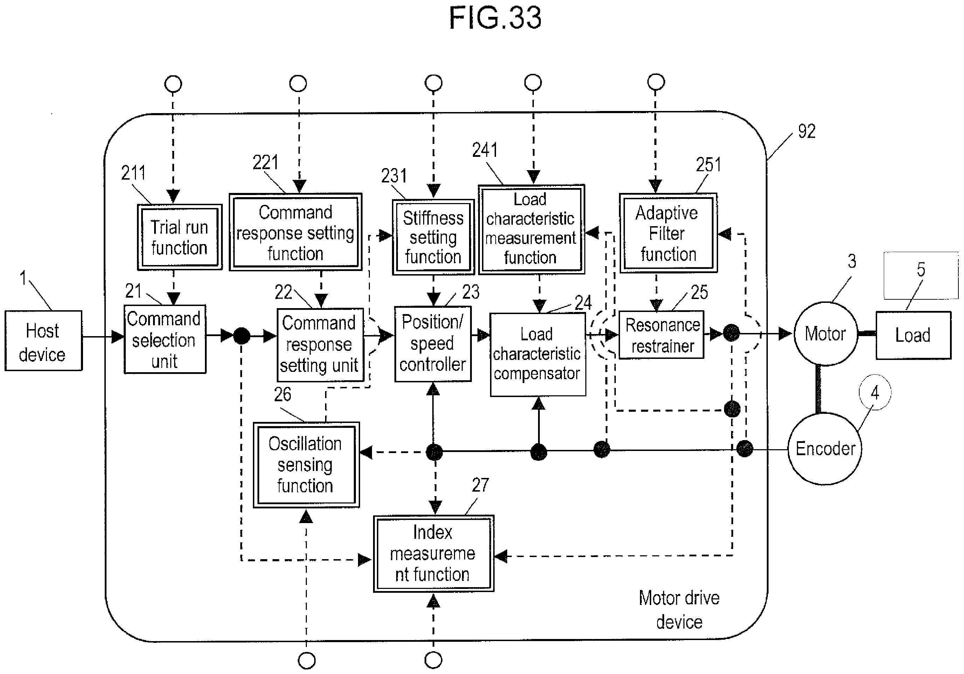

FIG. 33 is a block diagram of a conventional motor drive device.

The basic functional elements for driving and controlling the motor are constituted by blocks each surrounded by a single line and connected by solid lines in FIG. 33.

An external position command output by host device 1 as a host controller is input to command selection unit 21 of motor drive device 92. Command selection unit 21 selects either an internal position command output by trial run function 211 described later or the external position command to output the position command after selection to command response setting unit 22.

In command response setting unit 22, filter arithmetic operation processing is performed for the position command after selection, and the position command after filter is output to position/speed controller 23.

Position/speed controller 23 performs feedback control arithmetic operation represented by PID (Proportional/Integral/Derivative) control from this position command after filter and motor position information from encoder 4 to output a toque command that makes a position deviation 0.

Load characteristic compensator 24 performs scaling processing for absorbing influence of inertia to the toque command output by position/speed controller 23 in accordance with a total inertia of motor 3 and load 5 to thereby absorb a difference in load inertia. Moreover, compensation is performed in which a friction torque of motor 3 and load 5 is estimated, based on the motor position information from encoder 4 to add the estimate in advance, by which a torque command after compensation is generated.

Resonance restrainer 25 outputs, as a torque command after filter, a result after notch filter or low-pass filter processing for removing a specific frequency component from the torque command after compensation so as not to excite vibration caused by a resonance characteristic of motor 3 and load 5.

Motor 3 is controlled so as to output a torque as commanded by the torque command after filter through current control or a power circuit not shown, to which the torque command after filter is input. A motion of motor 3 is transmitted to connected load 5 and encoder 4, and is fed back to motor drive device 92 as the motor position information through encoder 4.

Next, an outline of automatic adjustment functions constituted by blocks each surrounded by a double line and connected by dashed lines in FIG. 33 will be described.

As described, for example, in Patent Literature 1, trial run function 211 generates a certain amount of positive and negative reciprocating operation patterns of a triangular wave having an acceleration/deceleration with a certain inclination inside motor drive device 92. Moreover, more generally speaking, in motor drive device 92, parameters such as a movement amount, a highest speed, an acceleration time, a deceleration time, and a stop time are set externally. Trial run function 211 automatically calculates a command pattern by NC (numerical control) arithmetic operation processing incorporated in motor drive device 92 in real time to generate the internal position command for every predetermined period. Additional information for requesting selection of the internal position command to command selection unit 21 is transmitted together with the internal position command, by which operation of command selection unit 21 can also be designated from trial run function 211.

As described, for example, in Patent Literature 2, command response setting function 221 decides a cutoff frequency of a command pre-filter, which cutoff frequency decides responsiveness of the position command from a table incorporated in motor drive device 92 by being given one index of a stiffness value from an outside of motor drive device 92. Moreover, more generally speaking, to motor drive device 92 are inputted one or a plurality of command response indexes including a form of instructing a finer frequency characteristic by using a primary delay or secondary delay filter time constant or a damping ratio, and a form of instructing a transient characteristic of time response such as a rise time, a delay time, and an overshooting amount. Command response setting function 221 automatically sets one or plurality of parameters of command response setting unit 22 so that an input/output relation of command response setting unit 22 coincides with the command response index as much as possible.

As described, for example, in Patent Literature 3, stiffness setting function 231 sets one parameter represented by a servo stiffness as an index, and this parameter is multiplied by certain ratios to set a speed proportional gain, a speed integration gain, and a position proportional gain in conjunction with the parameter. Moreover, as described in foregoing Patent Literature 2, gain setting of the position/speed controller may be decided from a table corresponding to the stiffness value. Generally speaking, to stiffness setting function 231 are input one or a plurality of stiffness indexes, and stiffness setting function 231 automatically sets one or a plurality of parameters of position/speed controller 23 so that disturbance response of position/speed controller 23 coincides with the stiffness index as much as possible.

As described, for example, in Patent Literature 5, load characteristic measurement function 241 automatically estimates characteristics regarding a load, using least square estimate from the torque command after filter to motor 3, the motor position information from encoder 4, and speed/acceleration, which is a high-order difference of the same. As the characteristics regarding the load, for example, the total inertia of motor 3 and load 5, and friction characteristics such as an unbalanced load torque acting constantly all the time, a kinetic friction torque depending on an operation direction, and a viscous friction torque proportional to an operation speed can be cited. Moreover, the estimate result is reflected on load characteristic compensator 24 in real time, by which appropriate robustness that brings about the same responsiveness designated with the command response index and the stiffness index whatever load 5 is connected can be obtained.

As described, for example, in Patent Literature 4, adaptive filter function 251 automatically adjusts parameters of resonance restrainer 25 by adaptive algorism using a recursive type notch filter so that a high frequency component extracted from a motor speed approaches 0 as much as possible. Moreover, in adaptive filter function 251, there exists variation such as extracting a vibration component from the torque command, extracting the vibration component from a difference from model response, and further providing a plurality of adaptive filters, automatically adjusting not only a notch frequency but a width, a depth and a Q value. Generally speaking, adaptive filter function can be said to be a function that extracts the vibration component attributed to the resonance characteristic of motor 3 and load 5 by some method and automatically adjusts the filter parameters of resonance restrainer 25 by an adaptive algorism to minimize a difference from a norm input.

As described, for example, in Patent Literature 6, oscillation sensing function 26 extracts a fluctuation from the motor position information from encoder 4 to detect an oscillation state of motor 3 and load 5 by comparison with a threshold, determination of a duration time and the like. When oscillation is sensed, oscillation sensing information is transmitted to foregoing stiffness setting function 231, and selects a stiffness value that makes a frequency band width of a feedback loop narrow to automatically restrain the oscillation.

Finally, as described for example, in Patent Literature 7, evaluation index measurement function 27 periodically measures and stores input/output data such as a position command output of command selection unit 21, a motor position output of encoder 4, and a torque command output of load characteristic compensator 24. Further, evaluation index measurement function 27 is a function that calculates, displays, and accumulates an evaluation value from the input/output data corresponding to evaluation indexes including a setting time, overshooting, and a torque fluctuation. It is an important aspect of the present function to compress the data into a few of meaningful evaluation indexes from enormous motor control information acquirable in real time.

However, in the above-described conventional technique, there is a problem that various automatic adjustment functions are optimized individually, so that in a series of flow of the servo adjustment, sufficient matching is not assured.

For example, trial run function 211 can be used not only for the servo adjustment but for various purposes such as origin detection at the time of mechanism assembly, aging in operation check, and retraction operation in maintenance work. Thus, with regards to trial run function 211, the movement amount, the speed, and the acceleration are customizable. However, operation required for the servo adjustment differs, depending on a step, and in order to select each operation, knowledge of the servo adjustment and various automatic adjustment functions is required.

Moreover, in command response setting function 221, as the command response index is increased, the setting time can be shorter in positioning control (PTP (Point-to-point) control), and further, a following error can be made smaller in locus control (CP (Continuous path) control), while command response setting function 221 is restricted by discretization of the external position command, and command resolution setting. Moreover, in view of machine base vibration due to the stiffness of the device itself with motor 3 and load 5 fixed, the command response index may be made lower, and for this determination, understanding of the host device and experience of actual machine operation are required.

Moreover, in stiffness setting function 231, since as the stiffness index is increased, the disturbance suppression characteristic is improved, the overshooting amount can be made small in the PTP control, and the following error in the CP control can also be made small. However, a highest level of the stiffness index depends on stability of the feedback control of position/speed controller 23. Thus, knowledge of control theory is essential for optimal adjustment. Moreover, unless setting in position/speed controller 23, the total inertia of load characteristic compensator 24, and resonance restrainer 25 is made in proper order, feedback stability is impaired, so that responsiveness designated with the stiffness index cannot be obtained. Furthermore, in the worst case, destabilization may result in oscillation. Here, not only control theory but know-how of a servo adjustment procedure is important.

Moreover, while load characteristic measurement function 241 is a convenient function that automatically adjusts the total inertia and friction compensation of load characteristic compensator 24, it is not suitable for an application in which the load characteristic steeply changes. It is not appropriate to validate the least square estimate all the time for an articulated robot, a picking and placing system device in which influence of load fluctuation is large because of direct drive or the like, a device in which the total inertia periodically fluctuates due to cam drive, and so on. Moreover, with regards to the friction compensation as well, in the articulated robot, unbalanced load torque estimate in the motor alone is not useful, because a gravity direction changes. Furthermore, the load characteristic estimate based on the least squares method, which is a premise of the compensation, also requires knowledge and experience of system identification for obtaining an optimal estimated value because the load characteristic estimate is affected by an error due to an operation pattern and a nonlinear characteristic.

Moreover, while adaptive filter function 251 as well similarly automatically adjusts the filter setting of foregoing resonance restrainer 25, it is assumed that normally, the resonance characteristic does not steeply change. In a motor that drives a joint close to a fixed side in the foregoing vertically-articulated robot, the resonance characteristic is changed by posture, and thus, using adaptive filter function 251 is not appropriate. Moreover, in a load or an application in which nonlinearity of back lash, saturation and the like is strong, the adaptive filter may malfunction, so that even in the current technology, validating adaptive filter function 251 all the time is a big risk. In this respect, case-by-case coping for each site and each device is required.

Moreover, while oscillation sensing function 26 is a convenient function at the time of servo adjustment in which the setting is frequently changed to try the operation, behavior of the load changes when oscillation sensing function 26 is operated during actual operation. Thus, it should be noted in the operation that oscillation sensing function 26 is restrictively validated under a situation where oscillation is anticipated to occur to some extent, such as during the servo adjustment.

Moreover, evaluation index measurement function 27 does not affect the basic functions for controlling the motor. However, in some evaluation indexes, a certain restriction may be given to the setting of the command pattern and the basic functions in order to obtain a proper measurement result. As one example, a positioning setting time in the PTP control is defined as a period from a point when the external position command is stopped to a point when a motor position enters a positioning completion range. However, in the case where since the indexes and the stiffness index are low, a next external position command change starts before the motor position enters the positioning completion range, or the like, obviously, the positioning setting time cannot be measured. Unless meaning of the evaluation indexes and a measurement method of the evaluation index measurement function are understood, a result of the servo adjustment cannot be determined.

Operation for validity/invalidity, mode setting and the like of each of the automatic adjustment functions normally needs to be externally performed individually, and it is very difficult to operate all the automatic adjustment functions in proper order for the servo adjustment.

### Citation List

### Patent Literatures

PTL 1: Unexamined Japanese Patent Publication No. H05-346359
PTL 2: Unexamined Japanese Patent Publication No. 2007-336792
PTL 3: Unexamined Japanese Patent Publication No. H06-319284
PTL 4: Unexamined Japanese Patent Publication No. 2004-274976
PTL 5: Unexamined Japanese Patent Publication No. 2005-168166
PTL 6: WO 2008/087893
PTL 7: WO 2009/096169
US 2004/0085035 A1 discloses a motor controller with auto tuning for several components like inertia estimation, notch pass filter for vibration suppression and control parameter auto tuning with controlled estimation sequence. In particular, US 2004/0085035 A1 relates to a position control apparatus for motor. An electric motor position control apparatus in accordance with the present invention has a plurality of sets of control parameters including at least the proportional gain of a position control section and the proportional gain of a speed control section beforehand, wherein set selection and the measurement of the response state of an electric motor to a position command at the time when the electric motor is controlled by using the control parameters of the selected set are carried out sequentially, one preferable set is selected depending on the measured response state, the control parameters of the selected set are set, and the control parameters are changed as a set.
JP 2007-336792 A relates to a controller for servo motor. The speed command is, after passing through a command pre-filter, inputted in a feedback loop. The feedback loop controls a servo motor so that it follows a speed command or a position command, in accordance with the input signal of an encoder connected to the servo motor. The value of a control parameter contained in the feedback loop is set, in accordance with the stiffness setting by a parameter setting means; and at the same time, the cut-off frequency of the command pre-filter is set in accordance with the stiffness setting by the parameter-setting means.

### SUMMARY OF THE INVENTION

It is an object of the present invention to provide an improved and useful servo adjustment method for a motor drive device in which the above-mentioned problems are eliminated.

In order to achieve the above-mentioned object, there is provided a servo adjustment method for a motor drive device according to claim 1.

Advantageous embodiments are defined by the dependent claims.

A motor drive device of the present invention includes any of the following five basic functional elements of motor control. A first basic functional element is a command selection unit that an external position command and an internal position command input from a host device are input to, and outputs either the external position command or the internal position command as a post-selection position command. A second basic functional element is a command response setting unit that the post-selection position command is input to, and performs filter processing for removing a specific frequency band to output a post-filter position command. A third basic functional element is a position/speed controller that the post-filter position command and motor position information from an encoder are input to, and generates a torque command that makes a deviation between the post-filter position command and the motor position information zero. A fourth basic functional element is a load characteristic corrector that the torque command is input to, and multiplies the torque command by an inertia estimated value of a motor and a load, and then adds a friction torque estimated value of the load to generate a post-compensation torque command. A fifth basic functional element is a resonance restrainer that performs filter processing for removing a specific frequency band from the post-compensation torque command to output a post-filter torque command.

Furthermore, the motor drive device of the present invention includes any of the following seven automatic adjustment functions. A first automatic adjustment function is a trial run function that automatically generates the internal position command in accordance with an operation pattern designated by a servo adjuster. A second automatic adjustment function is a command response setting function that automatically sets a filter characteristic of the command response setting unit in accordance with a command response index designated by the servo adjuster. A third automatic adjustment function is a stiffness setting function that automatically sets a parameter of the position/speed controller in accordance with a stiffness index designated by the servo adjuster and an oscillation sensing signal notified from an oscillation sensing function. A fourth automatic adjustment function is a load characteristic measurement function that can set validity/invalidity of load characteristic measurement and validity/invalidity of reflection of a load characteristic estimate result from the servo adjuster individually, and automatically measures a load characteristic from the post-filter torque command of the resonance controller and motor position information from the encoder to automatically set the load characteristic compensator in accordance with a measurement result. A fifth automatic adjustment function is an adaptive filter function that can set validity/invalidity of adaptation operation and an adaptive filter mode from the servo adjuster, and automatically sets a filter characteristic of the resonance restrainer in accordance with the adaptive filter mode when the adaptation operation is valid. A sixth automatic adjustment function is an oscillation sensing function that can set validity/invalidity of oscillation sensing and an oscillation sensing level from the servo adjuster, and automatically measures an oscillation state from position information from the encoder to automatically restrain oscillation in cooperation with the stiffness setting function. A seventh automatic adjustment function is an evaluation index measurement function that can set a positioning completion range from the servo adjuster and automatically measures various types of evaluation indexes from the post-filter position command, the motor position information, the post-filter torque command and the like.

The servo adjustment method of the present invention in the above-described motor drive device includes any of five steps of step 1 of performing initial setting, step 2 of performing the load characteristic measurement and command pattern decision, step 3 of deciding a stiffness index maximum value and storing setting of the resonance restrainer corresponding to the stiffness index, step 4 of combining the stiffness index and the command response index to store the evaluation indexes at the time of designated operation, and step 5 of obtaining a final adjustment result from the evaluation indexes in accordance with a search condition.

According to the above-described constitution, even a worker not having detailed knowledge of the servo adjustment can obtain the proper adjustment result only by executing the five steps in order. Moreover, sequent execution of a combination of any of the five steps also brings about a similar effect.

### BRIEF DESCRIPTION OF DRAWINGS

FIG. 1 is a flowchart showing respective steps of a servo adjustment method for a motor drive device in a first exemplary embodiment of the present invention.
FIG. 2 is a block diagram of the motor drive device in the first exemplary embodiment.
FIG. 3 is a diagram showing a detailed constitution of a command selection unit in the first exemplary embodiment.
FIG. 4 is a diagram showing a detailed constitution of a command response setting unit in the first exemplary embodiment.
FIG. 5 is a diagram showing a detailed constitution of a position/speed controller in the first exemplary embodiment.
FIG. 6 is a diagram showing a detailed constitution of another example of the position/speed controller in the first exemplary embodiment.
FIG. 7 is a diagram showing a detailed constitution of a load characteristic compensator in the first exemplary embodiment.
FIG. 8 is a diagram showing a detailed constitution of a resonance restrainer in the first exemplary embodiment.
FIG. 9A is a diagram showing a detailed constitution of a trial run function in the first exemplary embodiment.
FIG. 9B is a diagram showing a command pattern generation example of a command generator of the trial run function in the first exemplary embodiment.
FIG. 10 is a diagram showing a detailed constitution of a command response setting function in the first exemplary embodiment.
FIG. 11A is a diagram showing a detailed constitution of a stiffness setting function in the first exemplary embodiment.
FIG. 11B is a diagram showing one example of a stiffness table of the stiffness setting function in the first exemplary embodiment.
FIG. 12A is a diagram showing a detailed constitution of a load characteristic measurement function in the first exemplary embodiment.
FIG. 12B is a diagram for describing a method of deriving an estimated value by least square estimate processing in the first exemplary embodiment.
FIG. 13 is a diagram showing a detailed constitution of an adaptive filter function in the first exemplary embodiment.
FIG. 14 is a diagram showing a detailed constitution of an oscillation sensing function in the first exemplary embodiment.
FIG. 15 is a diagram showing a detailed constitution of an evaluation index measurement function in the first exemplary embodiment.
FIG. 16 is a diagram of an operation screen of step 1 of servo adjustment in a second exemplary embodiment of the present invention.
FIG. 17 is a flowchart showing a procedure of step 1 of the servo adjustment in the second exemplary embodiment.
FIG. 18 is a diagram showing an initial condition decision table in step 1-3 in the second exemplary embodiment.
FIG. 19 is a diagram of an operation screen of step 2 of the servo adjustment in a third exemplary embodiment of the present invention.
FIG. 20 is a flowchart showing a procedure of step 2 of the servo adjustment in the third exemplary embodiment.
FIG. 21A is an operation pattern diagram in step 2 of the servo adjustment in the third exemplary embodiment.
FIG. 21B is another operation pattern diagram in step 2 of the servo adjustment in the third exemplary embodiment.
FIG. 22 is a diagram of an operation screen of step 3 of the servo adjustment in a fourth exemplary embodiment of the present invention.
FIG. 23 is a flowchart showing a procedure of step 3 of the servo adjustment in the fourth exemplary embodiment.
FIG. 24A is an operation pattern diagram in step 3 of the servo adjustment in the fourth exemplary embodiment.
FIG. 24B is an operation pattern diagram as another example in step 3 of the servo adjustment in the fourth exemplary embodiment.
FIG. 24C is an operation pattern diagram as still another example in step 3 of the servo adjustment in the fourth exemplary embodiment.
FIG. 25 is a diagram of an operation screen of step 4 of the servo adjustment in a fifth exemplary embodiment of the present invention.
FIG. 26 is a flowchart showing a procedure of step 4 of the servo adjustment in the fifth exemplary embodiment.
FIG. 27A is a diagram showing a search pattern table in step 4-1 in the fifth exemplary embodiment.
FIG. 27B is a diagram showing combinations of search patterns in the fifth exemplary embodiment.
FIG. 27C is a diagram showing other combinations of the search patterns in the fifth exemplary embodiment.
FIG. 28A is an operation diagram at the time of command response measurement in the fifth exemplary embodiment.
FIG. 28B is an operation diagram at the time of the command response measurement in the fifth exemplary embodiment.
FIG. 28C is an operation diagram at the time of the command response measurement in the fifth exemplary embodiment.
FIG. 29 is a diagram of an operation screen of step 5 of the servo adjustment in a sixth exemplary embodiment of the present invention.
FIG. 30 is a flowchart showing a procedure of step 5 of the servo adjustment in the sixth exemplary embodiment.
FIG. 31 is a diagram showing a recommended condition table in step 5-1 in the sixth exemplary embodiment.
FIG. 32 is a diagram showing a fine adjustment screen of step 5-3 in the sixth exemplary embodiment.
FIG. 33 is a block diagram of a conventional motor drive device.

### DESCRIPTION OF EMBODIMENTS

Hereinafter, with reference to the drawings, exemplary embodiments of the present invention will be described.

### FIRST EXEMPLARY EMBODIMENT

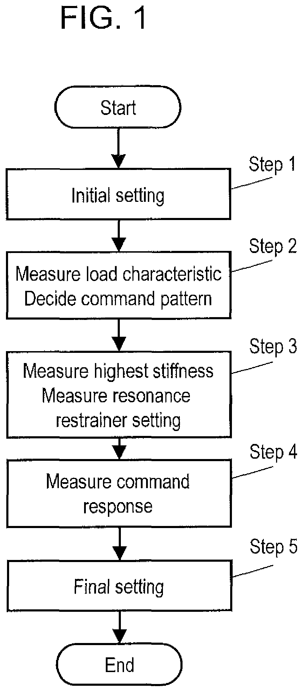

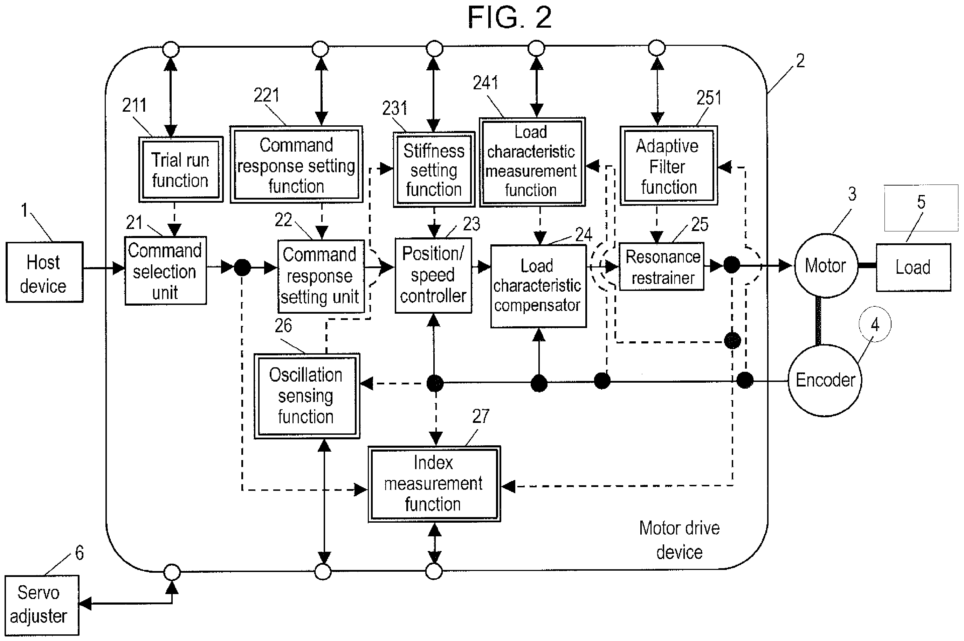

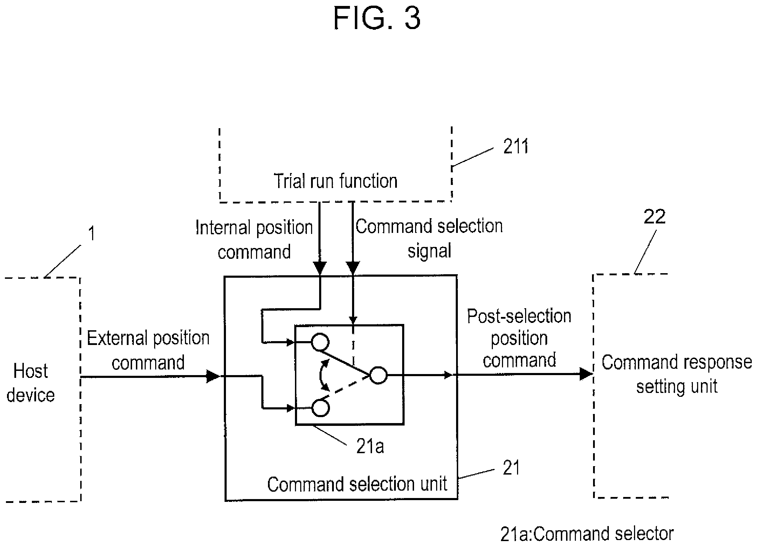

FIG. 1 is a flowchart showing steps of a serve adjustment method of a motor drive device in a first exemplary embodiment of the present invention. FIG. 2 is a block diagram of the motor drive device in the first exemplary embodiment of the present invention. FIGS. 3 to 15 are each a diagram showing a detailed constitution in each block of the present motor drive device.

Firstly, referring to FIGS. 3 to 15, a constitution of motor drive device 2 in the present exemplary embodiment will be described, with reference to FIG. 2.

While respective blocks of motor drive device 2 shown in FIG. 2 are generally the same as those of motor drive device 92 in FIG. 33, motor drive device 2 is different from motor drive device 92 shown in FIG. 33 in that input and output of automatic adjustment functions with respect to an outside is connected to servo adjuster 6 to enable control from servo adjuster 6. That is, the present exemplary embodiment is constituted so that the automatic adjustment functions of motor drive device 2 can be controlled collectively by servo adjuster 6.

In the constitution shown in FIG. 2, basic functional elements for driving and controlling a motor, which are constituted by blocks each surrounded by a single line and connected by solid lines, will be first described.

An external position command output by host device 1, which is a host controller, is input to command selection unit 21 of motor drive device 2.

As shown in FIG. 3, command selection unit 21 receives an internal position command and a command selection signal output by trial run function 211 described later. Command selection unit 21 selects either the internal position command or the external position command, based on the command selection signal in command selector 21a to output, to command response setting unit 22, a post-selection position command, which is a position command after selection.

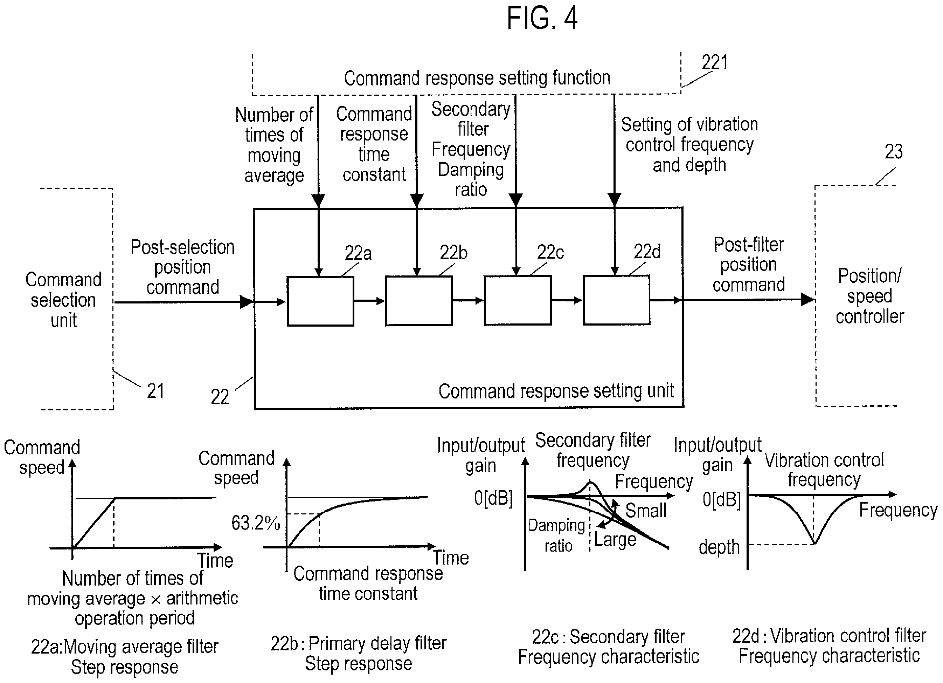

As shown in FIG. 4, to command response setting unit 22 is input the position command after selection output from command selection unit 21, and command response setting unit 22 performs various types of filter processing to this position command to output a post-filter position command as a position command after filter as a result of various types of filter processing. Command response setting unit 22 includes moving average filter 22a, primary delay filter 22b, secondary filter 22c, and vibration control filter 22d for filter processing. Moving average filter 22a performs moving average processing of a number of times of moving average designated from command response setting function 221 described later. Primary delay filter 22b has a step response characteristic of a command response time constant. Secondary filter 22c has a frequency characteristic prescribed by a secondary filter frequency and a damping ratio. Vibration control filter 22d has a frequency characteristic defined by a vibration control frequency and a depth. In FIG. 4, an example of step responses and frequency characteristics of these filters is also shown.

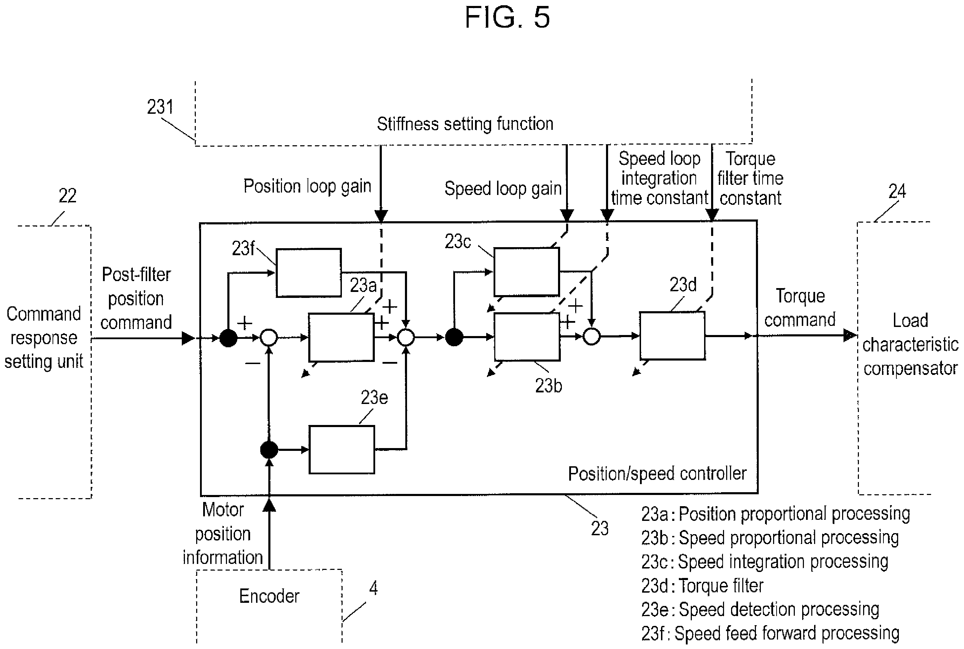

As shown in FIG. 5, to position/speed controller 23 is input motor position information from encoder 4 connected to motor 3 as a driven object together with the position command after filter, and position/speed controller 23 outputs a torque command that makes a deviation between the motor position information and the position command after filter zero.

Specifically, position/speed controller 23 shown in FIG. 5 includes position proportional processing 23a, speed detection processing 23e, speed proportional processing 23b, speed integration processing 23c, torque filter processing 23d, and speed feed forward processing 23f.

In position/speed controller 23 shown in FIG. 5, position proportional processing 23a multiplies a position deviation by a position loop gain designated from stiffness setting function 231 described later to output a result. Speed detection processing 23e detects a motor speed corresponding to an actual speed, based on, for example, a difference, differential operation and the like with respect to the motor position information. Speed proportional processing 23b multiplies a speed deviation by a speed loop gain designated from stiffness setting function 231 to output a result. Speed integration processing 23c performs speed integration by a speed loop integration time constant designated from stiffness setting function 231 to output a result. Torque filter processing 23d applies the primary delay filter having a torque filter time constant designated from stiffness setting function 231 to an internal torque command to output a result. Speed feed forward processing 23f performs processing such as a difference to the position command after filter to output a result.

Position/speed controller 23 shown in FIG. 5 calculates the position deviation, which is a difference between the post-filter position command and the motor position information, to perform position proportional processing 23a to this position deviation and obtain a speed command. Moreover, speed detection processing 23e obtains the motor speed corresponding to the actual speed of the motor. Next, the speed deviation, which is a difference between the speed command and the motor speed, is calculated, processing by speed proportional processing 23b and speed integration processing 23c is performed to this speed deviation, and these outputs are added to obtain the internal torque command. The filter processing by torque filter processing 23d is applied to this internal torque command to obtain the torque command as an output. For responsiveness improvement, a result from applying speed feed forward processing 23f may be added to the above-described speed command.

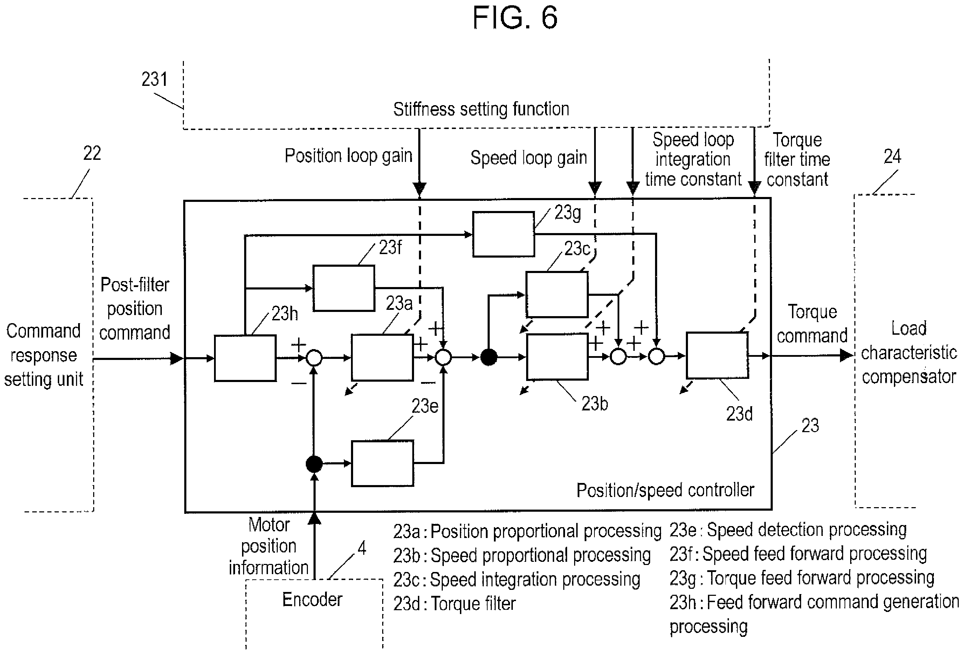

FIG. 6 is a block diagram showing another example of position/speed controller 23. A constitution in FIG. 6 includes processing for generating each piece of the command information on a feed forward base. In order to perform the above-described processing, position/speed controller 23 shown in FIG. 6 includes feed forward command generation processing 23h and torque feed forward processing 23g in addition to the processing shown in FIG. 5. Feed forward command generation processing 23h performs, to the post-filter position command, processing obtained by combining a first-order difference or a second-order difference with the filter processing. Using a processing result of this feed forward command generation processing 23h, the three commands of a feed forward position command, a feed forward speed command as an input to speed feed forward processing 23f, and a feed forward torque command as an input to torque feed forward processing 23g are simultaneously generated.

Specifically, position/speed controller 23 shown in FIG. 6 includes position proportional processing 23a, speed detection processing 23e, speed proportional processing 23b, speed integration processing 23c, and torque filter processing 23d as with FIG. 5 in addition to each feed forward processing described above.

To position/speed controller 23 shown in FIG. 6 is first input the motor position information from encoder 4 connected to motor 3 as the driven object, and position/speed controller 23 calculates the position deviation as a difference from the feed forward position command. Position proportional processing 23a is performed to this position deviation to obtain the speed command. Furthermore, an output of speed feed forward processing 23f is added to the speed command. The motor speed is obtained in speed detection processing 23e. Next, the speed deviation as a difference between the speed command and the motor speed is calculated, the processing by speed proportional processing 23b and by speed integration processing 23c is performed to the speed deviation, and these outputs are added to obtain the internal torque command. Furthermore, an output of torque feed forward processing 23g is added to the internal torque command. The filter processing by torque filter processing 23d is applied to this internal torque command to obtain the torque command as the output.

In this constitution, if the position command after filter is sufficiently smooth, complete follow-up of the motor position to the position command after filter can be realized in an ideal state where influence by a disturbance torque is not considered. A control constitution of two degrees of freedom can be obtained in which the command response index by command response setting function 221 described later sets command response, and the stiffness index of stiffness setting function 231 described later sets disturbance response independently from each other.

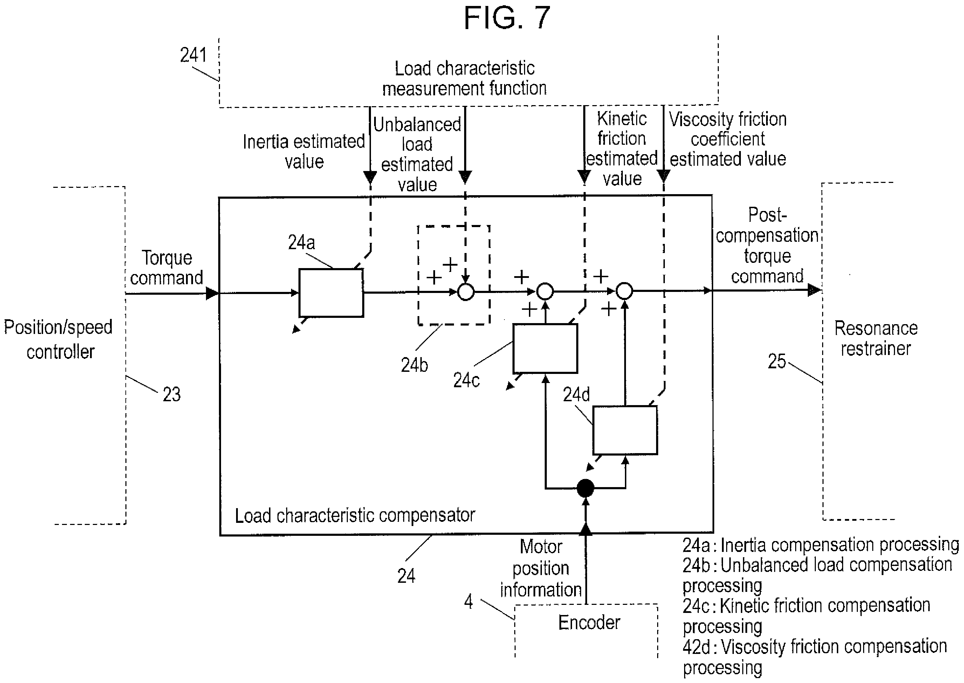

As shown in FIG. 7, load characteristic compensator 24 performs assumable friction compensation by applying various types of processing to the torque command. Load characteristic compensator 24 includes inertia correction processing 24a, unbalanced load compensation processing 24b, kinetic friction compensation processing 24c, and viscosity friction compensation processing 24d.

Inertia correction processing 24 applies processing in which the torque command is multiplied by an inertia estimated value designated by load characteristic measurement function 241 described later. In this manner, inertia correction processing 24 performs scaling processing in accordance with a total inertia of motor 3 and load 5. Thereby, a difference in motor equivalent inertia differing, depending on load 5 is absorbed.

Moreover, load characteristic compensator 24 performs compensation to the unbalanced load by adding an unbalanced load estimated value designated by load characteristic measurement function 241 to the torque command. Kinetic friction compensation processing 24c calculates the motor speed from the motor position information from encoder 4 to add or subtract a kinetic friction estimated value to or from the torque command in accordance with a motor speed direction. Kinetic friction compensation processing 24c performs compensation to a kinetic friction by performing the above-described processing. Viscosity friction compensation processing 24d multiplies the motor speed by a viscosity friction coefficient estimated value to add the result to the torque command. Viscosity friction compensation processing 24d performs compensation to a viscosity friction by performing the above-described processing.

Load characteristic compensator 24 performs the assumable friction compensation by the above-described processing, by which quick responsiveness can be improved, and a difference in response by an operation direction/speed can be reduced.

Load characteristic compensator 24 outputs a result from the various types of load characteristic compensation as described above as a torque command after compensation. The motor speed information used for the kinetic friction compensation and the viscosity friction compensation follows up the speed command as long as position/speed controller 23 continues to operate. Therefore, if the speed command that can be calculated from a difference of the position command or the like is used in place of the motor speed, influence by load fluctuation is not received, which may stabilize a compensation value.

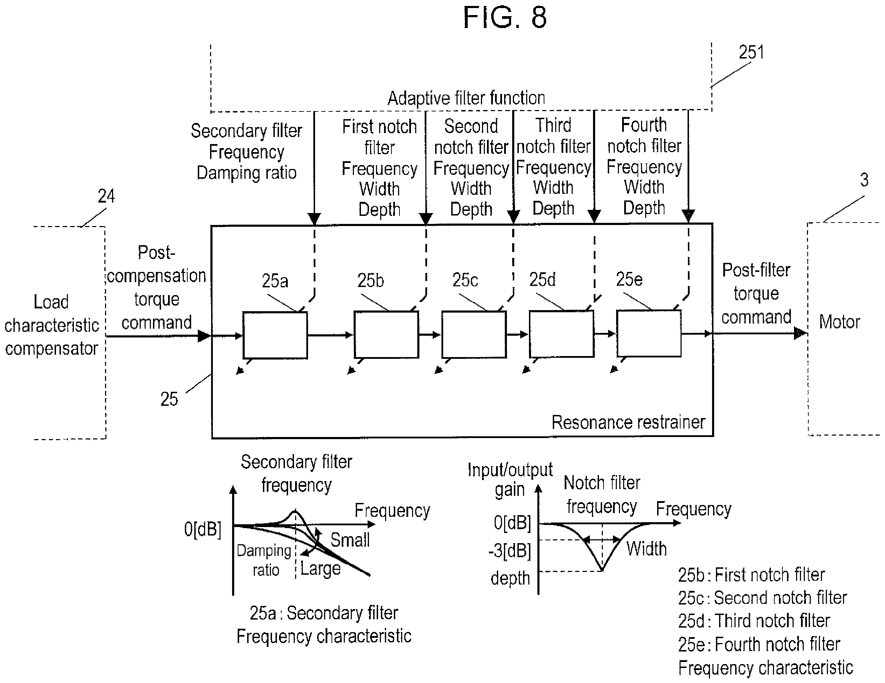

As shown in FIG. 8, resonance restrainer 25 applies the filter processing for removing a specific frequency component so as not to excite vibration that causes a resonance characteristic with load 5 connected to motor 3.

Resonance restrainer 25 includes secondary filter 25a, and first notch filter 25c, second notch filter 25d, third notch filter 25e, and fourth notch filter 25f as a plurality of types of notch filter processing. Secondary filter 25a performs filter processing prescribed by a secondary filter frequency and a damping ratio designated by adaptive filter function 251 described later. Similarly, each of the notch filters performs notch filter processing that attenuates a specific frequency band at a notch filter frequency/width/depth designated by adaptive filter function 251. Resonance restrainer 25 outputs a result from the filter as a post-filter torque command, which is a torque command after filter. In FIG. 8, an example of step responses/frequency characteristics of these filters is also shown.

Finally, a voltage/a current to motor 3 is controlled by current control and a power circuit not shown to operate load 5 connected to motor 3 so that an output torque of motor 3 changes in accordance with this post-filter torque command.

Next, referring to FIG. 2, the automatic adjustment functions constituted by the blocks each surrounded by the double line and connected by the dashed lines will be described.

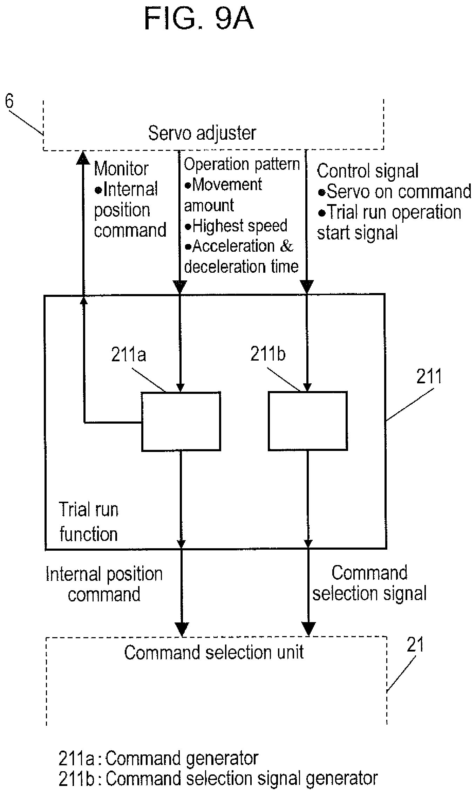

As shown in FIG. 9A, from servo adjuster 6 to trial run function 211 are input information of an operation pattern such as a movement amount/a highest speed/an acceleration and deceleration time, and control signals such as a servo-on signal and a trial run operation start signal, and trial run function 211 outputs the internal position command and the command selection signal to command selection unit 21.

Trial run function 211 includes command generator 211a and command selection signal generator 211b. Command generator 211a utilizes the information of the operation pattern input from servo adjuster 6 to automatically generate the operation pattern, and output the internal position command based on this operation pattern. Command selection signal generator 211b outputs the command selection signal to instruct the selection of the internal position command to command selection unit 21 at a point when the control of a motor energization state not shown, or the trial run operation start signal is turned on, based on the control signals input from servo adjuster 6.

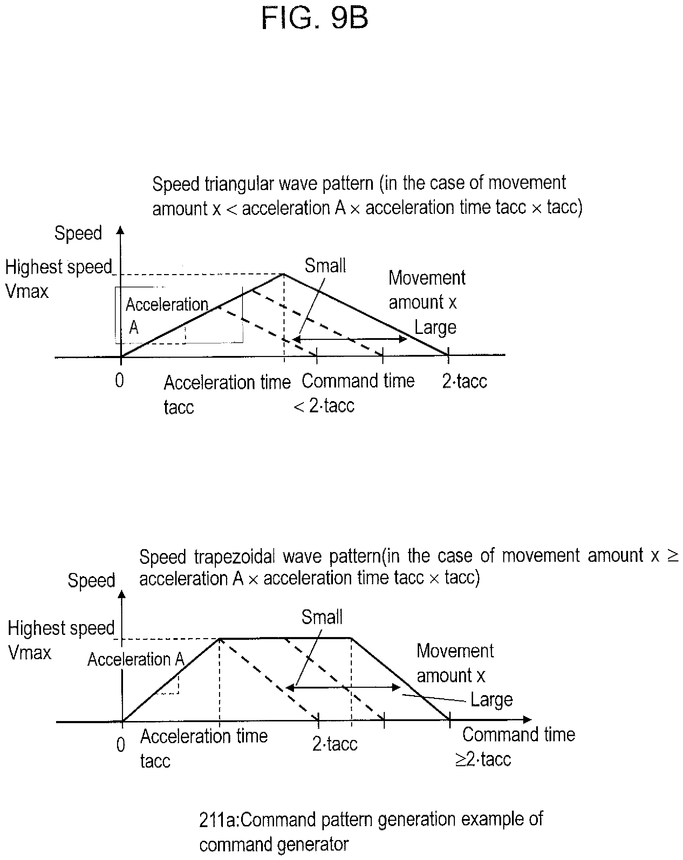

Moreover, FIG. 9B is a diagram showing a command pattern generation example of command generator 211a. FIG. 9B shows a method for generating a speed triangular wave pattern shown in an upper stage, or a speed trapezoidal wave pattern shown in a lower stage in FIG. 9B from movement amount X and acceleration and deceleration time tacc. When movement amount X is small, the speed triangular wave pattern is selected, while as movement amount X is larger, a maximum value of the speed becomes larger, and when the speed reaches highest speed Vmax, the speed trapezoidal wave pattern is generated.

The internal position command generated in command generator 211a is also output to servo adjuster 6 as monitor information.

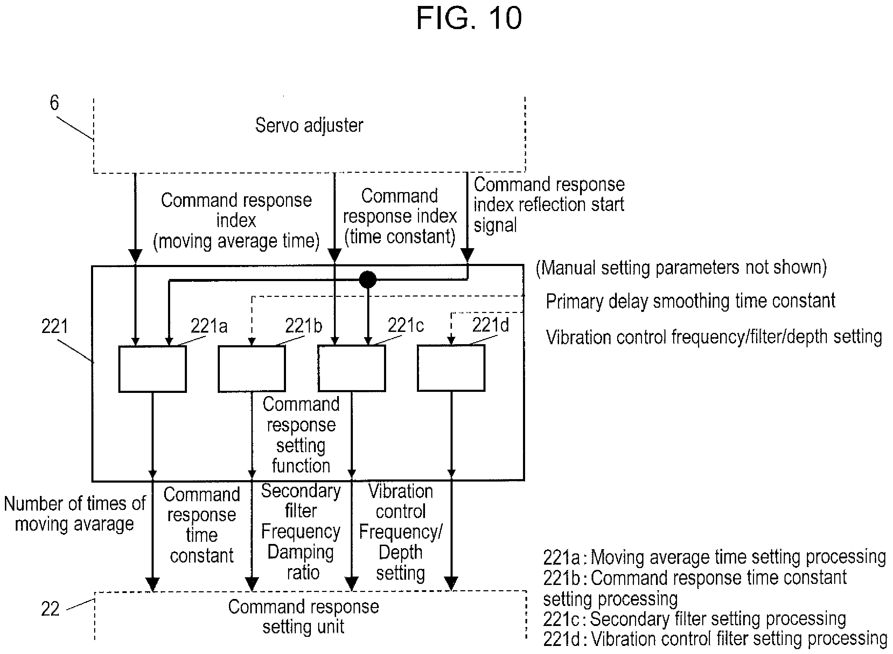

As shown in FIG. 10, to command response setting function 221 are input a moving average time and a time constant as a command response index, and a command response index reflection start signal that starts reflection of the command response index on command response setting unit 22 from servo adjuster 6. Command response setting function 221 performs processing for designating a condition of filter processing of command response setting unit 22, and the like, based on the input information and signal.

Command response setting function 221 includes moving average time setting processing 221a, command response time constant setting processing 221b, secondary filter setting processing 221c, and vibration control filter setting processing 221d.

When this command response index reflection start signal is on, moving average time setting processing 221a divides the moving average time by an arithmetic operation period of moving average filter 22a inside command response setting unit 22 to thereby output a number of times of moving average. Moreover, secondary filter setting processing 221c sets the frequency of the secondary filter, for example, to a value obtained by dividing a reciprocal of the time constant of the command response index by 2π with the damping ratio of the secondary filter fixed to 1. Command response time constant setting processing 221b sets the command response time constant of primary delay filter 22b having the step response characteristic of the command response time constant. Vibration control filter setting processing 221d sets the depth of the vibration control frequency of vibration control filter 22d defined by the vibration control frequency and the depth. All of these may not be calculated inside command response setting function 221, and may be set from a primary delay smoothing time constant or the setting of the vibration control frequency/depth, which are manual setting parameters not shown.

Moreover, as the command response index, for example, there are a single value of a command response cutoff frequency or the like, a form of instructing the whole frequency characteristics such as a primary delay and secondary delay filter time constants and the damping ratio and the like, a form of instructing transient characteristics including a rise time, and a delay time, an overshooting amount and the like. The command response index may be set in these various combinations, and the filter characteristic of command response setting unit 22 may be automatically set so that an input/output relation of whole command response setting unit 22 coincides with the command response index as much as possible.

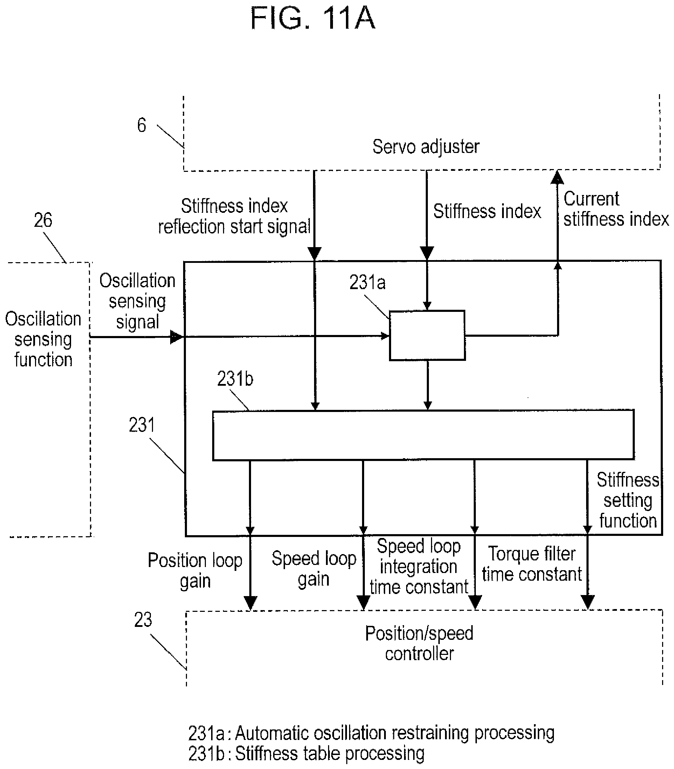

As shown in FIG. 11A, to stiffness setting function 231 is input the stiffness indexes from servo adjuster 6, and stiffness setting function 231 outputs a parameter set to position/speed controller 23 with reference to a stiffness table.

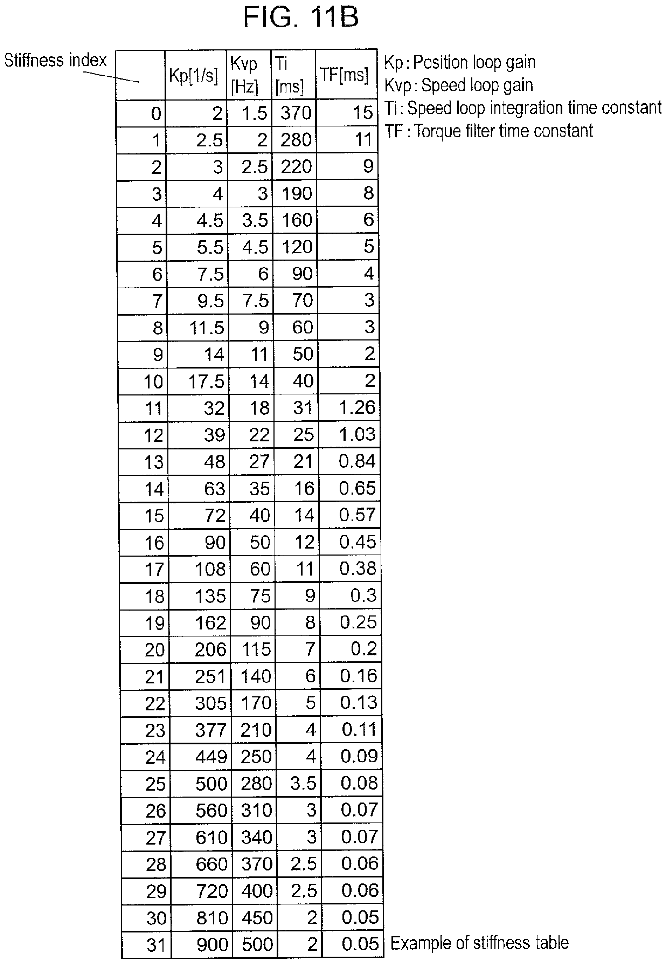

Stiffness setting function 231 includes automatic oscillation restraining processing 231a and stiffness table processing 231b. Normally, automatic oscillation restraining processing 231a outputs the stiffness index from servo adjuster 6 to stiffness table processing 231b as it is. When a stiffness index reflection start signal from servo adjuster 6 is on, stiffness table processing 231b outputs the parameter set to position/speed controller 23 with reference to the stiffness table. The stiffness table in this case takes values at 32 levels of 0 to 31, and as the value of the stiffness index is larger, a disturbance suppression characteristic of position/speed controller 23 becomes higher. FIG. 11B shows one example of the stiffness table. Stiffness table processing 231b outputs the above-described parameter set of a position loop gain, a speed loop gain, a speed integration time constant, and a torque filter time constant.

Moreover, when an oscillation sensing signal input from oscillation sensing function 26 described later is turned on, automatic oscillation restraining processing 231a automatically selects the stiffness index high in stability until the oscillation stops in place of the stiffness index from servo adjuster 6. Since a denominator of the disturbance suppression characteristic of position/speed controller 23 directly links to stability of the feedback control, in this example, setting the stiffness index to a lower value can decrease the whole gain and increase stability. At the time of oscillation sensing, the command response index may be advantageously decreased in accordance with the decrease in the stiffness index.

Since the parameter set of position/speed controller 23 is changed at the same time that the stiffness index decreases, the oscillation is suppressed after a predetermined time, and the oscillation sensing signal is turned off. However, there is a possibility that when the stiffness index is returned to the original value, the oscillation reoccurs. Thus, automatic oscillation restraining processing 231a outputs the current stiffness index to servo adjuster 6 so that the stiffness index can be lowered for recovery after oscillation sensing on the side of servo adjuster 6.

As the stiffness index, there are an index regarding the whole frequency response from a disturbance torque to the motor speed, and an index regarding stationary characteristics such as a speed fluctuation rate and a jitter. As with these indexes, generally, the stiffness index relating to the disturbance suppression characteristic may be input, and the parameter set of position/speed controller 23 may be automatically set so that an input/output relation of position/speed controller 23 coincides with the stiffness index as much as possible.

Moreover, in the present exemplary embodiment, a description of the constitution example has been given, in which the stiffness table by which the internal parameters are uniquely decided from the stiffness index is used as in the constitution in FIG. 11A. However, it can be considered that for development from the stiffness index to the parameter set of position/speed controller 23, only a relation between a certain internal parameter and the stiffness index is defined, and the other internal parameters are calculated from ratios among the internal parameters. Furthermore, various automatic setting methods can be considered, such as inputting not only the stiffness index but the setting of load characteristic compensator 24 and the setting of resonance restrainer 25 to decide the internal parameters from a calculation expression including a plurality of parameters, and the like.

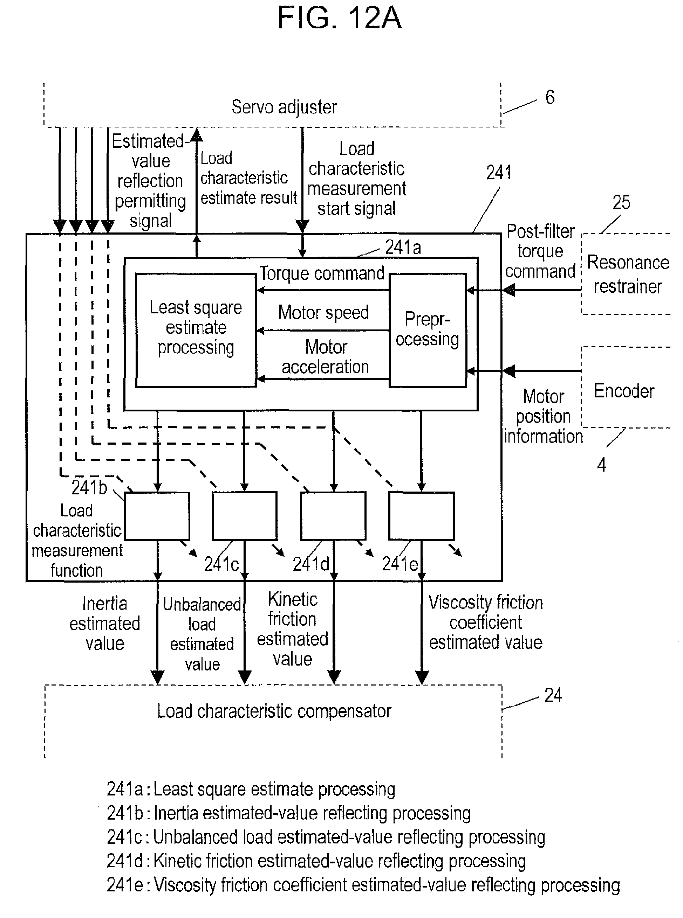

As shown in FIG. 12A, load characteristic measurement function 241 is roughly divided into least square estimate processing 241a, which is load characteristic measurement processing itself, and other processing for automatically setting load characteristic compensator 24 in accordance with the measurement result.

Least square estimate processing 241a performs preprocessing from the torque command after filter from resonance restrainer 25 and the motor position information from encoder 4 to calculate the smoothed torque command, the motor speed from the difference from the motor position information, and further, the motor acceleration, based on the difference. Least square estimate processing 241a performs least square estimate processing so that the difference between the above-described information of actual operation and an output of a load model becomes minimum to output the inertia estimated value, the unbalanced load estimated value, the kinetic friction estimated value, and the viscosity friction coefficient estimated value.

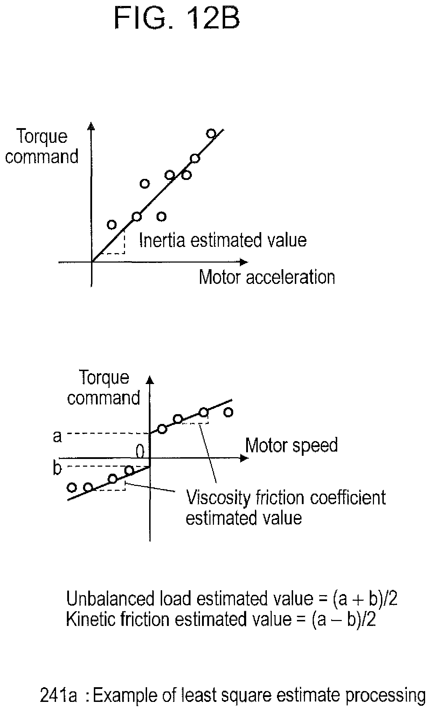

Qualitatively, as shown in FIG. 12B, from a scatter diagram of the motor acceleration and the torque command, or the motor speed and the torque command, least square estimate processing 241a draws an approximation straight line on which a summation of squares of distances from respective points is minimum, and derives an estimated value from an inclination and an intercept. For example, an inertia ratio is an inclination of an approximation straight line of the motor acceleration and the torque command, as shown in an upper diagram of FIG. 12. Similarly, the viscosity friction coefficient estimated value is obtained from an inclination of an approximation straight line of the motor speed and the torque command, as shown in a lower diagram of FIG. 12. For the unbalanced load estimated value and the kinetic friction estimated value, approximation straight lines of the motor speed and the torque command are calculated when the motor speed is positive and when the motor speed is negative, and based on intercepts a, b of the respective approximation straight lines, the unbalanced load estimated value can be calculated from an average value of intercepts a, b, and the kinetic friction estimated value can be calculated from 1/2 of a difference between intercepts a and b.

For reflection of the estimated values as outputs of least square estimate processing 241a on load characteristic compensator 24, an individual estimated-value reflection permitting signal is given from servo adjuster 6 for each of the estimated values. For example, when only the inertia estimated value is desired to be updated, only the reflection permission signal to inertia estimated value reflecting processing 241b is turned on, and the others are turned off. When the friction estimated values are desired to be updated, the reflection permission signals to unbalanced load estimated-value reflecting processing 241c, kinetic friction estimated-value reflecting processing 241d, and viscosity friction coefficient estimated-value reflecting processing 241e corresponding to the three estimated values other than the inertia estimate are turned on.

When the estimated-value reflection permitting signal is turned on, the estimated value is normally output to load characteristic compensator 24 as it is, while the estimated value may be corrected at a predetermined ratio or with an offset value. When the estimated-value reflection permitting signal is turned off, it can be considered that the current setting of load characteristic compensator 24 is maintained, that the setting is subjected to 0 clearing, or is preset with a shipping setting value or a default value, or the like. The load characteristic measurement processing and the reflection of the estimated values are performed in real time, by which at the time of initial adjustment when what load 5 is connected is unknown, or even when moderate change due to secular change occurs, correction in accordance with load 5 is constantly updated. This brings about an effect of increasing adaptive robustness, which allows the same responsiveness designated with the command response index and the stiffness index to be constantly obtained, on whatever device the present device is mounted.

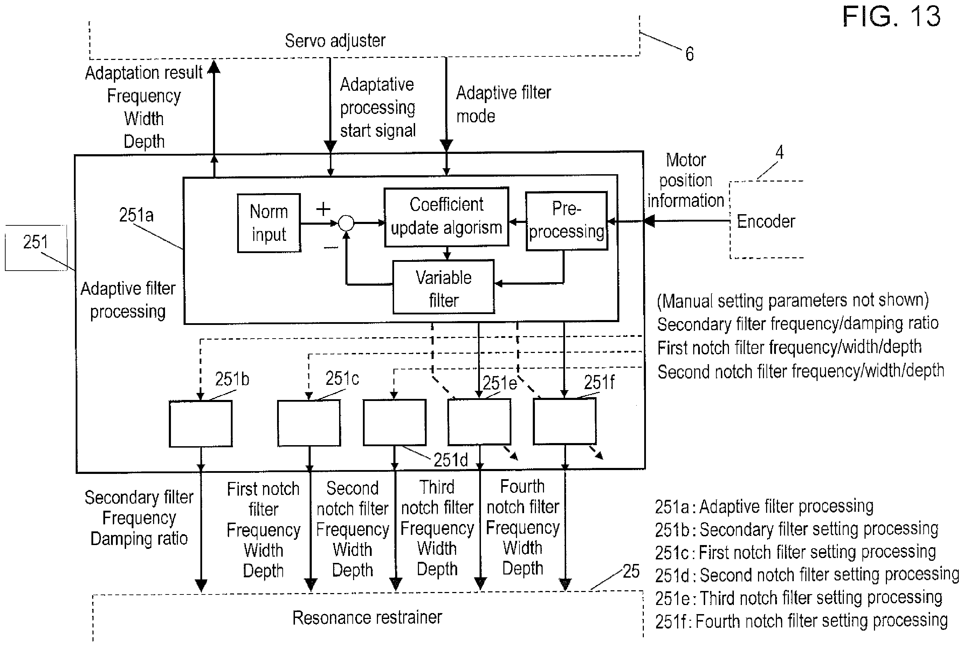

As shown in FIG. 13, an adaptive processing start signal from servo adjuster 6 is input to adaptive filter function 251, and adaptive filter function 251 sets the respective filters of resonance restrainer 25 so as to restrain the resonance vibration.

Adaptive filter function 251 includes adaptive filter processing 251a, secondary filter setting processing 251b, and first to fourth notch filter setting processings 251c, 251d, 251e, 251f.

To adaptive filter processing 251a is input the motor position information from encoder 4 when the adaptive processing start signal from servo adjuster 6 is turned on. Preprocessing such as difference processing for speed conversion, bandpass filter processing for extracting a fluctuation component is applied to the motor position information to output a result to a variable filter and coefficient update algorism. The variable filter has a similar characteristic to that of the notch filters of resonance restrainer 25, and an output of the variable filter results from attenuating a specific frequency band. The frequency characteristic of the variable filter is automatically adjusted by the coefficient update algorism in accordance with an adaptive filter mode designated by servo adjuster 6 so that a difference from a norm input becomes 0. Moreover, third notch filter setting processing 251e and fourth notch filter setting processing 251f apply the frequency characteristic of this variable filter to frequencies/widths/depths of the third notch filter and the fourth notch filter, respectively. Furthermore, in the adaptive filter mode designated by servo adjuster 6, timing and conversion methods of third notch filter setting processing 251e and fourth notch filter setting processing 251f can also be designated.

While in this example, the automatic adjustment of the two notch filters is performed, first notch filter setting processing 251c and second notch filter setting processing 251d may be controlled to perform the automatic adjustment for all the four notch filters. Moreover, obviously, by changing the frequency characteristic of the variable filter to control secondary filter setting processing 251b, the characteristic of the secondary filter can also be automatically adjusted. In the example, manual setting parameters not shown allows the three filter characteristics not automatically adjusted to be changed.

Furthermore, adaptive filter processing 251a outputs adaptation results including the frequency/width/depth of the variable filter to servo adjuster 6. Thereby, the resonance characteristic of motor 3 and load 5, which has been sensed with the current stiffness index, can be known.

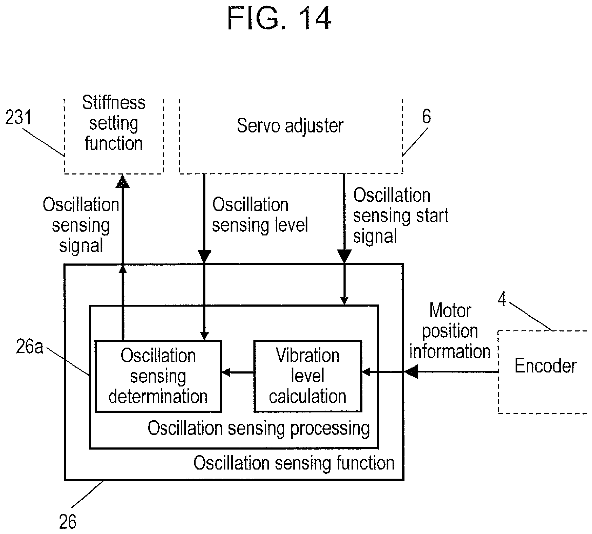

As shown in FIG. 14, in oscillation sensing function 26, when an oscillation sensing start signal from servo adjuster 6 is turned on, the motor position information from encoder 4 is input to oscillation sensing processing 26a, and oscillation sensing function 26 starts processing for sensing the oscillation.

Oscillation sensing function 26 extracts a motor fluctuation as in the adaptive filter to calculate a vibration level and detect an oscillation state of motor 3 and load 5, based on comparison with an oscillation sensing level designated by servo adjuster 6. When the oscillation is sensed, the oscillation sensing signal is turned on and transmitted to foregoing stiffness setting function 231 to cause stiffness setting function 231 to select the stiffness index in a direction where the oscillation is suppressed. The oscillation sensing may use any information, as long as it is an index regarding the vibration. For example, the oscillation may be sensed, based on the torque command, the position command, a disturbance torque estimated value, load position information, audio information by a microphone or the like, acceleration information of motor 3 or load 5 by an acceleration sensor, torque/pressure information by a load cell or the like, and so on.

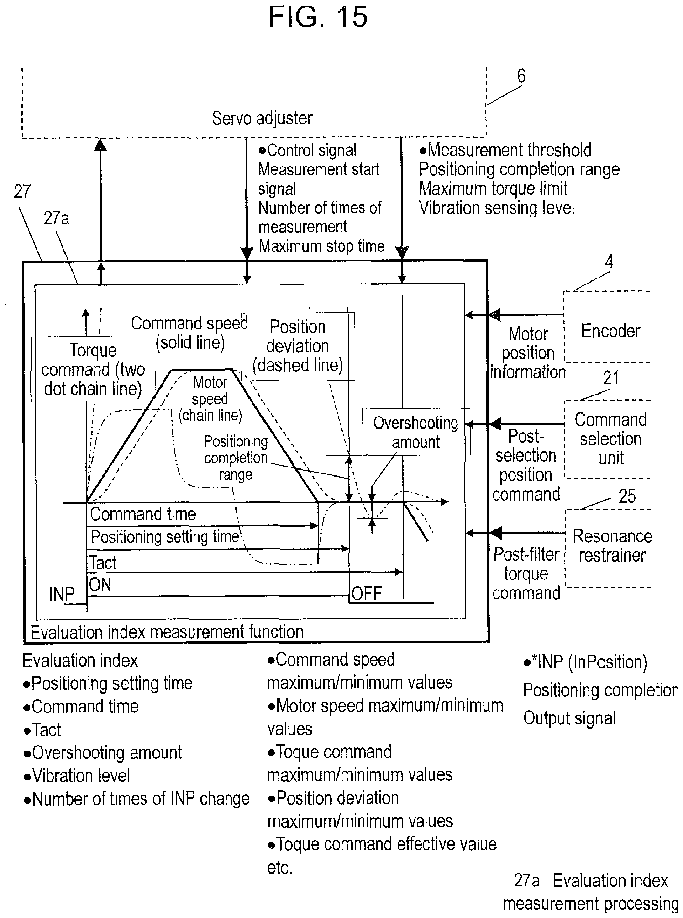

Finally, as shown in FIG. 15, in evaluation index measurement function 27, the motor position information is input from encoder 4, the post-selection position command is input from command selection unit 21, and the post-filter torque command is input from resonance restrainer 25. In addition, in evaluation index measurement function 27, measurement thresholds such as the positioning completion range and a maximum torque limit, a vibration sensing level and the like from servo adjuster 6 are input, and evaluation index measurement function 27 outputs various types of evaluation indexes to servo adjuster 6 in accordance with the measurement start signal and control signals including a number of times of measurement, a maximum stop time and the like.

While the evaluation indexes themselves and calculation methods therefor are highly diversified, for example, a list of item examples, which are the evaluation indexes such as a positioning setting time and the like, is shown in FIG. 15. As shown in FIG. 15, as the evaluation indexes, the positioning setting time, a command time and the like are exemplified. Moreover, the calculation methods for these evaluation indexes will be described below with reference to FIG. 15.

With regards to the calculation method of the positioning setting time, the measurement can be performed for a time until a deviation (position deviation) between the post-selection position command and the motor position information from encoder 4 becomes within the positioning completion range from servo adjuster 6 after the post-selection position command from command selection unit 21 stops.

The command time can be defined as a time when the position command changes after the selection from command selection unit 21, and a tact can be defined as a period until the post-selection position command changes next after the post-selection position command first changes and stops. Moreover, the tact may be limited to maximum stop time elapse from servo adjuster 6 after the post-selection position command stops.

An overshooting amount can be defined as that in a direction opposite to a direction of the position command after selection of maximum and minimum position deviations in the tact.

For the vibration level, there are several calculation methods, and as with the adaptive filter function in adaptive filter function 251 and oscillation sensing function 26, the method of extracting the vibration component, based on the motor position information from encoder 4, and the method of extracting the vibration component of the specific frequency band from the torque command after filter from resonance restrainer 25 can be considered. Comparison with the vibration sensing level from servo adjuster 6 enables vibration detection in step 3.

A positioning completion output signal (INP) is common as a signal that is turned on when the above-described position deviation enters the positioning completion range, and is turned off outside the range, and a number of times of INP signal change in the tact can be used as an index of positioning setting. The number of times of the INP change may be limited to the number of times after the position command stops.

The command speed and the motor speed can be calculated from a difference between the post-selection position command from command selection unit 21, and the motor position information from encoder 4. The torque command is the post-filter torque command from resonance restrainer 25, and the position deviation is the deviation between the above-described post-selection position command and the motor position information from encoder 4. Setting maximum/minimum values of these in the tact as the evaluation indexes allows a large portion of operation in the tact to be grasped. For the torque command, an effective value is found from a square multiplication square root in the tact, and this is a very useful evaluation index for capacity selection or the like in a motor or a motor drive device. The indexes regarding to the torque can be useful for decision of a highest acceleration pattern in step 2 by comparison with the maximum torque limit from servo adjuster 6.

It is an important aspect of evaluation index measurement function 27 to subject a huge amount of motor control information that can be acquired in real time to data compression by predetermined algorism into the fewer, more meaningful evaluation indexes.

FIG. 1 shows a flowchart of a servo adjustment step of the present exemplary embodiment with respect to the basic functional elements for driving and controlling the motor described in FIG. 2 and the automatic adjustment functions, which have been described in the foregoing. In this example, it is premised that the following servo adjustment step is installed inside servo adjuster 6 in FIG. 2.

The servo adjustment step of the present exemplary embodiment has a constitution including any of the following five steps.

Step 1 is initial setting, which is executed before steps 2 to 5. In step 1, the information of a control object is input, and selection of an initial condition and validity/invalidity of the functions for the adjustment steps of step 2 and later are performed.

In step 2, load characteristic measurement is performed. Step 2 is executed before steps 3 to 5 to set the various types of functions, then operate the trial run function in an operation pattern in which the least square estimate of the load characteristic measurement appropriately works, and obtain an optimal estimate result. Moreover, the operation pattern in the trial run operation is given to the adjustment steps of step 3 and later.

Step 3 is a step for adjusting the stiffness setting function, and is executed before steps 4 and 5. In step 3, the stiffness index is raised while utilizing the adaptive filter function to search for the highest stiffness as an upper limit of the stiffness index. Moreover, the resonance restrainer setting corresponding to stiffness index change in step 4 and later is supplied.

Step 4 is a step in which the command response is measured. Step 4 is executed before step 5, and in step 4, search patterns obtained by combining the stiffness indexes and the command response indexes are generated, based on the highest stiffness in step 3, and the evaluation indexes are measured and stored in the evaluation index measurement function.

Step 5 is finally executed, in which a combination of the stiffness index and the command response index is extracted from the evaluation indexes in step 4, based on several recommendation conditions representing the characteristics desired by a user, so that the combination is presented. Moreover, after the selection, a step is provided in which fine adjustment and trial run are repeated, and then, the combination is stored in the motor drive device as a final adjustment result.

Particularly, in the present exemplary embodiment, through steps 2 to 4, the load characteristic measurement function is first operated in first step 2, and the load characteristic compensator is set, based on the measurement result. In this manner, since the load characteristic is compensated first, a trial run operation pattern necessary in the measurement in step 2 and later is automatically decided in a state where influence of the load, which largely changes depending on a use condition, is restrained, and thereby, the precise measurement results of the respective characteristics can be obtained.

Furthermore, in next step 3, the initial setting necessary for deciding a maximum value of the stiffness index is made, and in addition, the trial run operation in cooperation with step 2 is performed. Thereby, the stiffness index maximum value can be decided, and setting of the resonance restrainer corresponding to the stiffness index can be stored. In next step 4, from the maximum stiffness designated in step 3, the search patterns in which the plurality of stiffness indexes and the plurality of command response indexes are combined are decided, and for every combination for the search pattern, the evaluation indexes are measured and stored. In the present exemplary embodiment, since the servo adjustment is performed in order of steps 2 to 4 in this manner, the adjustment can be made as a flow in which the respective steps cooperate with one another, even a worker not having detailed knowledge of the servo adjustment can obtain a proper adjustment result only by executing the respective steps in order.

Moreover, through steps 2 to 4, in a period when the trial run operation is valid, oscillation sensing function 26 is validated, and the stiffness index is lowered against the oscillation sensing due to contingency to enable continuation of the servo adjustment. Moreover, similarly, evaluation index measurement function 27 has a function of measuring and storing the evaluation indexes for all the operations.

When the servo adjustment step normally operates, the adjustment result by the same servo adjustment step can be indicated by the same evaluation index. Thereby, the servo adjustment having strong dependency on individual skills is excluded, and even the worker not having the knowledge of the servo adjustment can obtain the adjustment result with high accuracy. Moreover, since report output in the same format is enabled, report of the adjustment result and fine adjustment at the time of maintenance become very easy. Also, measurement recording of the evaluation indexes can be utilized for analysis when abnormality occurs in the servo adjustment step. Furthermore, it can be considered to be effective that the evaluation index recording is periodically performed to be used for analysis of secular change, life time prediction and the like from change of the indexes.

As described above, the motor drive device of the present exemplary embodiment includes any of the five basic functions of motor control of command selection unit 21, command response setting unit 22, position/speed controller 23, load characteristic compensator 24, and resonance restrainer 25. Furthermore, the present motor drive device includes any of the seven automatic adjustment functions of trial run function 211, command response setting function 221, stiffness setting function 231, load characteristic measurement function 241, adaptive filter function 251, oscillation sensing function 26, and evaluation index measurement function 27. The servo adjustment method of the present exemplary embodiment includes any of five steps of step 1 in which the initial setting is performed, step 2 in which the load characteristic measurement and the command pattern decision are performed, step 3 in which the stiffness index maximum value is decided, and the setting of the resonance restrainer corresponding to the stiffness index is stored, step 4 in which the stiffness indexes and the command response indexes are combined, and the evaluation indexes at the time of designated operation are stored, and step 5 in which the final adjustment result is obtained from the evaluation indexes in accordance with the search condition.

Since the present first exemplary embodiment is constituted as described above, in the respective steps of the servo adjustment, even the worker not having detailed knowledge of the servo adjustment can obtain the proper adjustment result only by executing the five steps in order.

### SECOND EXEMPLARY EMBODIMENT

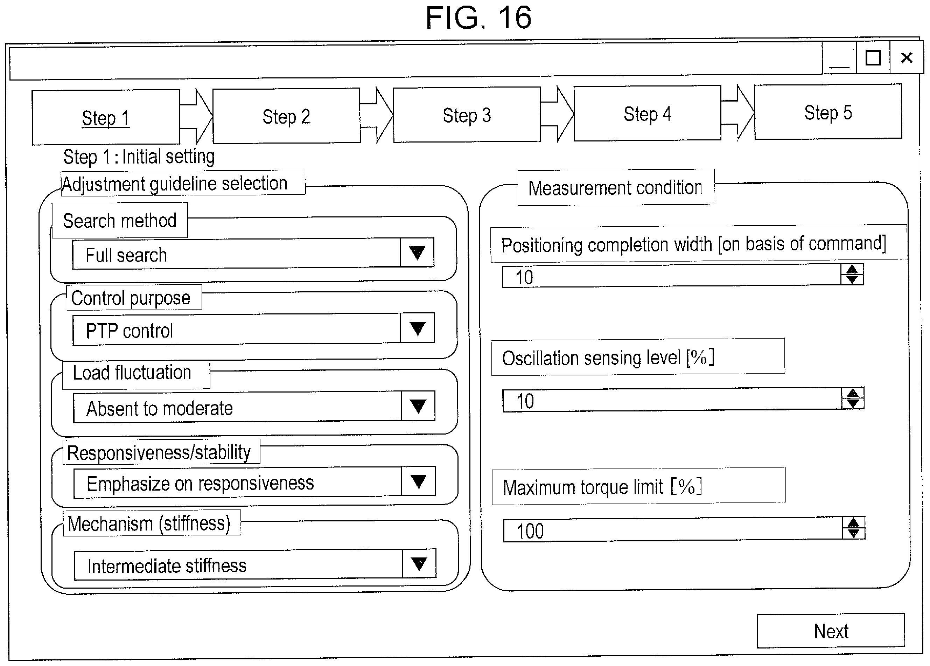

FIG. 16 is a diagram showing an operation screen of servo adjustment step 1 in a second exemplary embodiment.

As shown in FIG. 16, the operation screen in step 1 is divided into an adjustment guideline setting block on a left half side and a measurement condition setting block on a right half side. For adjustment guideline selection, information regarding a search method, a control purpose, presence/absence of load fluctuation, which of responsiveness and stability an object device emphasizes on, what mechanism the object device has, and so on can be selected in combo boxes. Moreover, as the measurement condition, a positioning completion width, the oscillation sensing level, the maximum torque limit can be input in edit boxes as numerical values.

When a series of initial setting is completed, a "Next" button in a lower right portion is pressed to thereby advance the processing to step 2. The current step is displayed in an upper portion, and a progress of the servo adjustment step can be checked.

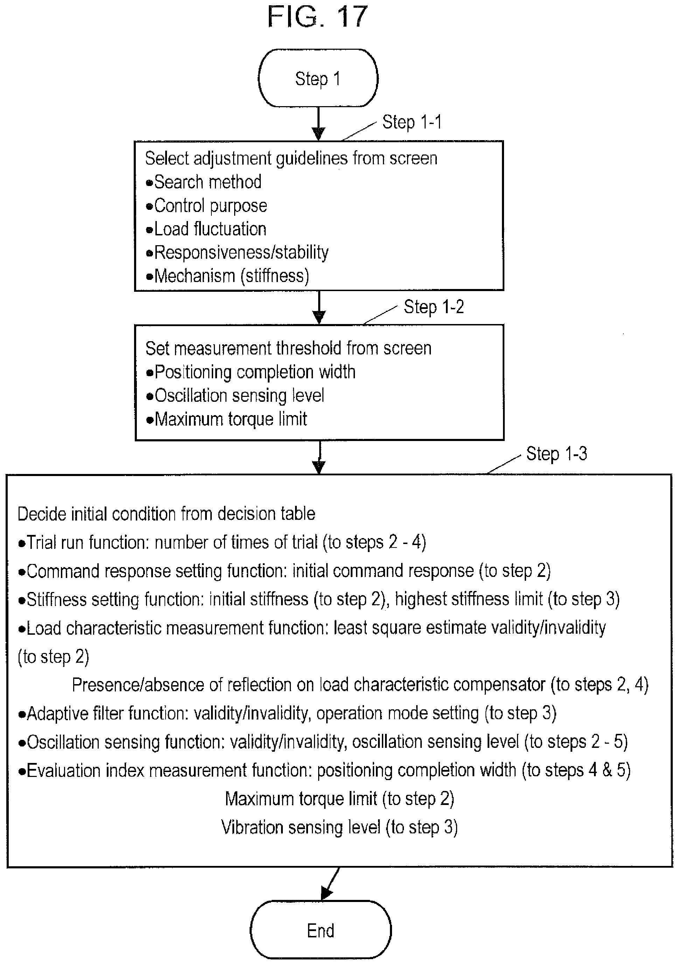

FIG. 17 is a flowchart showing a procedure of step 1 of the servo adjustment in the present exemplary embodiment.

Step 1-1 is executed before step 1-3 to select various types of adjustment guidelines, using the adjustment guideline setting block on the above-described operation screen. An example of items of the combo boxes is cited in a decision table described later. A different adjustment guideline may be generated inside from the plurality of adjustment guidelines.

Step 1-2 is executed before step 1-3 to set various types of measurement thresholds, using the measurement condition setting block on the above-described operation screen. Scaling such as predetermined unit conversion and sign inversion, and offset processing such as addition of a default value may be performed between the measurement condition on the screen and the measurement thresholds. Moreover, in steps 1-1 and 1-2, setting may be made in random order in accordance with the operation screen.

In step 1-3, the initial condition necessary in subsequent steps is decided, based on the setting from the above-described operation screen. As the initial condition set in this case, the following items are cited. That is, there can be cited a number of times of trial in the trial run function used in steps 2 to 4, an initial command response of the command response setting function, and an initial stiffness of the stiffness setting function used in step 2, validity/invalidity of the least square estimate function of load characteristic measurement function used in step 2, and presence/absence of reflection of the load characteristic measurement result on the load characteristic compensator used in step 4. Also, validity/invalidity and setting of an operation mode of the adaptive filter function used in step 3, validity/invalidity and the oscillation sensing level of the oscillation sensing function used in steps 2 to 5, the positioning completion range and the maximum torque limit of the evaluation index measurement function used in steps 2, 4, 5, and so on are set. These are set, based on an initial condition decision table described later at timing when the "Next" button indicating transition to step 2 as the next step is pressed.

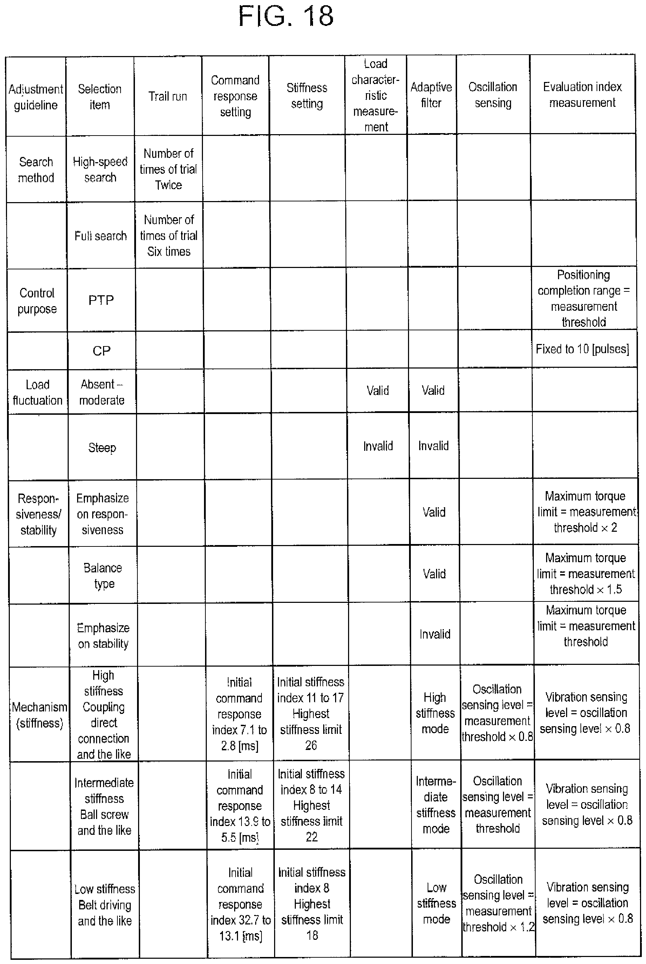

FIG. 18 shows the initial condition decision table in step 1-3 in the second exemplary embodiment.

In the search method, there are two items of high-speed search and full search, and when the high-speed search is selected, the number of times of trial of trial run function 211 becomes smaller than that in full search, thereby enabling higher-speed search.

In the control purpose, there are two items of PTP control and CP control. In the case of PTP control, since the positioning setting time is generally a target, the measurement threshold is set to the positioning completion range of evaluation index measurement function 27 as it is. In the case of CP control, since the index of the positioning setting time is not required, the positioning completion range may be a fixed value.

In the load fluctuation, there are two items of "absent to moderate" and "steep". In the case where the load fluctuation is steep, load characteristic measurement function 241 and adaptive filter function 251 are invalidated. As to these functions, it is premised that the load fluctuation and the resonance characteristic do not change, or that the change is moderate. Thus, provision of this item allows a phenomenon that the measurement result and the adaptation result become unstable to be avoided.

As items of the responsiveness/stability, there are three items of "emphasize on responsiveness", "balance type", and "emphasize on stability". These decide the validity/invalidity of adaptive filter function 251 and the maximum torque limit of evaluation index measurement function 27. When resonance restrainer 25 is properly set by adaptive filter function 251, the highest stiffness, which is the maximum value of the stiffness index, can be made high, and the disturbance suppression characteristic is enhanced. However, since because of the foregoing, the stability is lowered in view of robustness, these have a trade-off relation. Moreover, in the case of "emphasize on responsiveness", in many cases, operation is performed in the operation pattern as close to the characteristics of the motor as possible. Thus, setting an operation pattern in gain adjustment step to high acceleration and deceleration makes better matching with a result at the time of actual operation. While the validity/invalidity of the adaptive filter is designated in both the adjustment guidelines of the load fluctuation and responsiveness/stability, a rule is beforehand decided, for example, so that the invalidity side is given priority, if these are inconsistent.

For items of the mechanism (stiffness), there are three stages of high stiffness (coupling direct connection or the like), intermediate stiffness (ball screws or the like), and low stiffness (belt driving or the like). These decide an initial command response index of command response setting function 221 and an initial stiffness index of stiffness setting function 231. As the stiffness assumed from the mechanism is higher, the measurement time can be made shorter by initially setting the higher command response index and stiffness index. Moreover, as the stiffness assumed from the mechanism is lower, the oscillation sensing in the trial run operation in step 2 can be avoided more by initially setting the lower command response index and stiffness index. Similarly, changing the highest stiffness limit in the mechanism can reduce the oscillation sensing in the stiffness measurement in step 3. Moreover, by changing operation mode setting of adaptive filter function 251 in accordance with the mechanism (stiffness), operation stabilization of adaptive filter function 251 by pre-information is achieved. That is, for example, in the high stiffness, the operation stabilization of adaptive filter function 251 is achieved in a high stiffness mode in which a notch width is small, and a notch depth is large, in the low stiffness, it is achieved in a low stiffness mode in which the notch width is large, and the notch depth is small, and in the intermediate stiffness, it is achieved in an intermediate stiffness mode having an intermediate characteristic of both, and so on. Furthermore, in accordance with the mechanism (stiffness), the oscillation sensing level of oscillation sensing function 26 is decided. The setting in the measurement condition is multiplied by a multiplier in accordance with the mechanism (stiffness), or the measurement thresholds provided in the table are set, by which oscillation sensing accuracy can be increased. The vibration sensing level used in step 3 is normally to end the stiffness search before the oscillation sensing, and is set so as to take a value smaller than that of the oscillation sensing level. In this example, the oscillation sensing level is multiplied by a constant less than 1 to calculate the vibration sensing level.

The order of steps 1-1, 1-2, and 1-3 may be replaced except that the order is particularly designated. For example, it does not matter which of step 1-1 and step 1-2 is first carried out.

As described above, step 1 of the servo adjustment method of the present exemplary embodiment is constituted to set any initial condition of the number of times of trial of the trial run function, the initial command response index of the command response setting function, the initial stiffness index and the highest stiffness limit of the stiffness setting function, the validity/invalidity of the least square estimate and the validity/invalidity of the load characteristic compensator reflection of the load characteristic measurement function, the validity/invalidity and the operation mode setting of the adaptive filter function, the validity/invalidity and the oscillation sensing level of the oscillation sensing function, and the positioning completion range, the maximum torque limit, and the vibration sensing level of the evaluation index measurement function.

Furthermore, step 1 of the present exemplary embodiment is constituted so that the qualitative adjustment guidelines such as the search method, the control purpose, the load fluctuation, the index of responsiveness/stability, the mechanism/stiffness of the load to be controlled, and the quantitative measurement thresholds such as the positioning completion range, the oscillation sensing level, and the maximum torque limit are input to output the above-described initial condition from the combination of these.

As described above, according to the present exemplary embodiment, in step 1 of the servo adjustment, the initial setting of each of the automatic adjustment functions used in the servo adjustment, and the validity/invalidity thereof can be performed by condition setting easy for the user to understand.

### THIRD EXEMPLARY EMBODIMENT

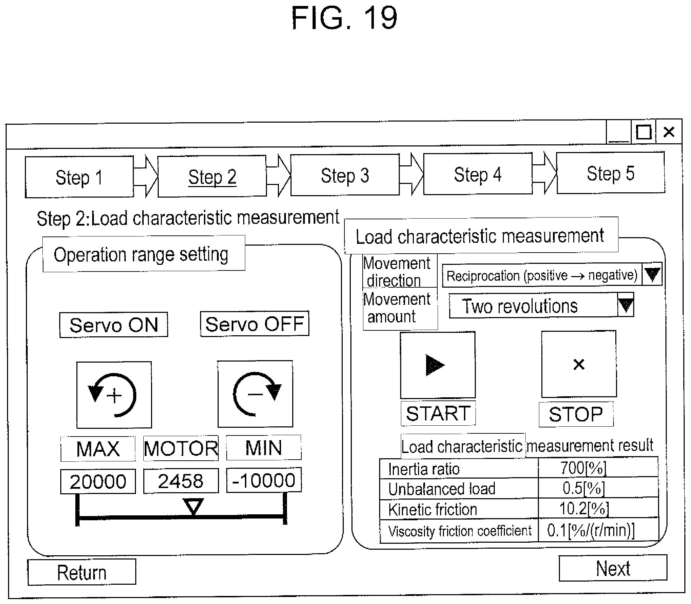

FIG. 19 is a diagram showing an operation screen of step 2 of the servo adjustment in a third exemplary embodiment.

In FIG. 19, a left half side is an operation range setting block for setting a range of operation by the trial run function. Motor energization is controlled with Servo ON and Servo OFF buttons, and the motor is moved in positive and negative directions with positive-direction and negative-direction operation buttons with + and - marks, respectively to set a range operable in the servo adjustment step in step 2 and later. Moreover, a monitor unit indicating a current position on a command base, and the like are provided.

Moreover, a right half side is a load characteristic measurement block for measuring the characteristic of the load. The block has combo boxes to set a movement direction/a movement amount, and START and STOP buttons to start and stop the measurement of the load characteristic. The measurement result of the load characteristic is displayed in a list of the inertia ratio, the unbalanced load, the kinetic friction, and the viscosity friction coefficient in a lower right portion of the figure, so that the load characteristic measurement result can be usefully seen in real time.

If the load characteristic measurement has been completed, and the measurement result is satisfactory, then a "Next" button in the lower right portion is pressed to advance the processing to step 3. If the result is not satisfactory at this point, the start button can be pressed again to perform remeasurement, or a "Return" button in a lower left portion can also be pressed to discard the measurement result and return to step 1.

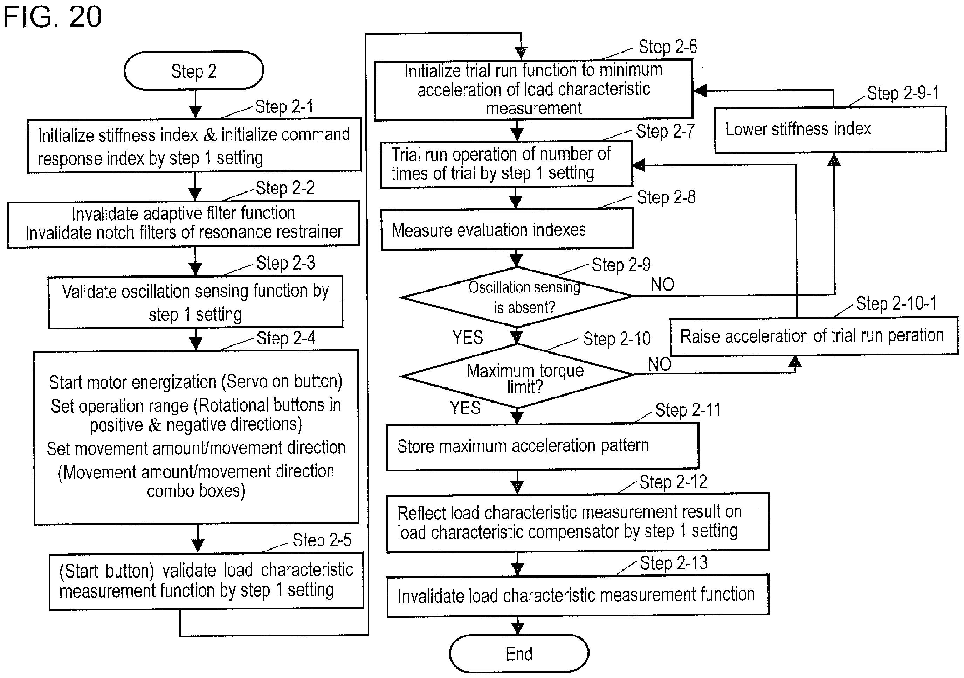

FIG. 20 is a flowchart showing a procedure of step 2 of the servo adjustment in the present exemplary embodiment.

Step 2-1 is executed before the trial run operation in step 2-4, in which the initial command response index set in step 1 is set in command response setting function 221, and the initial stiffness index is set in stiffness setting function 231, by which the stiffness index and the command response index are initialized. This step brings about effects of shortening the measurement time and avoiding the oscillation at the time of trial run operation.

Step 2-2 is executed before the trial run operation in step 2-4, in which in order to invalidate adaptive filter function 251, the adaptive processing start signal is turned off, and the setting is initialized so that all the notch filters of the resonance restrainer are invalidated (the input signal is made a through-signal). This step can assure the execution of the load characteristic measurement with the low stiffness index that can be driven without any notch filter. This can bring about an effect that the load characteristic measurement result is hard to be affected by the resonance characteristic of motor 3 and load 5, and the adaptation result of the adaptive filter function 251.

Step 2-3 is executed before the trial run operation in step 2-4, in which the oscillation sensing level set in step 1 is set in oscillation sensing function 26, and the oscillation sensing start signal is turned on to validate the oscillation sensing processing. For example, even if a situation occurs in which the setting of the mechanism (stiffness) is mistaken in step 1, and the trial run operation starts with the initial command response index and the initial stiffness index higher than those assumed with respect to actual load 5, the automatic oscillation restraining processing in cooperation with stiffness setting function 231 can automatically lower the stiffness setting to continue the servo adjustment step. When the stiffness setting is lowered, it is also effective to automatically lower the initial stiffness setting on the side of servo adjuster 6, and smoothly perform recovery after the oscillation stops.

Step 2-4 is executed before the trial run operation in step 2-7, in which the motor energization starts through the control signal to trial run function 211 by the Servo ON/Servo OFF button in the operation range setting block on the operation screen, and the motor is actually operated by the positive-direction/negative-direction operation buttons to thereby set the operable range in the servo adjustment. After the setting of the operable range, the motor is moved to an operation start position, and the movement direction and the movement amount are selected so that the motor operates within the operation range. It is better to set this operable range as wide as possible because this range is also valid in performing the command reselection in step 4. Moreover, if the operation range is sufficiently wide, the trial run operation may be repeatedly activated while changing the operation start position in the same movement amount and in the same movement direction.

Step 2-5 is executed before the trial run operation in step 2-7, in which at timing when the START button is pressed, the load characteristic measurement start signal is turned on to validate load characteristic measurement function 241. In step 1, when there is a reason why the load characteristic measurement is invalidated, such as in the case where the "steep" is selected as the load fluctuation of the adjustment guideline, the load characteristic measurement start signal may remain off. In this case, step 2 is carried out only for setting the highest acceleration pattern.

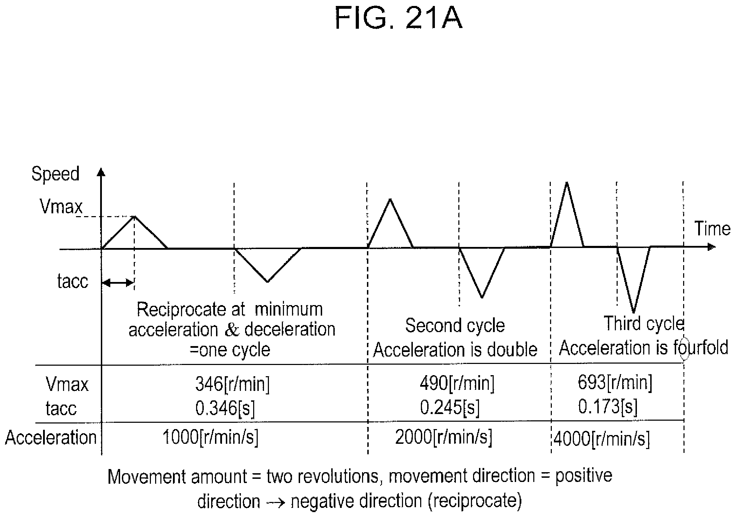

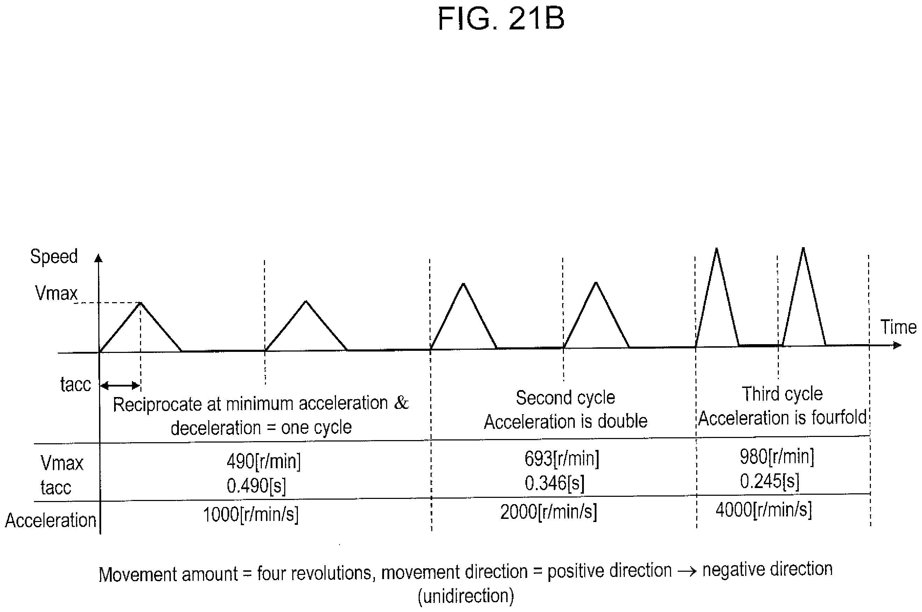

Step 2-6 is executed before the trial run operation in step 2-7, in which trial run function 211 is initialized to the trial run operation pattern satisfying a minimum acceleration of constraint conditions (speed/acceleration/ operation time and the like) that allow load characteristic measurement function 241 to operate at the minimum. In steps 2-6 and 2-7, an example in which the operation pattern of trial run function 211 is set from the operation acceleration and the movement amount will be described in detail with reference to FIGS. 21A and 21B. Starting the operation at the minimum acceleration enables the proper load characteristic measurement result to be obtained from the beginning, and the measurement time to be minimized.

In step 2-7, the trial run operation start signal is sent to trial run function 211 the number of times of trial set in step 1 in the current operation pattern (movement amount/highest speed/acceleration and deceleration time) to perform the trial run operation the number of times of trial. If load characteristic measurement function 241 is validated in step 2-5, this operation brings about the load characteristic measurement result. Since the load characteristic measurement result can be obtained on the base of acceleration setting, all the results may be advantageously stored.

In step 2-8, every time the trial run operation in step 2-7 ends, the evaluation index measurement by evaluation index measurement function 27 is performed. For the maximum torque determination in step 2-10, at least one of the evaluation indexes regarding the torque command such as the torque command maximum and minimum values and a torque command effective value needs to be measured.

In step 2-9, during the trial run operation in step 2-7, whether or not the oscillation is sensed by oscillation sensing function 26 activated in step 2-3 is checked. Since when the oscillation is sensed, the oscillation sensing signal is sent to stiffness setting function 231, the operation of lowering the stiffness index in step 2-9-1 is automatically performed to avoid an oscillation state. However, in this case, there is a possibility that the load characteristic measurement result in step 2-7 and the evaluation index regarding the torque command in step 2-8 take abnormal values in the oscillation state. This shifts the processing to step 2-6, in which the remeasurement is performed from the minimum acceleration of the load characteristic measurement with the lower, more stable initial stiffness index.

In step 2-10, it is determined whether or not the measured evaluation index regarding the torque command exceeds the maximum torque limit designated in step 1 as a result of step 2-8. Basically, load characteristic measurement function 241 can obtain more accurate result as the operation acceleration is higher. Thus, if the evaluation indexes are the maximum torque limit or lower in step 2-10, the acceleration of the trial run operation is increased in step 2-10-1 to reset the operation pattern in trial run function 211, and again perform the trial run operation the number of times of trial from step 2-7. This can bring about the accurate load characteristic measurement result by the plurality of acceleration settings.

In step 2-11, when the index regarding the torque command exceeds the maximum torque limit in step 2-10, the current movement amount, the highest speed, the acceleration and deceleration time are stored as the highest acceleration pattern of trial run function 211 used in step 3 and later. This can bring about the operation pattern enabling driving within the maximum torque limit in accordance with the load characteristic of load 5.

In step 2-12, when the index regarding the torque command in step 2-10 exceeds the maximum torque limit, the estimated-value reflection permitting signal is operated in accordance with the presence and absence of the reflection of the load characteristic measurement result on the load characteristic compensator designated in step 1 to set a part or all of the load characteristic measurement result in load characteristic compensator 24. Since the inertia estimated value largely affects stability of a control system, it is better to set the inertia estimated value in the result measured last in step 2. Since the unbalanced load estimated value, the kinetic friction estimated value, and the viscosity friction estimated value, being affected by the command pattern and the command response measurement condition as well, are reset in step 4. Accordingly, the setting thereof here is not essential.

Finally, in step 2-13, if load characteristic measurement function 241 has been validated in step 2-5, the load characteristic measurement start signal is turned off to invalidate load characteristic measurement function 241 after step 2-12 ends. In a condition of the high command response index and stiffness index by step 3, vibration by the resonance characteristic or the like may be caused. Moreover, there is a possibility that in command reselection in step 4, the operation pattern not suitable for the load characteristic measurement is selected. In either case, the load characteristic measurement result is unstable, by which the accuracy tends to be deteriorated. Thus, it is important to invalidate load characteristic measurement function 241 in step 2-13.

In the respective steps in step 2, the order may be replaced except that the order is particularly designated. For example, it does not matter which of steps 2-1 to 2-3 is first carried out as long as they are performed before the trial run operation starts. Also, there are no problems with replacement of the order of step 2-11 and step 2-12.

FIGS. 21A and 21B are operation pattern diagrams in step 2 of the servo adjustment in the present exemplary embodiment.

Here, two examples are cited; a reciprocating operation pattern in which the movement amount is two revolutions, and the movement direction is a positive direction → a negative direction as in FIG. 21A, and a unidirectional operation pattern in which the movement amount is four revolutions, and the movement direction is the positive direction → the positive direction as in FIG. 21B with the minimum acceleration necessary for the measurement of load characteristic measurement function 241 set to 1000 [r/min/s].

In the case of driving in the speed triangular wave pattern, there are only two degrees of freedoms of parameter setting. Thus, from the current acceleration and the movement amount designated in step 2-4, calculation can be conducted, using the acceleration and deceleration time = √(the movement amount/the acceleration), and the highest speed = the acceleration × the acceleration and deceleration time, so that the operation pattern of trial run function 211 is uniquely decided.

In the case of the reciprocating operation pattern in FIG. 21A, from the minimum acceleration 1000 [r/min/s] and the movement amount 2 (revolutions), the acceleration and deceleration time = 0.346 [s], and the highest speed = 346 [r/min] are decided. Because of the order of the positive direction → the negative direction, changing the highest speed in the order of positive to negative produces the reciprocating operation. When the acceleration UP in step 2-10-1 is doubled, in a second cycle, the acceleration and deceleration time becomes 0.245 [s] and the highest speed becomes 490 [r/min] from the acceleration = 2000 [r/min/s]. In a third cycle, the acceleration and deceleration time becomes 0.173 [s] and the highest speed becomes 693 [r/min] from the acceleration = 4000 [r/min/s]. As the acceleration becomes higher, the highest speed becomes higher, and in exchange, the acceleration and deceleration time becomes shorter. When the highest speed exceeds the maximum measurement that can be allowed by motor 3 and load 5, the measurement may be ended. Moreover, if an operation time required for the measurement in load characteristic measurement function 241 cannot be assured, it is also better to end the measurement.

In the case of the unidirectional operation pattern in FIG. 21B, since the movement amount is four [revolutions], the acceleration and deceleration time and the highest speed are different even in the same acceleration setting. Moreover, since the command direction is unidirectional, that is, the positive direction → the positive direction, the highest speed is constantly in the positive direction. In this manner, many of the cases where the operation pattern in which the motor continues to operate unidirectionally is selected each have a mechanism in which the motor can infinitely continue to be driven unidirectionally, and thus, the operation range setting may be enabled to be ignored.

As described above, in step 2 of the servo adjustment method of the present exemplary embodiment, the load characteristic measurement function is operated in accordance with the validity/invalidity setting of the load characteristic measurement function designated in step 1, and the motor is operated the number of times of trial designated in step 1 within the set operation range in the trial run function. Present step 2 is constituted so that the load characteristic compensator is set from the load characteristic measurement result measured while changing the operation acceleration, and the load characteristic measurement function is finally invalidated.

Moreover, present step 2 includes a constitution in which before the trial run function is validated, the initial stiffness index is set in the stiffness setting function, and the initial command response index is set in the command response setting function, the initial stiffness index and the initial command response index being designated in step 1.

Present step 2 includes a constitution in which before the trial run function is validated, the adaptive filter function and the notch filters of the resonant restrainer are unconditionally invalidated.

Moreover, in present step 2, before the trial run function is validated, the oscillation sensing function is validated at the oscillation sensing level designated in step 1, and if the oscillation is sensed during the trial run operation, this is notified to the stiffness setting function. Present step 2 includes a constitution in which the stiffness index is lowered to restrain the oscillation, and the load characteristic measurement is performed again from the beginning.

In present step 2, the trial run operation starts at the minimum acceleration that the load characteristic measurement function can apply, and measures the evaluation indexes while raising the acceleration. Present step 2 includes a constitution in which the load characteristic measurement result at the point when the evaluation index regarding the torque command reaches the maximum torque limit designated in step 1 is set in the load characteristic compensator in step 3 and the later.

Furthermore, in present step 2, the trial run operation starts at the maximum acceleration that the load characteristic measurement function can apply, and measures the evaluation index while raising the acceleration. Present step 2 includes a constitution in which the highest acceleration pattern at the point when the evaluation index regarding the torque command reaches the maximum torque limit designated in step 1 is set as the operation pattern of the trial run function in step 3.

In this manner, in the present third exemplary embodiment, in step 2 of the servo adjustment, the initial setting necessary for the load characteristic measurement is made in cooperation with step 1, and the highest acceleration pattern of the trial run function necessary for the subsequent steps can be automatically decided to obtain the precise load characteristic measurement result.

### FOURTH EXEMPLARY EMBODIMENT

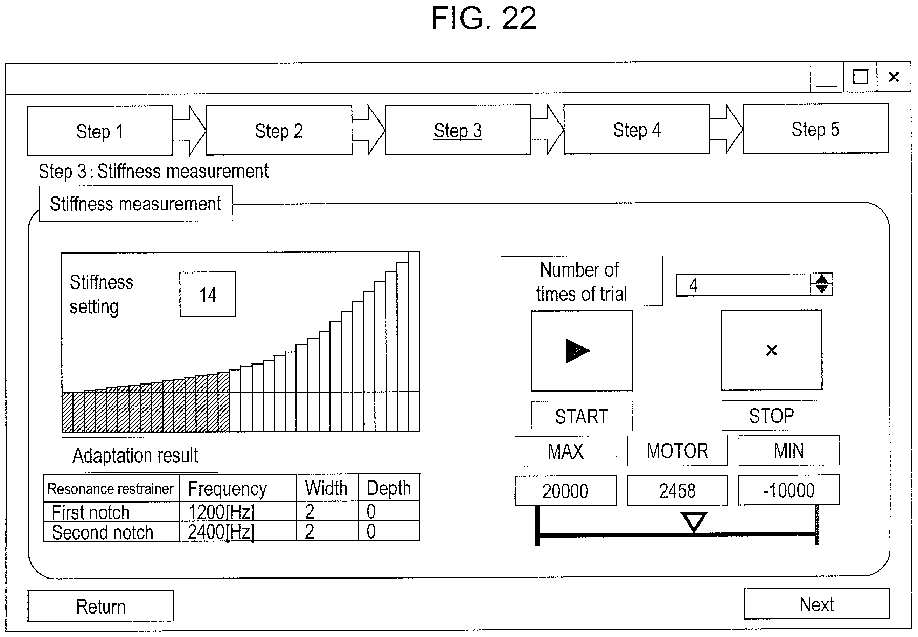

FIG. 22 is a diagram showing an operation screen of servo adjustment step 3 in a fourth exemplary embodiment.

As shown in FIG. 22, on this screen, there is only a stiffness measurement block, and only a start/temporary stop (START) button of operation of searching for the highest stiffness, an emergency stop (STOP) button, and the number of times of trial on the basis of the stiffness index in step 3 can be operated from the screen. Others are current stiffness index display that servo adjuster 6 can obtain from stiffness setting function 231, bar graph representation of the current stiffness index display, the adaptation result of adaptive filter function 251, and the current internal command position displayed in the operation range, which is returned by trial run function 211, and these do not affect the motor operation.

When the stiffness measurement is completed, and the measurement result is satisfactory, pressing a "Next" button in a lower right portion can advance the processing to step 4. If the result is not satisfactory at this point, the START button is repressed to conduct the measurement, or a "Return" button in a lower left portion can be pressed to discard the measurement result and return to step 2.

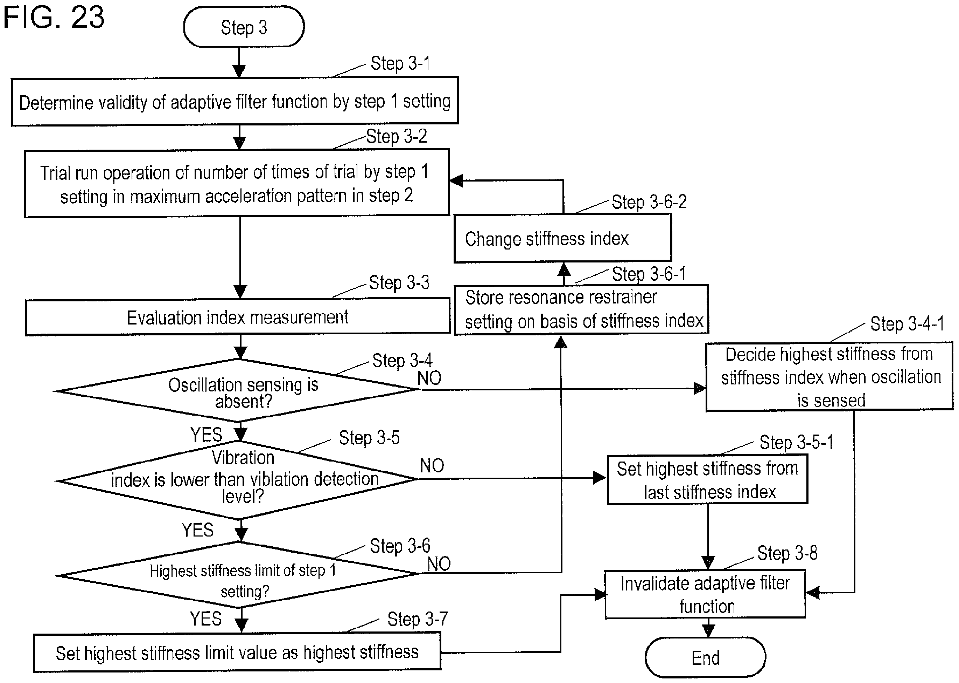

FIG. 23 is a flowchart showing a procedure of step 3 of the servo adjustment in the present exemplary embodiment.

In step 3-1, if before the search for the highest stiffness starts in step 3-2, adaptive filter function 251 is validated by the designation in step 1, the adaptive filter mode is set from servo adjuster 6, and the adaptive processing start signal is turned on. In the case of the device in which the resonance characteristic of motor 3 and load 5 is stable, validating adaptive filter function 251 can raise the highest stiffness, thereby increasing a possibility of obtaining more favorable adjustment result. In the case where the resonance characteristic is unstable, the device is used with adaptive filter function 251 remaining invalid, by which influence by the fluctuation of the resonance characteristic can be minimized.

In step 3-2, the trial run operation in the highest acceleration pattern decided in step 2 is performed the number of times of trial designated in step 1 with the current stiffness index. If adaptive filter function 251 is validated in step 3-1 at this time, the adaptive filter processing works, so that the notch filter setting of resonance restrainer 25 may be changed during the operation in accordance with the adaptive filter mode. In this case, since there is a possibility that the evaluation index regarding the vibration in step 3-3 changes, the trial run operation in step 3-2 may be advantageously performed again from the beginning.

In step 3-3, every time the trial run operation in step 3-2 ends, the evaluation index regarding the vibration is measured by evaluation index measurement function 27. Here, for determination in step 3-5, at least one of the evaluation indexes regarding the vibration needs to be measured. The vibration level described in evaluation index measurement function 27 in FIG. 15 can be used for this purpose. Moreover, in some measurement conditions, a number of times of INP change can be set as the evaluation index regarding the vibration.

In step 3-4, it is checked whether or not oscillation sensing function 26 activated in step 2 and later has sensed the oscillation during the trial run operation in step 3-2. Since when the oscillation is sensed, the oscillation sensing signal is sent to stiffness setting function 231, the operation of lowering the stiffness index is automatically performed to avoid the oscillation state. In this case, the processing immediately shifts to step 3-4-1, in which the low stiffness index resulting from taking a predetermined margin from the stiffness index at the time of oscillation sensing is set as the highest stiffness to end the search, and the processing shifts to step 3-8.

In step 3-5, as a result of step 3-3, it is determined whether or not the measured evaluation index regarding the vibration exceeds the vibration detection level designated in step 1. Since normally, oscillation sensing function 26 works when considerably large vibration occurs, terminating the stiffness search at the vibration level lower than the foregoing allows the servo adjustment to be continued with more security. Thus, when the evaluation index regarding the vibration exceeds the vibration detection level in step 3-5, the processing immediately shifts to step 3-5-1, and the search is ended with a value immediately before the current stiffness index set as the highest stiffness to shift the processing to step 3-8.

In step 3-6, if the trial run operation in step 3-2 ends without the oscillation sensing in step 3-3 and the vibration detection in step 3-4, it is determined whether or not the current stiffness index reaches the highest stiffness limit designated in step 1. This highest stiffness limit value, which depends on only the mechanism (stiffness) of the adjustment guideline in the second exemplary embodiment, may be based on a capacity of used motor 3, a capacity of motor drive device 2, the measurement result of load characteristic measurement function 241 in step 2, and the adaptation result of adaptive filter function 251.

If the current stiffness index does not reach the highest stiffness limit in step 3-6, current setting of resonance restrainer 25 is stored in a storage area not shown in association with the current stiffness index in step 3-6-1. If adaptive filter function 251 is activated in step 3-1, the setting of resonance restrainer 25 may differ on a stiffness basis. This recording is utilized in step 4 described later.

Step 3-6-2 is executed after step 3-6-1, in which the one-level upper stiffness index is set in stiffness setting function 231, and the trial run operation is again executed in step 3-2. Raising the stiffness index step by step allows a loop in steps 3-2 to 3-6 to end by any determination in steps 3-4 to 3-6 after a finite number of times.

Step 3-7 is executed when the highest stiffness limit is reached in step 3-6, in which the current stiffness index, that is, the highest stiffness limit is set as the highest stiffness to end the search, and the processing shifts to step 3-8.

Finally, step 3-8 is executed at the end of step 3, in which if adaptive filter function 251 is validated in step 3-1, the adaptive processing start signal is turned off from servo adjuster 6 to thereby invalidate adaptive filter function 251. The setting of resonance restrainer 25 at this time is normally the last adaptation result. However, if the stiffness index is different from the highest stiffness, such as if the oscillation is sensed in step 3-4, if the vibration is detected in step 3-5, and if the stiffness index is lowered in preparation for the execution in step 4, resonance restrainer 25 needs to be set to the resonance restrainer setting corresponding to the stiffness index stored in step 3-6-1.

The order of the respective steps in step 3 may be replaced except that the order is particularly designated. For example, step 3-4 and step 3-5 can be replaced.

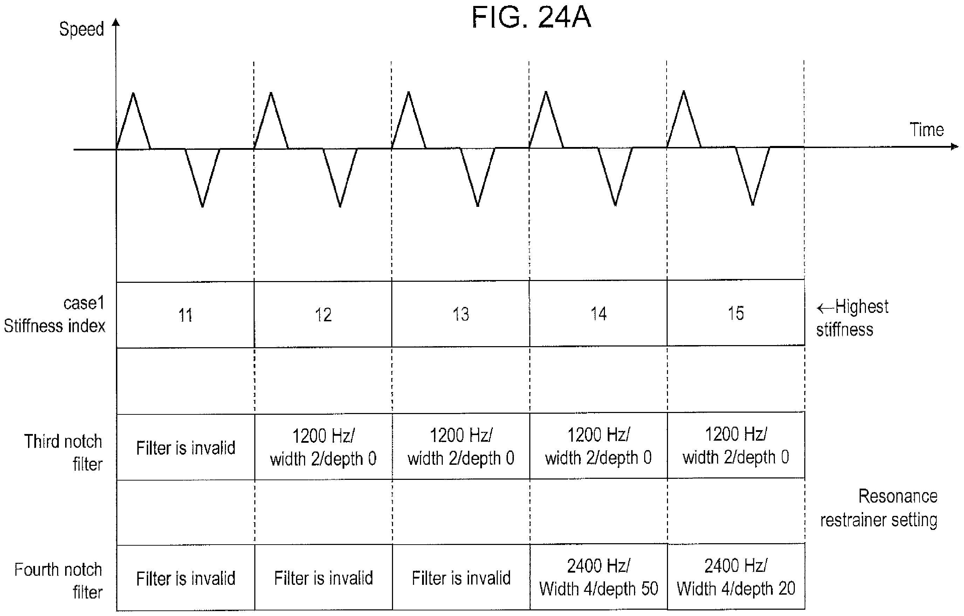

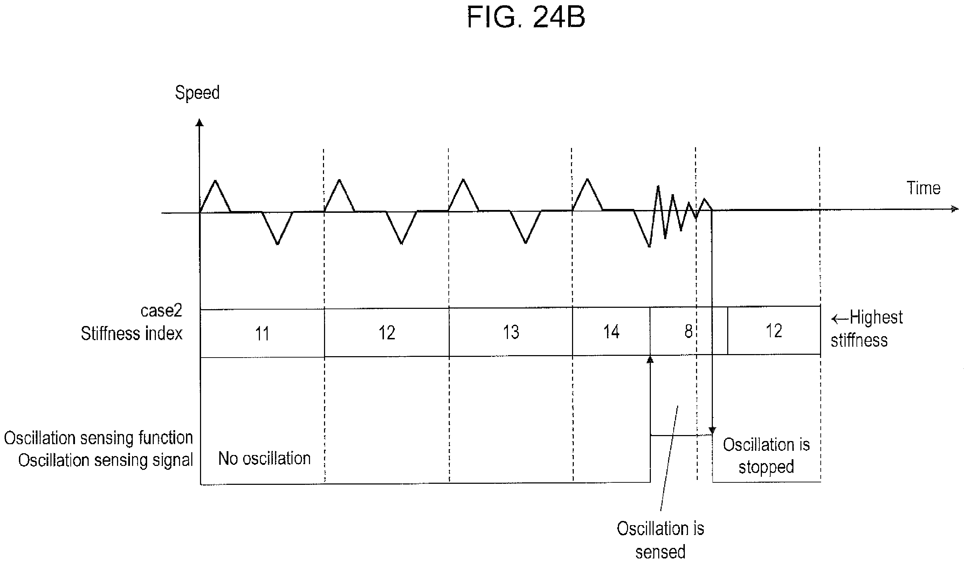

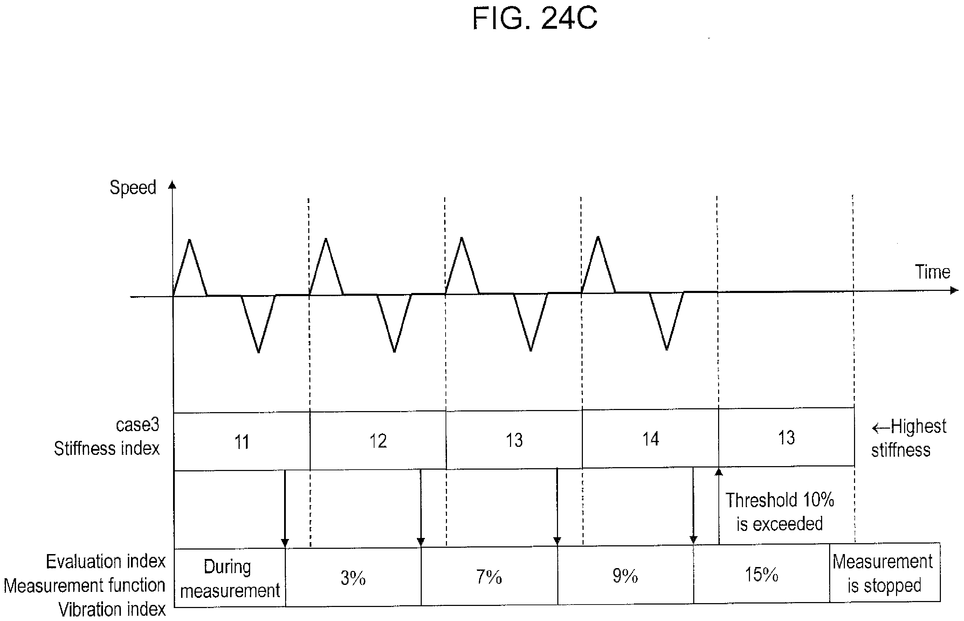

FIGS. 24A, 24B and 24C are operation pattern diagrams in step 3 of the servo adjustment in the present exemplary embodiment.

Here, case 1 where the highest stiffness limit is reached in step 3-6, case 2 where the oscillation is sensed in step 3-4, and case 3 where the vibration detection level is exceeded in step 3-5 are shown in the operation pattern diagrams in FIGS. 24A, 24B, and 24C, respectively.

In case 1 of FIG. 24A, in step 3-2, the trial run operation in the highest acceleration pattern decided in step 2 starts at stiffness index 11 in step 2. Since the oscillation is not sensed in step 3-4, and the vibration detection level is not exceeded in step 3-5, the stiffness index is raised one by one every two trials in step 3-6-2 until the highest stiffness limit is reached in step 3-6. Meanwhile, adaptive filter function 251 is valid, and the setting of the third notch filter and the fourth notch filter of resonance restrainer 25 change every time the stiffness index is raised. This setting of resonance restrainer 25 is stored together with the current stiffness index as a pair in step 3-6-1. When the trial run operation of the number of times of trial is completed at highest stiffness limit 15, the determination in step 3-6 becomes YES, the highest stiffness is set to 15 in step 3-7, and step 3 ends.

In case 2 of FIG. 24B, while no change in the setting of resonance restrainer 25 in case 1 is described, similar operation is performed. In this case, before the highest stiffness limit is reached in step 3-6, oscillation sensing function 26 senses the oscillation in step 3-4, to turn on the oscillation sensing signal at the point the second operation starts at stiffness index 14. FIG. 24B shows that the stiffness index is decreased to 8 to stop the oscillation in cooperation with stiffness setting function 231, which has received the oscillation sensing signal. In this case, the processing shifts to step 3-4-1 after the oscillation stops, in which the highest stiffness is set to stiffness 12 resulting from subtracting two levels as a margin from stiffness index 14 at the time of oscillation sensing, and step 3 ends. At this time, setting of frequency 1200 Hz, width 2, and depth 0 may be simultaneously made to the third notch filter as the setting to resonance restrainer 25 corresponding to stiffness 12.

As in case 3 of FIG. 24C, the change in the setting of resonance restrainer 25 is recorded. In this case, since the evaluation index regarding the vibration is measured in evaluation index measurement function 27, and at a point when the trial run operation of stiffness index 14 before the highest stiffness limit is reached in step 3-6 is completed, the index regarding the vibration in step 3-5 exceeds the vibration detection level, the highest stiffness is set to last stiffness index 13 in step 3-5-1, and step 3 ends. As in case 2, the setting of resonance restrainer 25 corresponding to stiffness index 13 may also be simultaneously made.

As described above, in step 3 of the servo adjustment method of the present exemplary embodiment, the trial run operation of the number of times of trial designated in step 1 is performed in the highest acceleration pattern in step 2. Present step 3 is constituted so that the stiffness index is raised until the highest stiffness index designated in step 1 is reached, and when the stiffness index reaches the highest stiffness limit designated in step 1, the highest stiffness is decided, based on this.

Moreover, present step 3 includes a constitution in which before the trial run operation starts, the validation/invalidation setting of the adaptive filter function designated in step 1 is made, and the adaptive filter function is invalidated after the highest stiffness is decided.

Moreover, present step 3 includes a constitution in which the setting value of the resonance restrainer immediately before the stiffness index is raised is stored in association with the current stiffness setting.

Moreover, present step 3 includes a constitution in which if the oscillation is sensed during the trial run operation, the highest stiffness is decided, based on the stiffness index when the oscillation is sensed.

Also, present step 3 includes a constitution in which if the evaluation index regarding the vibration has exceeded the vibration sensing level designated in step 1 during the trial run operation, the highest stiffness is decided, based on the last stiffness index.

In this manner, in the present fourth exemplary embodiment, in step 3 of the servo adjustment, the initial setting necessary for the highest stiffness decision is made in cooperation with step 1 to perform the trial run operation in cooperation with step 2, so that the highest stiffness can be decided, and the setting of the resonance restrainer corresponding the stiffness index can be stored.

### FIFTH EXEMPLARY EMBODIMENT

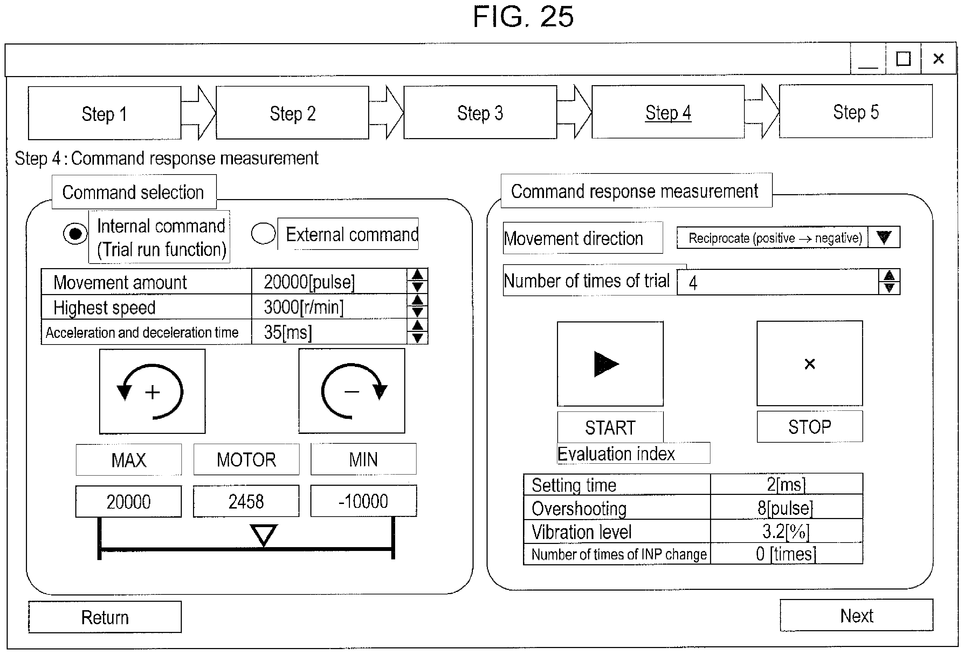

FIG. 25 is a diagram showing an operation screen of servo adjustment step 4 in a fifth exemplary embodiment.

In FIG. 25, a left half side is a command selection block, including radio buttons for selecting operation in the internal position command by trial run function 211, which is the same as the operation until step 3, and operation in accordance with the external position command.

Here, if the external position command is selected, trial run function 211 is invalidated to switch the command selection signal to command selection unit 21 to a side of the external position command. Moreover, if the internal position command is selected, the current trial run function is continued. While as default, the setting of the highest acceleration pattern decided in step 2 is displayed in the movement amount, the highest speed, and the acceleration and deceleration time on the screen, in step 4, the trial run setting can be changed in accordance with the operation pattern that the user desires to the device.

Moreover, in order to designate an activation position within the operation range set in step 2, the motor can also be moved with movement buttons in the positive and negative directions.

A right half side is a command response measurement block to control the command response measurement with the selected position command. A measurement/temporary stop button (START) is pressed after the movement direction and the number of times of trial for each search pattern in step 4 are designated to thereby start the command response measurement. Every time the trial run operation ends, the positioning setting time, the overshooting amount, the vibration level, and the number of times of INP change, which are the evaluation indexes measured in evaluation index measurement function 27, are displayed on the screen in real time.

If the command response measurement is completed and the measurement result is satisfactory, pressing a "Next" button in a lower right portion can advance the processing to step 5. If the result is not satisfactory at this point, the start button is pressed again to perform the measurement or pressing a "Return" button in a lower left portion can discard the measurement result to return to step 3.

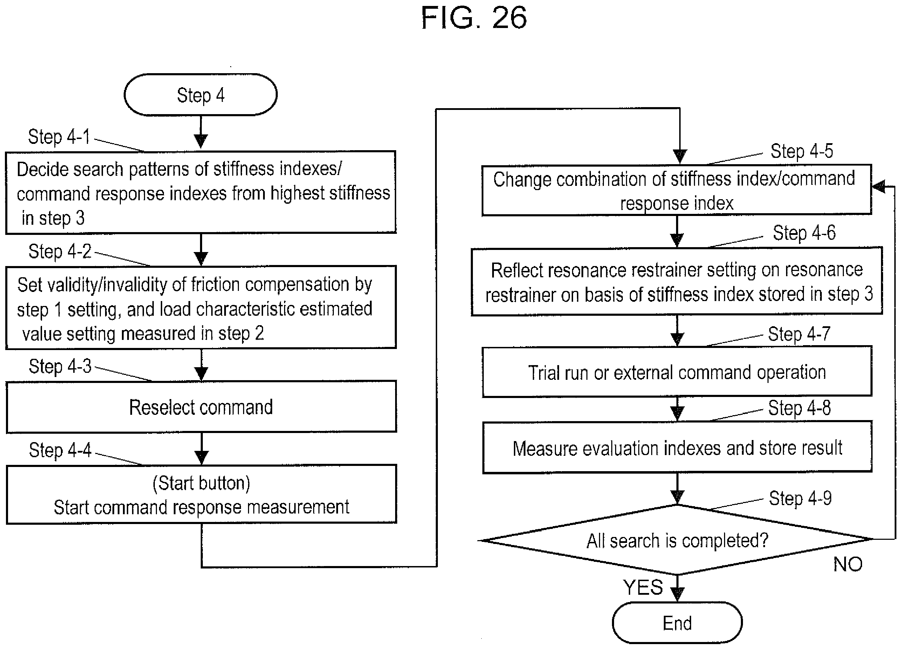

FIG. 26 is a flowchart showing a procedure of step 4 of the servo adjustment in the present exemplary embodiment.

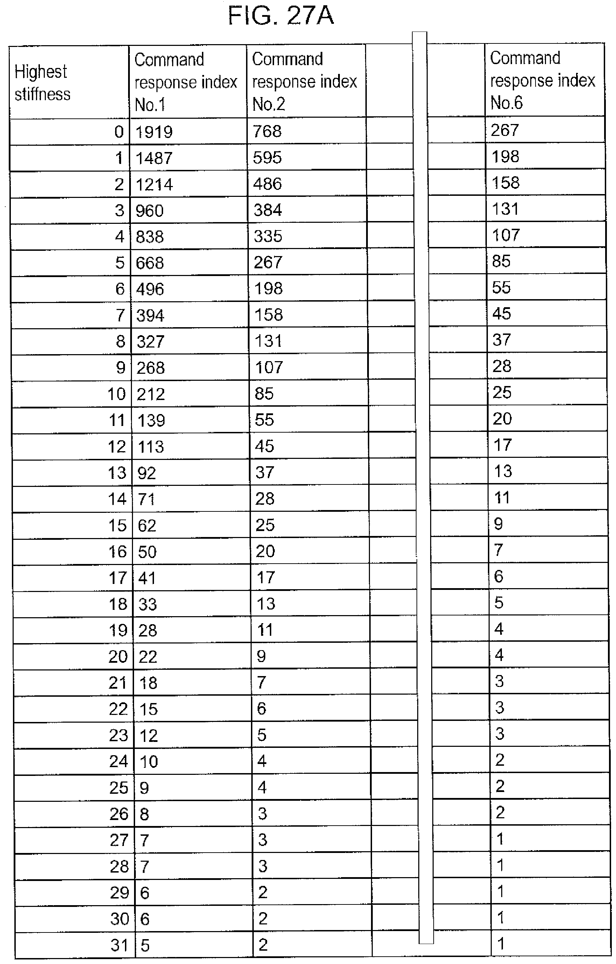

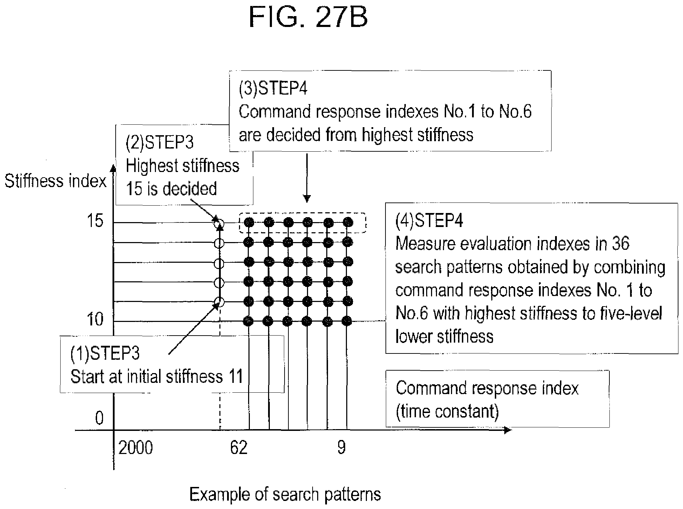

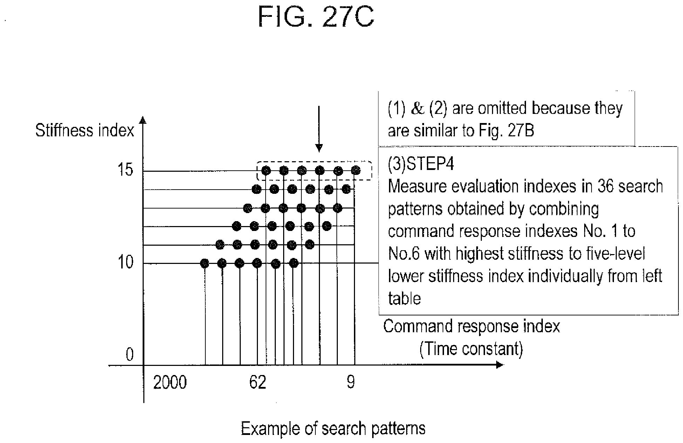

In step 4-1, before the command response measurement starts in step 4-4, the search patterns in which the plurality of stiffness indexes and the plurality of command response indexes are combined, based on the highest stiffness designated in step 3 are decided. These search patterns will be described in detail with reference to FIGS. 27A, 27B, and 27C.

In step 4-2, before the command response measurement starts in step 4-4, the load characteristic estimated value measured in load characteristic measurement function 241 in step 2 is applied to load characteristic compensator 24 in accordance with the presence and absence of the reflection of the load characteristic measurement result on load characteristic compensator 24, which has been set in step 1. Particularly, to the setting of the friction compensation, the result estimated in the highest acceleration pattern in step 2 may be applied, or the setting of the friction compensation may be decided, based on calculation from an average value or the maximum/minimum value of the measurement result, or in accordance with the operation pattern selected in step 4.

In step 4-3, before the command response measurement starts in step 4-4, the command selection block on the operation screen is operated to perform command reselection.

In step 4-4, pressing the measurement/temporary stop button (START) in the command response measurement block on the operation screen starts the command response measurement.

In step 4-5, before the operation is actually performed in step 4-7, the combination of the stiffness index and the command response index is changed in accordance with the search patterns decided in step 4-1. Command response setting unit 22 is set in accordance with the above-described command response index in command response setting function 221, and position/speed controller 23 is set in accordance with the above-described stiffness index in stiffness setting function 231.

In step 4-6, before the operation is actually performed in step 4-7, the reflection of resonance restrainer 25 stored in step 3 corresponding to the stiffness index set in step 4-5 is performed. It is desirable that the stiffness index setting in step 4-5 and the setting of resonance restrainer 25 in the present step are changed as simultaneously as possible. While the above-described settings are divided into the different steps on the present flowchart, the reflection timing on the actual control may be made coincident by a synchronization function not shown on a side of motor drive device 2.

In step 4-7, the motor is operated the number of times of trial in accordance with the command selected in step 4-3.

In step 4-8, the evaluation indexes in each operation are measured by evaluation index measurement function 27 from the motor operation in step 4-7. The evaluation indexes in this case are the setting time regarding a positioning accuracy, the overshooting amount, the number of times of INP change, the vibration level and the like. If a storage capacity is not limited, as many evaluation indexes as possible are desirably collected. This measurement result is stored in a storage area not shown in association with the search patterns.

In step 4-9, it is determined whether or not the all search in all of the search patterns has been completed. If the all search has not been completed, the processing returns to step 4-5 to again change the combination of the stiffness index and the command response index. When the all search is completed, step 4 ends.

The order of the respective steps in step 4 may be replaced except that the order is particularly designated. For example, steps 4-1 to 4-3 may be performed in any order, as long as they are performed before the command response measurement starts in step 4-4.

FIG. 27A is a diagram showing a search pattern table in step 4-1 in the present exemplary embodiment.

If the highest stiffness is decided in step 3, command response indexes No. 1 to No. 6 in six patterns are selected with reference to the search pattern table in step 4-1. Moreover, with regards to the stiffness index, the six stiffness indexes of the highest stiffness to the five-level lower stiffness index are selected. Thirty-six patterns obtained by combining the foregoing are used as the search patterns to conduct the command response measurement while changing the search pattern in order in step 4-5. Obviously, a number of combinations of the search pattern may be increased or decreased as needed in view of a balance between the measurement accuracy and the measurement time.

As shown in FIGS. 27B and 27C, these combinations are arranged in a grid pattern if the stiffness index is indicated on a vertical axis, and the command response index is indicated on a horizontal axis. A way to combine the stiffness index and the command response index is not limited to this example, and corresponding command response indexes No.1 to No. 6 can be selected with reference to the search pattern table on the stiffness basis. In this case, the grid pattern has a deformed shape, that is, a parallelogram shape.

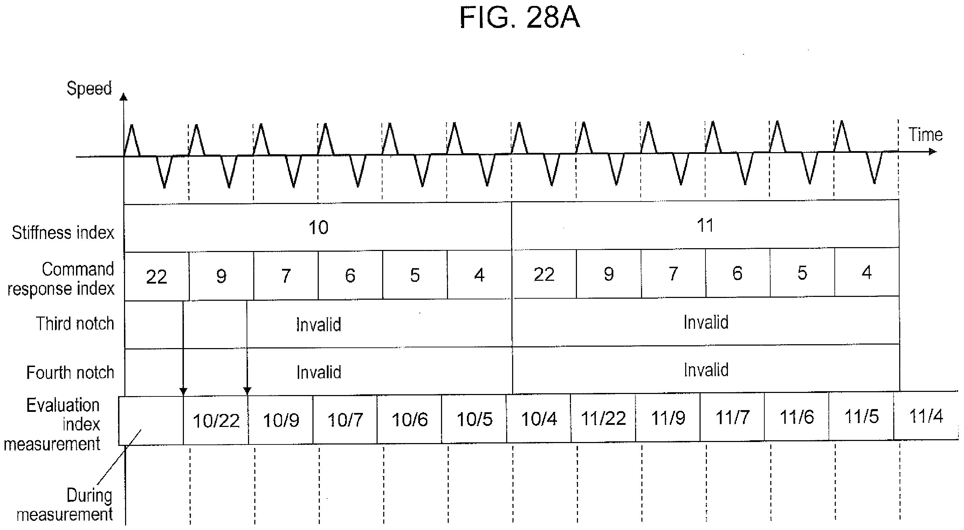

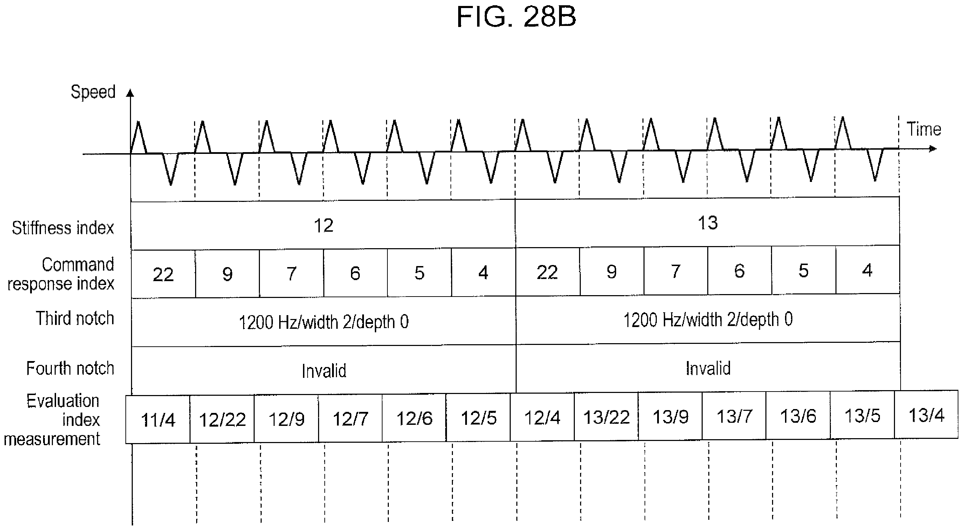

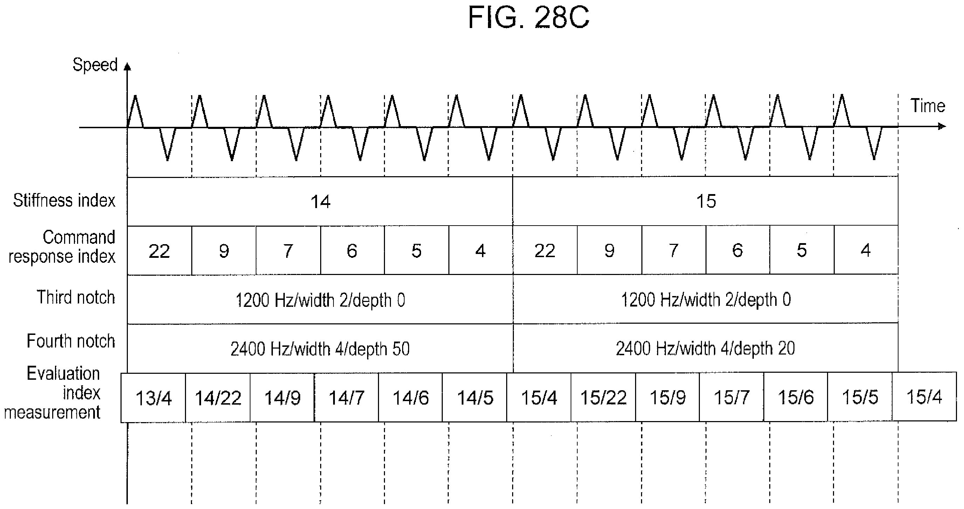

FIGS. 28A, 28B, and 28C are operation diagrams at the time of command response measurement in the present exemplarily embodiment.

In step 4-1, when the search patterns are decided as shown in FIG. 27A, first, in step 4-5, the stiffness index is set to 10, which is a lowest value (five levels lower than the highest stiffness 15), and 22 of the command response index No. 1 is selected. At this time, in step 4-6, simultaneously, the setting of resonance restrainer 25 corresponding to stiffness index 10 is reflected (in this example, the third notch filter and the fourth notch filter are both invalid).

In this state, the motor operation of the number of times of trial (here, twice) is performed in step 4-7. Since in each of the operations, evaluation index measurement function 27 outputs the evaluation indexes in step 4-8, first data is stored in combination with the search pattern of the stiffness index = 10/the command response index = 22. Next, 9 of command response index No. 2 is selected to perform the motor operation and store the evaluation index measurement result. Hereinafter, similar processing is performed till command response index No. 6. Next, the stiffness index is set to 11, and the command response index is reset to 22 of No. 1. Again, the reflection of the setting of resonance restrainer 25 is performed to advance the command response measurement. When the evaluation index measurement result with respect to the combination between the highest stiffness 15 and 4 of command response index No. 6 is obtained, the all search in step 4 is completed.

As described above, in step 4 of the servo adjustment method of the present exemplary embodiment, the search patterns obtained by combining the plurality of stiffness indexes and the plurality of command response indexes are decided from the highest stiffness designated in step 3. Furthermore, in present step 4, the motor is operated by the trial run function of the number of times of trial set in step 1 in the highest acceleration pattern in step 2 while changing the command response index and the stiffness index in order, using the command response setting function and the stiffness setting function. Present step 4 is constituted so as to measure and store the evaluation indexes for all the combinations of the search pattern.

Moreover, present step 4 includes a constitution in which when the stiffness index is changed, the setting of the resonance restrainer on the basis of stiffness index stored in step 3 is reflected on the resonance restrainer.

Moreover, present step 4 includes a constitution in which in place of operating the motor by the trial run function of the number of times of trial set in step 1 in the highest acceleration pattern in step 2, a command reselection step is provided. Here, this command reselection step is constituted so that the operation pattern of the trial run function is changed, or the operation by the external position command is selected.

Moreover, present step 4 includes a constitution in which at least the setting time, the overshooting amount, the vibration level, and a number of times of positioning completion output signal change are measured as the evaluation indexes.

Still moreover, present step 4 includes a constitution in which when the presence of friction compensation is selected in step 1, the friction compensation of the load characteristic compensation function is validated.

In this manner, in the present fifth exemplary embodiment, in step 4 of the servo adjustment, the initial setting necessary for the command response measurement is made in cooperation with steps 1 and 2, the search patterns are decided from the result in step 3, and the evaluation index measurement result can be obtained by the selected command operation.

### SIXTH EXEMPLARY EMBODIMENT

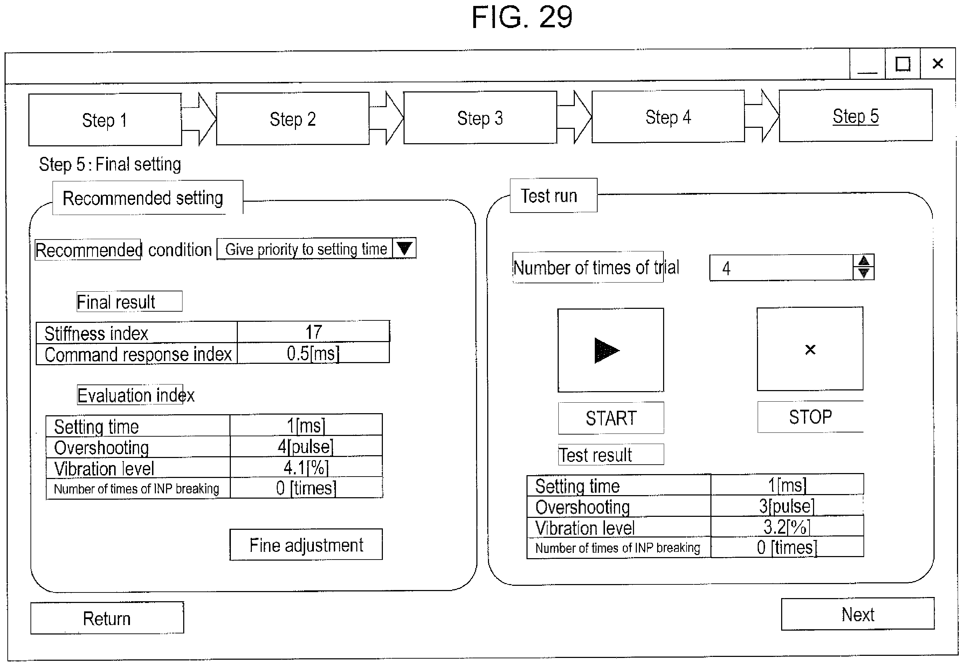

FIG. 29 is a diagram showing an operation screen of step 5 of the servo adjustment in a sixth exemplary embodiment.

In FIG. 29, a left half side is a recommended setting selection block, and a recommended condition can be selected in a combo box. As this condition, there are a condition in which a specific evaluation index is optimized, such as "Give priority to setting time" and "No overshooting", a condition in which a target value is designated to select a closest index, such as "Designate overshooting" and "Designate setting time", a condition in which a predetermined limit is placed on the stiffness index, such as "High stiffness setting", and so on.

When the recommended condition is selected, the combination of the stiffness index and the command response index with a highest priority is selected under a restriction condition or a sorting condition corresponding to the recommended condition from the evaluation index measurement result measured in step 4, and simultaneously, the evaluation index measurement result in step 4 is also displayed.

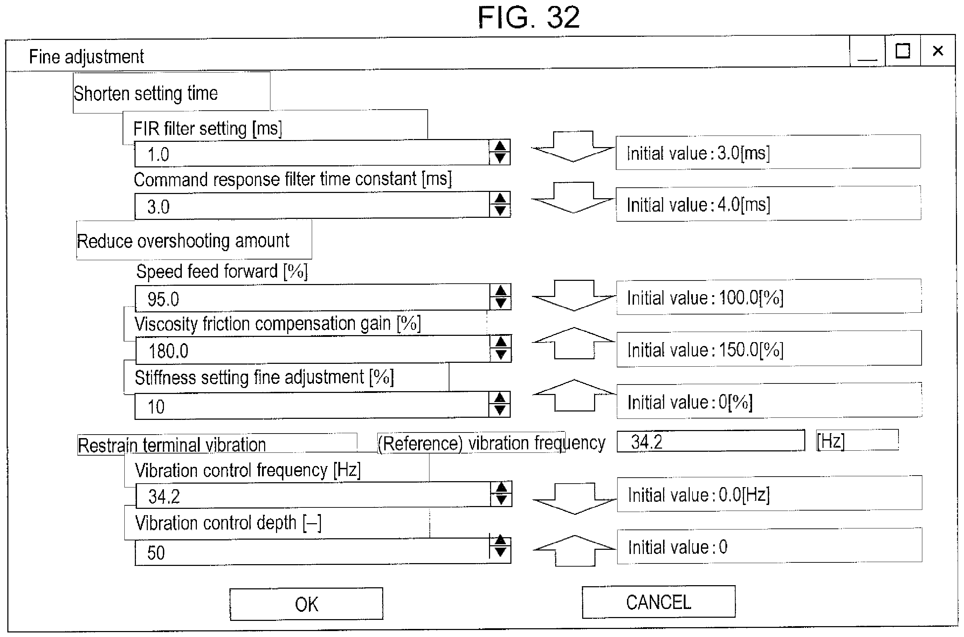

When a fine adjustment button is pressed, another screen described in detail in FIG. 32 is opened, and fine adjustment is further performed from the recommendation result.

A right half side is a test run block, in which pressing a test start (START) button allows the motor to be operated the number of times of trial in accordance with the command selected in step 4. In the case of the operation by the external position command, only evaluation index measurement function 27 is activated to perform the measurement of the number of times of trial. The measurement result is displayed in a test result in a lower right portion in real time, so that comparison with the measurement result in step 4 in a lower left portion, and checking of change in the evaluation indexes by the fine adjustment are enabled.

If the final setting is completed, and the test result is satisfactory, pressing a "Next" button in the lower right portion can end the servo adjustment step. At this time, the final adjustment result and the measurement result in all the steps so far may be stored in motor drive device 2 or servo adjuster 6. If the result is not satisfactory at this point, the recommended condition can be selected again to obtain another final result, or pressing a "Return" button in the lower left portion can discard the recommendation result to return the processing to step 4.

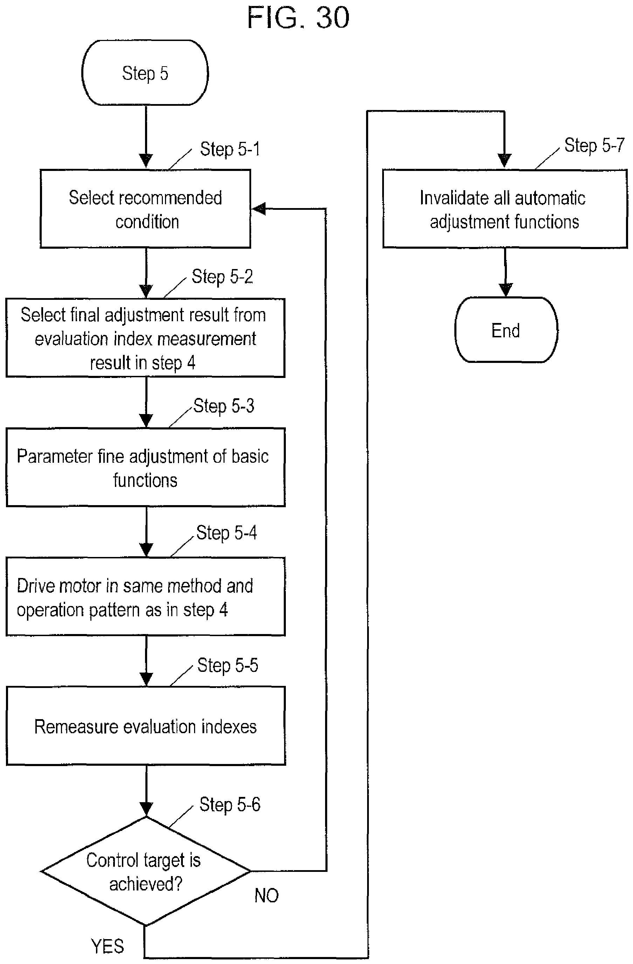

FIG. 30 is a flowchart showing a procedure of step 5 of the servo adjustment in the present exemplary embodiment.

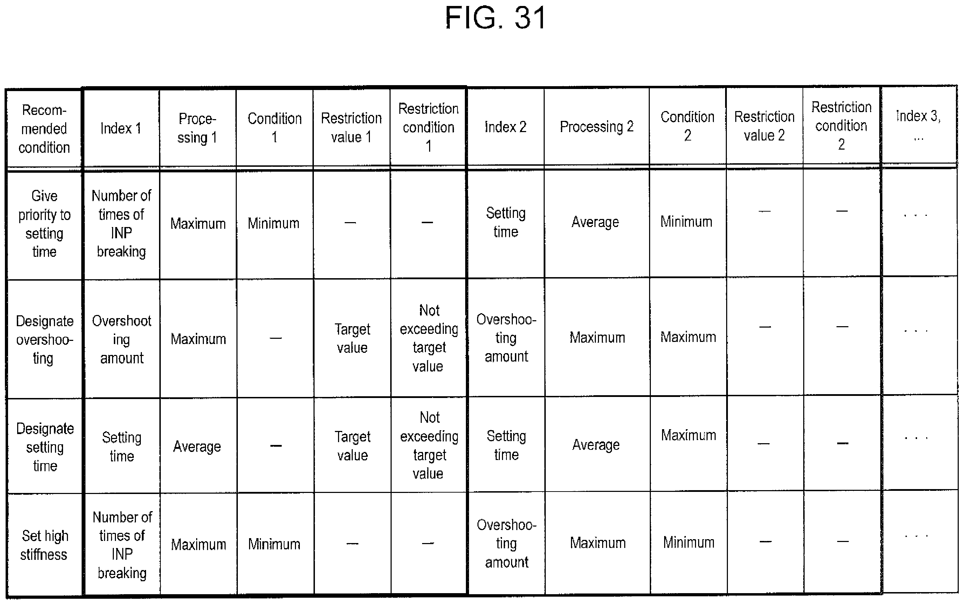

In step 5-1, first, the recommended condition is selected from the recommended setting selection block on the operation screen. Details of the recommended condition will be described with reference to FIG. 31. While the recommended condition may be selected from the combo box, the evaluation indexes may be displayed in a graph to be selected in a chart. Moreover, the combination of the command response index and the stiffness index as the search pattern may be designated directly. In short, any method for selecting one or more candidates from the search patterns can be permitted.

In step 5-2, the command response index and the stiffness index of the search pattern having the highest priority are selected from the evaluation index measurement result in step 4 as the final adjustment result in accordance with the recommended condition selected in step 5-1. If the recommended condition includes the sorting condition, candidates having second and subsequent priorities may be advantageously displayed.

In step 5-3, parameter fine adjustment of the basic functions of the motor control is performed to the final adjustment result selected in step 5-2. Pressing the fine adjustment button on the operation screen activates a fine adjustment screen described in detail with reference to FIG. 32.

In step 5-4, the test start (START) button is pressed in the test run block on the operation screen, by which the motor operation is performed the number of times of trial by the command selected in step 4.

In step 5-5, the evaluation indexes remeasured in evaluation index measurement function 27 are displayed in each of the motor operations in step 5-4. As in step 4, displaying the setting time, the overshooting amount, the vibration level, the number of times of INP breaking advantageously makes the change easy to be grasped.

In step 5-6, it is determined whether or not the control target has been reached in the above-described final adjustment result, and if the target has not been reached, the processing is returned to the selection of the recommended condition in step 5-1, and the selection of the final adjustment result and the test operation are repeated.

In step 5-7, when the control target can be reached in step 5-6, all the automatic adjustment functions of motor drive device 2 are invalidated, and step 5 is ended. Particularly, it is very important for avoiding abnormal operation after the servo adjustment to invalidate load characteristic measurement function 241, adaptive filter function 251, and oscillation sensing function 26, which are resident type functions. Trial run function 211, which is an activation type function, is invalidated and set to a state where the external position command is accepted. In command response setting function 221 and stiffness setting function 231, the reflection start signals are turned off lest the command response index and the stiffness index should be reflected on actual command response setting unit 22 and position/speed controller 23.

The order of the respective steps in step 5 may be replaced except that the order is not particularly designated. For example, steps 5-1 to 5-3 may be repeated any times in any order, as long as they are performed before the motor is driven in step 5-4.

FIG. 31 is a diagram showing a recommended condition table in step 5-1 in the present exemplary embodiment,

As the recommended condition, there are the "Give priority to setting time" and the "Designate overshooting", "Designate setting time", and "High stiffness setting" described in a left-most column. For each of the recommended conditions, two restriction conditions or sorting conditions are defined in this example.

For example, with regards to the "Give priority to setting time" of the recommended condition, in the plurality of evaluation indexes of the number of times of trial for each search pattern, a value of "maximum" described in processing 1 is calculated from the "number of times of INP breaking" of the number of times of trial described in an index first column to select a combination of the command response index and the stiffness index of the search pattern with a value of "minimum" described in condition 1. In this manner, a condition having no description in columns of a restriction value and a restriction condition is referred to as the sorting condition here, and a priority level of index is decided, based on a magnitude of the value. If as a result of the decision of the priority level of index 1, the plurality of conditions at the same level are obtained, determination of index 2 is performed for these conditions. In this case, a value of "average" described in processing 2 is calculated from the "setting time" of the number of times of trial described in a column of index 2 to select a combination of the command response index and the stiffness index of the search pattern having a value of "minimum" described in condition 2. Hereinafter, the selection is continued as long as index 3, index 4, ... are defined. In case that the priority level is not decided by the defined conditions, for example, a condition that uniquely decides the priority levels, based on a combination of "command response index is minimum" and "stiffness index is minimum" or the like may be advantageously defined.

Moreover, with regards to the "Designate overshooting" of the recommended condition, in the plurality of evaluation indexes of the number of times of trial for each search pattern, the value of "maximum" described in processing 1 is calculated from the "overshooting amount" of the number of times of trial described in the column of index 1. However, since there is no description in condition 1, the search pattern having a value of a "target value" and "not exceeding the target value" described in restriction value 1 and restriction condition 1 is selected. In the condition having description in the columns of the restriction value and the restriction condition is referred to as a restriction condition here, and combinations of the command response index and the stiffness index of the search pattern that do not satisfy the condition are excluded from the final candidate.

The setting of the "target value" of the restriction value is enabled to be changed on the operation screen in step 5, which enables customization and increases a degree of freedom. Moreover, a constitution in which the recommended condition selected by default does not include the restriction condition can assure the selection of at least one final adjustment result.

FIG. 32 is a diagram showing the fine adjustment screen in step 5-3 in the present exemplary embodiment.

Parameters regarding the motor basic functions are enumerated on the fine adjustment screen, and effects expected from parameter change such as a shortening of the setting time and reduction in the overshooting amount, and guidance of an adjustment direction are added with arrows. Moreover, as initial values, the values of the final adjustment result by the recommended condition selected in step 5-1 are displayed. If an effect of restraining terminal vibration is required, a presumed value of a vibration frequency may be separately displayed together with parameters regarding the vibration control of command response setting unit 22.

The fine adjustment screen may be displayed from the beginning, or may be enabled to switch over alternately with the test run by tab. In place of parameter names, titles in accordance with adjustment purposes such as setting time shortening and overshooting amount reduction may be used for the adjustment.

As described above, step 5 of the servo adjustment method of the present exemplary embodiment is constituted so that the recommended condition is selected, and the combination of the stiffness index and the command response index having the evaluation indexes given the highest priority that the recommended condition designates is selected from the evaluation index measurement result in step 4 as the final adjustment result.

Moreover, present step 5 includes a constitution in which the recommended condition is made of the restriction condition required to be necessarily satisfied, and the sorting condition that allows the sorting to be performed, based on the magnitude of the value.

Moreover, in present step 5, after the selection of the recommended condition, the command response index and the stiffness index of the final adjustment result are set, using the command response setting function and the stiffness setting function. Present step 5 includes a constitution in which the motor can be operated in the same method and operation pattern as those in step 4 to remeasure the evaluation indexes.

Present step 5 includes a constitution in which the steps of the selection of the recommended condition to the remeasurement of the evaluation indexes are repeatedly performed until the remeasured evaluation indexes achieve the control target.

Present step 5 includes a constitution in which the function of performing the fine adjustment to the parameters of the basic functions after the selection of the final adjustment result from the recommended condition is provided.

Moreover, present step 5 includes a constitution in which all the automatic adjustment functions are invalidated after output of the final adjustment result.

In this manner, in the present sixth exemplary embodiment, in step 5 of the servo adjustment, the final adjustment result can be obtained from the measurement result in step 4 in accordance with the recommended condition. Moreover, the recommended condition is changed, the parameter fine adjustment of the basic functions are performed, and the driving is again performed in the same command operation as in step 4, by which more optimal adjustment result can be obtained.

As described above, the servo adjustment method for the motor drive device of the present invention is constituted to have any of the above-described five steps. The present invention provides means that enables even the worker not having detailed knowledge of the servo adjustment to obtain the proper adjustment result by the above-described constitution.

While the servo adjustment method described in the present invention has been described on the assumption that it is implemented in servo adjuster 6, it may be equipped in another device such as a personal computer, a console, or the like including corresponding communication means through a communication interface not shown that motor drive device 2 includes. Here, as the communication interface, there are an RS232, an RS485, USB communication, Ethernet (registered trademark) connection, wireless connection means such as Bluetooth (registered trademark) communication and wireless LAN, and the like. Moreover, incorporating all the functions of servo adjuster 6 in motor drive device 2 does not hinder the effects of the invention.

### INDUSTRIAL APPLICABILITY

A servo adjustment method for a motor drive device of the present invention enables even a worker not having detailed knowledge of servo adjustment to obtain a proper adjustment result by executing five steps in order. Thus, the present method is useful as a method for adjusting a control object including a motor, and a servo motor control system including a controller that controls this control object.

### REFERENCE MARKS IN THE DRAWINGS

- 1: host device
- 2, 92: motor drive device
- 3: motor
- 4: encoder
- 5: load
- 6: servo adjuster
- 21: command selection unit
- 22: command response setting unit
- 23: position/speed controller
- 24: load characteristic compensator
- 25: resonance restrainer
- 26: oscillation sensing function
- 27: evaluation index measurement function
- 211: trial run function
- 221: command response setting function
- 231: stiffness setting function
- 241: load characteristic measurement function
- 251: adaptive filter function

## Claims

1. A servo adjustment method for a motor drive device (2) including the following basic functional elements of motor control of:
a command selection unit (21) configured to receive an external position command input from a host device (1) and an internal position command, and output either the external position command or the internal position command as a post-selection position command;
a command response setting unit (22) configured to receive the post-selection position command, perform filter processing for removing a specific frequency band, and output a post-filter position command;
a position/speed controller (23) configured to receive the post-filter position command and motor position information from an encoder (4), and generate a torque command that makes a deviation between the post-filter position command and the motor position information zero;
a load characteristic compensator (24) configured to receive the torque command, multiply the torque command by an inertia estimated value of a motor (3) and a load (5), and then adds a friction torque estimated value of the load (5) to generate a post-compensation torque command; and
a resonance restrainer (25) configured to perform filter processing for removing a specific frequency band from the post-compensation torque command, and output a post-filter torque command,
the motor drive device (2) further including the following automatic adjustment functions of:
a trial run function (211) that automatically generates the internal position command in accordance with an operation pattern designated by a servo adjuster (6);
a command response setting function (221) that automatically sets a filter characteristic of the command response setting unit (22) in accordance with a command response index designated by the servo adjuster (6);
a stiffness setting function (231) that automatically sets a parameter of the position/speed controller (23) in accordance with a stiffness index designated by the servo adjuster (6) and an oscillation sensing signal notified from an oscillation sensing function (26);
a load characteristic measurement function (241) that accepts setting of validity/invalidity of load characteristic measurement and validity/invalidity of reflection of a load characteristic estimate result individually from the servo adjuster (6), automatically measures a load characteristic from the post-filter torque command of the resonance restrainer (25) and motor position information from the encoder (4), and automatically sets the load characteristic compensator (24) in accordance with a measurement result;
an adaptive filter function (251) that accepts setting of validity/invalidity of adaptation operation and an adaptive filter mode from the servo adjuster (6), and automatically sets a filter characteristic of the resonance restrainer (25) in accordance with the adaptive filter mode when the adaptation operation is valid;
an oscillation sensing function (26) that accepts setting of validity/invalidity of oscillation sensing and an oscillation sensing level from the servo adjuster (6), automatically measures an oscillation state from position information from the encoder (4), and automatically restrains oscillation in cooperation with the stiffness setting function (231); and
an evaluation index measurement function (27) that accepts setting of a positioning completion range from the servo adjuster (6), and automatically measures various types of evaluation indexes from at least any of the post-filter position command, the motor position information, and the post-filter torque command,
the servo adjustment method further comprising the following steps of:
step 1 of performing initial setting;
step 2 of performing the load characteristic measurement and command pattern decision;
step 3 of searching for a highest stiffness as an upper limit of the stiffness index and storing setting of the resonance restrainer (25) corresponding to the stiffness index;
step 4 of selecting a plurality of stiffness indexes and a plurality of command response indexes based on the highest stiffness, combining the plurality of stiffness indexes and the plurality of command response indexes, and measuring and storing the evaluation indexes for every combinations at the time of designated operation; and
step 5 of obtaining a final adjustment result from the evaluation indexes in accordance with a search condition.

2. The servo adjustment method for the motor drive device according to claim 1, wherein
the step 1 includes setting of any of the following initial conditions:
a number of trials performed in the trial run function (211);
an initial command response index of the command response setting function (221);
an initial stiffness index and a highest stiffness limit of the stiffness setting function (231);
validity/invalidity of least square estimate, and validity/invalidity of the load characteristic compensator reflection of the load characteristic measurement function (241);
the validity/invalidity and operation mode setting of the adaptive filter function (251);
the validity/invalidity and the oscillation sensing level of the oscillation sensing function (26); and
the positioning completion range, a maximum torque limit, and a vibration sensing level of the evaluation index measurement function (27).

3. The servo adjustment method for the motor drive device according to claim 2, wherein the step 1 includes,
inputting at least any of qualitative adjustment guidelines of a search method, a control purpose, load fluctuation, an index of responsiveness/stability, and a stiffness of a load to be controlled, and at least any of quantitative measurement thresholds of the positioning completion range, the oscillation sensing level, and the maximum torque limit, and
outputting the initial condition based on a combination of the qualitative adjustment guidelines and the quantitative measurement thresholds.

4. The servo adjustment method for the motor drive device according to claim 1, wherein the step 2 includes,
operating the load characteristic measurement function (241) in accordance with validation/invalidation setting of the load characteristic measurement function (241) designated in the step 1,
operating the motor (3) the number of times of trial designated in the step 1 within a set operation range in the trial run function (211),
setting the load characteristic compensator based on a load characteristic measurement result measured while changing operation acceleration, and
finally, invalidating the load characteristic measurement function (241).

5. The servo adjustment method for the motor drive device according to claim 4, wherein the step 2 includes,
before the trial run function is validated, setting the stiffness setting function (231) with the initial stiffness index designated in step 1, and setting the initial command response index with the command response setting function (221).

6. The servo adjustment method for the motor drive device according to claim 4, wherein the step 2 includes,
before the trial run function (211) is validated, unconditionally invalidating the adaptive filter function (251) and a notch filter of the resonance restrainer (25).

7. The servo adjustment method for the motor drive device according to claim 4, wherein the step 2 includes,
before the trial run function is validated, validating the oscillation sensing function (26) at the oscillation sensing level designated in step 1, and
when oscillation is sensed during the trial run operation, notifying the stiffness setting function (231) that oscillation is sensed, restraining the oscillation by lowering the stiffness index, and then performing the load characteristic measurement again from the beginning.

8. The servo adjustment method for the motor drive device according to claim 4, wherein the step 2 includes,
starting the trial run operation at minimum acceleration that the load characteristic measurement function (241) can apply,
measuring the evaluation indexes while raising acceleration, and
setting the load characteristic compensator (24) in the step 3 and later with the load characteristic measurement result at a point when the evaluation index regarding the torque command reaches the maximum torque limit designated in the step 1.

9. The servo adjustment method for the motor drive device according to claim 2, wherein the step 2 includes,
starting the trial run operation at minimum acceleration that the load characteristic measurement function (241) can apply,
measuring the evaluation indexes while raising acceleration, and setting a highest acceleration pattern at a point when the evaluation index regarding the torque command reaches the maximum torque limit designated in the step 1 as the operation pattern of the trial run function (211) in the step 3, wherein when the torque command exceeds the maximum torque limit, the current movement amount, the highest speed, the acceleration and deceleration time are stored as the highest acceleration pattern.

10. The servo adjustment method for the motor drive device according to claim 9, wherein the step 3 includes,
performing the trial run operation of the number of times of trial designated in the step 1 in the highest acceleration pattern in the step 2,
raising the stiffness index until it reaches the highest stiffness limit designated in the step 1, and
when the stiffness index reaches the highest stiffness limit designated in the step 1, deciding a highest stiffness based on the highest stiffness limit.

11. The servo adjustment method for the motor drive device according to claim 10, wherein the step 3 includes,
before the trial run operation starts, performing the validity/invalidity setting of the adaptive filter function (251) designated in the step 1, and
invalidating the adaptive filter function (251) after the highest stiffness is decided.

12. The servo adjustment method for the motor drive device according to claim 10, wherein the step 3 includes,
storing a setting value of the resonance restrainer (25) immediately before the stiffness index is raised in association with current stiffness setting.

13. The servo adjustment method for the motor drive device according to claim 10, wherein the step 3 includes,
when the oscillation is sensed during the trial run operation, deciding the highest stiffness based on the stiffness index at a moment the oscillation is sensed.

14. The servo adjustment method for the motor drive device according to claim 10, wherein the step 3 includes,
when the evaluation index regarding the vibration exceeds the vibration sensing level designated in the step 1 during the trial run operation, deciding the highest stiffness based on the last stiffness index.

15. The servo adjustment method for the motor drive device according to claim 9, wherein the step 4 includes,
deciding search patterns from the highest stiffness designated in the step 3, the search patterns obtained by combining a plurality of stiffness indexes and a plurality of command response indexes,
operating the motor (3) in the trial run function (211) of the number of times of trial set in the step 1 in the highest acceleration pattern in the step 2 while changing the command response index and the stiffness index in sequential order, using the command response setting function (221) and the stiffness setting function (231), and
measuring and storing the evaluation indexes with respect to all the combinations of the search patterns.

16. The servo adjustment method for the motor drive device according to claim 15, wherein the step 4 includes,
when the stiffness index is changed, reflecting the setting of the resonance restrainer (25) on a basis of the stiffness index stored in the step 3 on the resonance restrainer (25).

17. The servo adjustment method for the motor drive device according to claim 15, wherein in place of operating the motor (3) in the trial run function (211) of the number of times of trial set in the step 1 in the highest acceleration pattern in the step 2, the step 4 comprises a command reselection step of changing the operation pattern of the trial run function (211), or selecting operation based on the external position command.

18. The servo adjustment method for the motor drive device according to claim 15, wherein the step 4 includes,
measuring at least a setting time, an overshooting amount, a vibration level, a number of changes in positioning completion output signal, as the evaluation indexes.

19. The servo adjustment method for the motor drive device according to claim 15, wherein the step 4 includes,
when presence of friction compensation is selected in the step 1, validating the friction compensation of the load characteristic compensation function.

20. The servo adjustment method for the motor drive device according to claim 1, wherein the step 5 includes,
selecting a recommended condition, and
then, selecting a combination of the stiffness index and the command response index having the evaluation index of highest priority specified by the recommended condition from the evaluation index measurement result in the step 4, as the final adjustment result.

21. The servo adjustment method for the motor drive device according to claim 20, wherein in the step 5, the recommended condition is made of a restriction condition required to be satisfied, and a sorting condition that is sortable according to a magnitude of a value.

22. The servo adjustment method for the motor drive device according to claim 20, wherein the step 5 includes,
after the recommended condition is selected, setting the command response index and the stiffness index of the final adjustment result, using the command response setting function (221) and the stiffness setting function (231), and
operating the motor (3) in the same method and operation pattern as in the step 4, and remeasuring the evaluation indexes.

23. The servo adjustment method for the motor drive device according to claim 20, wherein the step 5 includes,
repeating to perform the steps from the selection of the recommended condition to the remeasurement of the evaluation indexes until the remeasured evaluation indexes reach a control target.

24. The servo adjustment method for the motor drive device according to claim 20, wherein the step 5 includes a function of performing fine adjustment of parameters of the basic functions after the final adjustment result is selected from the recommended condition.

25. The servo adjustment method for the motor drive device according to claim 20, wherein the step 5 includes,
after the final adjustment result that reaches the control target is output, invalidating all the automatic adjustment functions.

## Patentansprüche

1. Servoeinstellungsverfahren für eine Motoransteuervorrichtung (2), die die folgenden, grundlegenden funktionalen Elemente einer Motorsteuerung enthält:
eine Befehlsauswahleinheit (21), die konfiguriert ist, einen externen Positionsbefehl, der von einem Hauptrechner (1) eingegeben wird, und einen internen Positionsbefehl zu empfangen und entweder den externen Positionsbefehl oder den internen Positionsbefehl als einen Positionsbefehl nach Auswahl auszugeben;
eine Befehlsantwort-Einstelleinheit (22), die konfiguriert ist, den Positionsbefehl nach Auswahl zu empfangen, eine Filterverarbeitung zum Entfernen eines spezifischen Frequenzbands durchzuführen und einen Positionsbefehl nach Filterung auszugeben;
eine Positions/Geschwindigkeits-Steuereinrichtung (23), die konfiguriert ist, den Positionsbefehl nach Filterung und Motorpositionsinformationen von einem Codierer (4) zu empfangen und einen Drehmomentbefehl zu erzeugen, der bewirkt, dass eine Abweichung zwischen dem Positionsbefehl nach Filterung und den Motorpositionsinformationen null wird;
eine Lasteigenschafts-Ausgleichseinrichtung (24), die konfiguriert ist, den Drehmomentbefehl zu empfangen, den Drehmomentbefehl mit einem geschätzten Massenträgheitswert eines Motors (3) und einer Last (5) zu multiplizieren und anschließend einen geschätzten Reibungsdrehmomentwert der Last (5) zu addieren, um einen Drehmomentbefehl nach Ausgleich zu erzeugen; und
eine Resonanzeinschränkungseinrichtung (25), die konfiguriert ist, eine Filterverarbeitung zum Entfernen eines spezifischen Frequenzbands aus dem Drehmomentbefehl nach Ausgleich durchzuführen und einen Drehmomentbefehl nach Filterung auszugeben,
wobei die Motoransteuervorrichtung (2) ferner die folgenden Funktionen zum automatischen Einstellen enthält:
eine Versuchslauffunktion (211), die den internen Positionsbefehl in Übereinstimmung mit einem Betriebsmuster, das durch eine Servoeinstelleinrichtung (6) zugewiesen wird, automatisch erzeugt;
eine Befehlsantwort-Einstellfunktion (221), die eine Filtereigenschaft der Befehlsantwort-Einstelleinheit (22) in Übereinstimmung mit einem Befehlsantwortindex, der durch die Servoeinstelleinrichtung (6) zugewiesen wird, automatisch einstellt;
eine Steifigkeitseinstellfunktion (231), die einen Parameter der Positions/Geschwindigkeits-Steuereinrichtung (23) in Übereinstimmung mit einem Steifigkeitsindex, der durch die Servoeinstelleinrichtung (6) zugewiesen wird, und einem Schwingungserfassungssignal, das von einer Schwingungserfassungsfunktion (26) gemeldet wird, automatisch einstellt;
eine Lasteigenschafts-Messfunktion (241), die eine Einstellung der Gültigkeit/Ungültigkeit einer Lasteigenschaftsmessung und der Gültigkeit/Ungültigkeit der Reflektion eines Schätzergebnisses einer Lasteigenschaft einzeln von der Servoeinstelleinrichtung (6) annimmt, eine Lasteigenschaft aus dem Drehmomentbefehl nach Filterung der Resonanzeinschränkungseinrichtung (25) und Motorpositionsinformationen vom Codierer (4) automatisch misst und die Lasteigenschafts-Ausgleichseinrichtung (24) in Übereinstimmung mit einem Messergebnis automatisch einstellt;
eine Funktion (251) zur adaptiven Filterung, die eine Einstellung der Gültigkeit/Ungültigkeit eines Anpassungsbetriebs und einen Modus der adaptiven Filterung von der Servoeinstelleinrichtung (6) annimmt und eine Filtereigenschaft der Resonanzeinschränkungseinrichtung (25) in Übereinstimmung mit dem Modus der adaptiven Filterung automatisch einstellt, wenn der Anpassungsbetrieb gültig ist;
eine Schwingungserfassungsfunktion (26), die eine Einstellung der Gültigkeit/Ungültigkeit einer Schwingungserfassung und einen Schwingungserfassungspegel von der Servoeinstelleinrichtung (6) annimmt, einen Schwingungszustand aus den Positionsinformationen des Codieres (4) automatisch misst und im Zusammenwirken mit der Steifigkeitseinstellfunktion (231) Schwingung automatisch einschränkt; und
eine Bewertungsindex-Messfunktion (27), die eine Einstellung eines Positionierungsabschlussbereichs von der Servoeinstelleinrichtung (6) annimmt und aus dem Positionsbefehl nach Filterung und/oder den Motorpositionsinformationen und/oder dem Drehmomentbefehl nach Filterung diverse Arten von Bewertungsindizes automatisch misst,
wobei das Servoeinstellungsverfahren ferner die folgenden Schritte umfasst:
Schritt 1 des Durchführens einer Ausgangseinstellung;
Schritt 2 des Durchführens der Lasteigenschaftsmessung und der Befehlsmusterentscheidung;
Schritt 3 des Suchens nach einer höchsten Steifigkeit als einem oberen Grenzwert des Steifigkeitsindex und des Speicherns der Einstellung der Resonanzeinschränkungseinrichtung (25), die dem Steifigkeitsindex entspricht;
Schritt 4 des Auswählens mehrerer Steifigkeitsindizes und mehrerer Befehlsantwortindizes auf der Grundlage der höchsten Steifigkeit, des Kombinierens der mehreren Steifigkeitsindizes und der mehreren Befehlsantwortindizes und des Messens und Speicherns der Bewertungsindizes für jede Kombination zum Zeitpunkt des zugewiesenen Betriebs; und
Schritt 5 des Erhaltens eines endgültigen Einstellungsergebnisses aus den Bewertungsindizes in Übereinstimmung mit einer Suchbedingung.

2. Servoeinstellungsverfahren für die Motoransteuervorrichtung nach Anspruch 1, wobei der Schritt 1 das Einstellen von beliebigen der folgenden Ausgangsbedingungen umfasst:
einer Anzahl von Versuchen, die in der Versuchslauffunktion (211) durchgeführt werden;
einen Ausgangs-Befehlsantwortindex der Befehlsantwort-Einstellfunktion (221);
einen Ausgangssteifigkeitsindex und einen Grenzwert der höchsten Steifigkeit der Steifigkeitseinstellfunktion (231);
die Gültigkeit/Ungültigkeit einer Schätzung der kleinsten Quadrate und die Gültigkeit/Ungültigkeit der Reflektion der Lasteigenschafts-Ausgleichseinrichtung der Lasteigenschafts-Messfunktion (241);
die Gültigkeit/Ungültigkeit und die Einstellung des Betriebsmodus der Funktion (251) zur adaptiven Filterung;
die Gültigkeit/Ungültigkeit und den Schwingungserfassungspegel der Schwingungserfassungsfunktion (26); und
den Positionierungsabschlussbereich, einen Grenzwert für das maximale Drehmoment und einen Vibrationserfassungspegel der Bewertungsindex-Messfunktion (27).

3. Servoeinstellungsverfahren für die Motoransteuervorrichtung nach Anspruch 2, wobei der Schritt 1 Folgendes enthält:
Eingeben von zumindest einigen der qualitativen Einstellungsrichtlinien eines Suchverfahrens, eines Steuerungszwecks, einer Lastschwankung, eines Index für Ansprechvermögen/Stabilität und einer Steifigkeit einer zu steuernden Last und zumindest einigen der quantitativen Messungsschwellenwerte des Positionierungsabschlussbereichs, des Schwingungserfassungspegels und des Grenzwertes für das maximale Drehmoment, und
Ausgeben der Ausgangsbedingung auf der Grundlage einer Kombination der qualitativen Einstellungsrichtlinien und der quantitativen Messungsschwellenwerte.

4. Servoeinstellungsverfahren für die Motoransteuervorrichtung nach Anspruch 1, wobei der Schritt 2 Folgendes enthält:
Betreiben der Lasteigenschafts-Messfunktion (241) in Übereinstimmung mit der Einstellung der Gültigkeit/Ungültigkeit der Lasteigenschafts-Messfunktion (241), die im Schritt 1 zugewiesen worden ist,
Betreiben des Motors (3) für die Anzahl der Versuchswiederholungen, die im Schritt 1 zugewiesen worden ist, innerhalb eines eingestellten Betriebsbereichs in der Versuchslauffunktion (211),
Einstellen der Lasteigenschafts-Ausgleichseinrichtung auf der Grundlage eines Messergebnisses der Lasteigenschaft, das gemessen wird, während die Betriebsbeschleunigung geändert wird, und
abschließend Außer-Kraft-Setzen der Lasteigenschafts-Messfunktion (241).

5. Servoeinstellungsverfahren für die Motoransteuervorrichtung nach Anspruch 4, wobei der Schritt 2 Folgendes enthält:
bevor die Versuchslauffunktion bestätigt wird, Einstellen der Steifigkeitseinstellfunktion (231) mit dem Ausgangssteifigkeitsindex, der in Schritt 1 zugewiesen worden ist, und Einstellen des Ausgangs-Befehlsantwortindex mit der Befehlsantwort-Einstellfunktion (221).

6. Servoeinstellungsverfahren für die Motoransteuervorrichtung nach Anspruch 4, wobei der Schritt 2 Folgendes enthält:
bevor die Versuchslauffunktion (211) bestätigt wird, bedingungsloses Außer-Kraft-Setzen der Funktion (251) zur adaptiven Filterung und eines Sperrfilters der Resonanzeinschränkungseinrichtung (25).

7. Servoeinstellungsverfahren für die Motoransteuervorrichtung nach Anspruch 4, wobei der Schritt 2 Folgendes enthält:
bevor die Versuchslauffunktion bestätigt wird, Bestätigen der Schwingungserfassungsfunktion (26) mit dem Schwingungserfassungspegel, der in Schritt 1 zugewiesen worden ist, und
dann, wenn während des Versuchslaufbetriebs Schwingung erfasst wird, Benachrichtigen der Steifigkeitseinstellfunktion (231) darüber, dass Schwingung erfasst wird, Einschränken der Schwingung durch Absenken des Steifigkeitsindex und daraufhin erneutes Durchführen der Lasteigenschaftsmessung von Beginn an.

8. Servoeinstellungsverfahren für die Motoransteuervorrichtung nach Anspruch 4, wobei der Schritt 2 Folgendes enthält:
Starten des Versuchslaufbetriebs mit der minimalen Beschleunigung, die die Lasteigenschafts-Messfunktion (241) anlegen kann,
Messen der Bewertungsindizes, während die Beschleunigung angehoben wird, und
Einstellen der Lasteigenschafts-Ausgleichseinrichtung (24) im Schritt 3 und später mit dem Messergebnis der Lasteigenschaft an einem Punkt, wenn der Bewertungsindex bezüglich des Drehmomentbefehls den Grenzwert für das maximale Drehmoment erreicht, der im Schritt 1 zugewiesen worden ist.

9. Servoeinstellungsverfahren für die Motoransteuervorrichtung nach Anspruch 2, wobei der Schritt 2 Folgendes enthält:
Starten des Versuchslaufbetriebs mit der minimalen Beschleunigung, die die Lasteigenschafts-Messfunktion (241) anlegen kann,
Messen der Bewertungsindizes, während die Beschleunigung angehoben wird, und
Einstellen eines Musters der höchsten Beschleunigung an einem Punkt, wenn der Bewertungsindex bezüglich des Drehmomentbefehls den Grenzwert für das maximale Drehmoment erreicht, der im Schritt 1 zugewiesen worden ist, als das Betriebsmuster der Versuchslauffunktion (211) im Schritt 3, wobei dann, wenn der Drehmomentbefehl den Grenzwert für das maximale Drehmoment überschreitet, der aktuelle Bewegungsbetrag, die höchste Geschwindigkeit, die Zeit der Beschleunigung und der Verlangsamung als das Muster der höchsten Beschleunigung gespeichert werden.

10. Servoeinstellungsverfahren für die Motoransteuervorrichtung nach Anspruch 9, wobei der Schritt 3 Folgendes enthält:
Durchführen des Versuchslaufbetriebs für die Anzahl der Versuchswiederholungen, die im Schritt 1 zugewiesen worden ist, in dem Muster der höchsten Beschleunigung im Schritt 2,
Anheben des Steifigkeitsindex, bis er den Grenzwert für die höchste Steifigkeit erreicht, der im Schritt 1 zugewiesen worden ist, und
dann, wenn der Steifigkeitsindex den Grenzwert für die höchste Steifigkeit erreicht, der im Schritt 1 zugewiesen worden ist, Beschließen einer höchsten Steifigkeit auf der Grundlage des Grenzwertes für die höchste Steifigkeit.

11. Servoeinstellungsverfahren für die Motoransteuervorrichtung nach Anspruch 10, wobei der Schritt 3 Folgendes enthält:
bevor der Versuchslaufbetrieb startet, Durchführen der Einstellung der Gültigkeit/Ungültigkeit der Funktion (251) zur adaptiven Filterung, die im Schritt 1 zugewiesen worden ist, und
Außer-Kraft-Setzen der Funktion (251) zur adaptiven Filterung, nachdem die höchste Steifigkeit beschlossen worden ist.

12. Servoeinstellungsverfahren für die Motoransteuervorrichtung nach Anspruch 10, wobei der Schritt 3 Folgendes enthält:
Speichern eines Einstellungswertes der Resonanzeinschränkungseinrichtung (25), unmittelbar bevor der Steifigkeitsindex angehoben wird, in Zuordnung zur aktuellen Einstellung der Steifigkeit.

13. Servoeinstellungsverfahren für die Motoransteuervorrichtung nach Anspruch 10, wobei der Schritt 3 Folgendes enthält:
dann, wenn die Schwingung während des Versuchslaufbetriebs erfasst wird, Beschließen der höchsten Steifigkeit auf der Grundlage des Steifigkeitsindex zu einem Zeitpunkt, zu dem die Schwingung erfasst wird.

14. Servoeinstellungsverfahren für die Motoransteuervorrichtung nach Anspruch 10, wobei der Schritt 3 Folgendes enthält:
dann, wenn der Bewertungsindex bezüglich der Vibration während des Versuchslaufbetriebs den Vibrationserfassungspegel überschreitet, der im Schritt 1 zugewiesen worden ist, Beschließen der höchsten Steifigkeit auf der Grundlage des letzten Steifigkeitsindex.

15. Servoeinstellungsverfahren für die Motoransteuervorrichtung nach Anspruch 9, wobei der Schritt 4 Folgendes enthält:
Beschließen von Suchmustern von der höchsten Steifigkeit, die im Schritt 3 zugewiesen worden ist, wobei die Suchmuster durch Kombinieren von mehreren Steifigkeitsindizes und mehreren Befehlsantwortindizes erhalten werden,
Betreiben des Motors (3) in der Versuchslauffunktion (211) für die Anzahl von Versuchswiederholungen, die im Schritt 1 eingestellt worden ist, in dem Muster der höchsten Beschleunigung im Schritt 2, während der Befehlsantwortindex und der Steifigkeitsindex in aufeinanderfolgender Reihenfolge unter Verwendung der Befehlsantwort-Einstellfunktion (221) und der Steifigkeitseinstellfunktion (231) geändert werden, und
Messen und Speichern der Bewertungsindizes in Bezug auf alle Kombinationen der Suchmuster.

16. Servoeinstellungsverfahren für die Motoransteuervorrichtung nach Anspruch 15, wobei der Schritt 4 Folgendes enthält:
dann, wenn der Steifigkeitsindex geändert wird, Reflektieren der Einstellung der Resonanzeinschränkungseinrichtung (25) auf einer Grundlage des Steifigkeitsindex, der im Schritt 3 gespeichert worden ist, auf die Resonanzeinschränkungseinrichtung (25).

17. Servoeinstellungsverfahren für die Motoransteuervorrichtung nach Anspruch 15, wobei der Schritt 4 anstelle des Betreibens des Motors (3) in der Versuchslauffunktion (211) für die Anzahl der Versuchswiederholungen, die im Schritt 1 eingestellt worden ist, im Muster der höchsten Beschleunigung im Schritt 2 einen Schritt der erneuten Befehlsauswahl des Änderns des Betriebsmusters der Versuchslauffunktion (211) oder des Auswählen des Betriebs auf der Grundlage des externen Positionsbefehls umfasst.

18. Servoeinstellungsverfahren für die Motoransteuervorrichtung nach Anspruch 15, wobei der Schritt 4 Folgendes enthält:
Messen zumindest einer Einstellungszeit, eines Überschwingbetrags, eines Vibrationspegels, einer Anzahl der Änderungen des Positionsabschluss-Ausgangssignals als die Bewertungsindizes.

19. Servoeinstellungsverfahren für die Motoransteuervorrichtung nach Anspruch 15, wobei der Schritt 4 Folgendes enthält:
dann, wenn das Vorhandensein eines Reibungsausgleichs im Schritt 1 ausgewählt wird, Bestätigen des Reibungsausgleichs der Lasteigenschafts-Ausgleichsfunktion.

20. Servoeinstellungsverfahren für die Motoransteuervorrichtung nach Anspruch 1, wobei der Schritt 5 Folgendes enthält:
Auswählen einer empfohlenen Bedingung, und
daraufhin Auswählen einer Kombination des Steifigkeitsindex und des Befehlsantwortindex, die den Bewertungsindex mit der höchsten Priorität aufweist, der durch die empfohlene Bedingung aus dem Bewertungsindex-Messergebnis im Schritt 4 spezifiziert worden ist, als das endgültige Einstellungsergebnis.

21. Servoeinstellungsverfahren für die Motoransteuervorrichtung nach Anspruch 20, wobei die empfohlene Bedingung im Schritt 5 aus einer Einschränkungsbedingung, von der erforderlich ist, dass sie erfüllt ist, und einer Sortierbedingung, die gemäß einer Größe eines Wertes sortierbar ist, erstellt wird.

22. Servoeinstellungsverfahren für die Motoransteuervorrichtung nach Anspruch 20, wobei der Schritt 5 Folgendes enthält:
nachdem die empfohlene Bedingung ausgewählt worden ist, Einstellen des Befehlsantwortindex und des Steifigkeitsindex des endgültigen Einstellungsergebnisses unter Verwendung der Befehlsantwort-Einstellfunktion (221) und der Steifigkeitseinstellfunktion (231), und
Betreiben des Motors (3) in demselben Verfahren und Betriebsmuster wie im Schritt 4 und erneutes Messen der Bewertungsindizes.

23. Servoeinstellungsverfahren für die Motoransteuervorrichtung nach Anspruch 20, wobei der Schritt 5 Folgendes enthält:
Wiederholen, die Schritte von der Auswahl der empfohlenen Bedingung bis zur erneuten Messung der Bewertungsindizes durchzuführen, bis die erneut gemessenen Bewertungsindizes ein Steuerungsziel erreichen.

24. Servoeinstellungsverfahren für die Motoransteuervorrichtung nach Anspruch 20, wobei der Schritt 5 eine Funktion des Durchführens einer Feineinstellung der Parameter der Grundfunktionen, nachdem das endgültige Einstellungsergebnis von der empfohlenen Bedingung ausgewählt worden ist, enthält.

25. Servoeinstellungsverfahren für die Motoransteuervorrichtung nach Anspruch 20, wobei der Schritt 5 Folgendes enthält:
nachdem das endgültige Einstellungsergebnis, das das Steuerungsziel erreicht, ausgegeben worden ist, Außer-Kraft-Setzen aller automatischen Einstellungsfunktionen.

## Revendications

1. Procédé de servo-ajustement pour un dispositif d'excitation de moteur (2) incluant les éléments fonctionnels de base suivants de commande de moteur de :
une unité de sélection d'instruction (21) configurée pour recevoir une entrée d'instruction de position externe à partir d'un dispositif hôte (1) et une instruction de position interne, et produire en sortie l'instruction de position externe ou l'instruction de position interne en tant qu'instruction de position post-sélection ;
une unité de réglage de réponse d'instruction (22) configurée pour recevoir l'instruction de position post-sélection, réaliser un traitement de filtrage pour éliminer une bande de fréquence spécifique, et produire en sortie une instruction de position post-filtrage ;
une unité de commande de position/vitesse (23) configurée pour recevoir l'instruction de position post-filtrage et des informations de position de moteur à partir d'un encodeur (4), et générer une instruction de couple qui rend un écart entre l'instruction de position post-filtrage et les informations de position de moteur nul ;
un compensateur de caractéristique de charge (24) configuré pour recevoir l'instruction de couple, multiplier l'instruction de couple par une valeur estimée d'inertie d'un moteur (3) et une charge (5), et puis additionne une valeur estimée de couple de friction de la charge (5) pour générer une instruction de couple post-compensation ; et
une unité de limitation de résonance (25) configurée pour réaliser un traitement de filtrage pour éliminer une bande de fréquence spécifique à partir de l'instruction de couple post-compensation, et produire en sortie une instruction de couple post-filtrage,
le dispositif d'excitation de moteur (2) incluant en outre les fonctions d'ajustement automatique suivantes de :
une fonction d'essai préliminaire (211) qui génère automatiquement l'instruction de position interne conformément à un modèle de fonctionnement désigné par un servo-ajusteur (6) ;
une fonction de réglage de réponse d'instruction (221) qui règle automatiquement une caractéristique de filtrage de l'unité de réglage de réponse d'instruction (22) conformément à un indice de réponse d'instruction désigné par le servo-ajusteur (6) ;
une fonction de réglage de raideur (231) qui règle automatiquement un paramètre de l'unité de commande de position/vitesse (23) conformément à un indice de raideur désigné par le servo-ajusteur (6) et un signal de détection d'oscillation communiqué à partir d'une fonction de détection d'oscillation (26) ;
une fonction de mesure de caractéristique de charge (241) qui accepte un réglage de validité/d'invalidité de mesure de caractéristique de charge et de validité/d'invalidité de réflexion d'un résultat d'estimation de caractéristique de charge individuellement à partir du servo-ajusteur (6), mesure automatiquement une caractéristique de charge à partir de l'instruction de couple post-filtrage de l'unité de limitation de résonance (25) et d'informations de position de moteur provenant de l'encodeur (4), et règle automatiquement le compensateur de caractéristique de charge (24) conformément à un résultat de mesure ;
une fonction de filtrage adaptative (251) qui accepte un réglage de validité/d'invalidité d'opération d'adaptation et un mode de filtrage adaptatif provenant du servo-ajusteur (6), et règle automatiquement une caractéristique de filtrage de l'unité de limitation de résonance (25) conformément au mode de filtrage adaptatif lorsque l'opération d'adaptation est valide ;
une fonction de détection d'oscillation (26) qui accepte un réglage de validité/d'invalidité de détection d'oscillation et un niveau de détection d'oscillation à partir du servo-ajusteur (6), mesure automatiquement un état d'oscillation à partir d'informations de position provenant de l'encodeur (4), et limite automatiquement l'oscillation en coopération avec la fonction de réglage de raideur (231) ; et
une fonction de mesure d'indice d'évaluation (27) qui accepte un réglage d'une plage d'achèvement de positionnement à partir du servo-ajusteur (6), et mesure automatiquement divers types d'indices d'évaluation à partir d'au moins l'une quelconque de l'instruction de position post-filtrage, des informations de position de moteur, et de l'instruction de couple post-filtrage,
le procédé de servo-ajustement comprenant en outre les étapes suivantes de :
l'étape 1 de la réalisation d'un réglage initial ;
l'étape 2 de la réalisation de la mesure de caractéristique de charge et d'une décision de modèle d'instruction ;
l'étape 3 de la recherche d'une raideur la plus élevée en tant que limite supérieure de l'indice de raideur et du stockage d'un réglage de l'unité de limitation de résonance (25) correspondant à l'indice de raideur ;
l'étape 4 de la sélection d'une pluralité d'indices de raideur et d'une pluralité d'indices de réponse d'instruction sur la base de la raideur la plus élevée, de la combinaison de la pluralité d'indices de raideur et de la pluralité d'indices de réponse d'instruction, et de la mesure et du stockage des indices d'évaluation pour chaque combinaisons à l'instant de l'opération désignée ; et
l'étape 5 de l'obtention d'un résultat d'ajustement final à partir des indices d'évaluation conformément à une condition de recherche.

2. Procédé de servo-ajustement pour le dispositif d'excitation de moteur selon la revendication 1, dans lequel
l'étape 1 inclut le réglage d'une quelconque des conditions initiales suivantes :
un nombre d'essais réalisés dans la fonction d'essai préliminaire (211) ;
un indice initial de réponse d'instruction de la fonction de réglage de réponse d'instruction (221) ;
un indice initial de raideur et une limite de raideur la plus élevée de la fonction de réglage de raideur (231) ;
validité/invalidité d'estimation des moindres carrés, et validité/invalidité de la réflexion de compensateur de caractéristique de charge de la fonction de mesure de caractéristique de charge (241) ;
la validité/l'invalidité et le réglage de mode de fonctionnement de la fonction de filtrage adaptative (251) ;
la validité/l'invalidité et le niveau de détection d'oscillation de la fonction de détection d'oscillation (26) ; et
la plage d'achèvement de positionnement, une limite de couple maximum, et un niveau de détection de vibration de la fonction de mesure d'indice d'évaluation (27).

3. Procédé de servo-ajustement pour le dispositif d'excitation de moteur selon la revendication 2, dans lequel l'étape 1 inclut
l'entrée d'au moins l'une quelconque de règles d'ajustement qualitatives d'un procédé de recherche, d'un objectif de commande, d'une fluctuation de charge, d'un indice de réactivité/de stabilité, et d'une raideur d'une charge destinée à être commandée, et d'au moins l'un quelconque de seuils de mesure quantitatifs de la plage d'achèvement de positionnement, du niveau de détection d'oscillation, et de la limite de couple maximum, et
la sortie de la condition initiale sur la base d'une combinaison des règles d'ajustement qualitatives et des seuils de mesure quantitatifs.

4. Procédé de servo-ajustement pour le dispositif d'excitation de moteur selon la revendication 1, dans lequel l'étape 2 inclut
l'exécution de la fonction de mesure de caractéristique de charge (241) conformément à un réglage de validation/d'invalidation de la fonction de mesure de caractéristique de charge (241) désignée dans l'étape 1,
la mise en fonctionnement du moteur (3) le nombre de fois d'essai désigné dans l'étape 1 au sein d'une plage de fonctionnement définie dans la fonction d'essai préliminaire (211),
le réglage du compensateur de caractéristique de charge sur la base d'un résultat de mesure de caractéristique de charge mesuré tout en changeant une accélération de fonctionnement, et
pour finir, l'invalidation de la fonction de mesure de caractéristique de charge (241).

5. Procédé de servo-ajustement pour le dispositif d'excitation de moteur selon la revendication 4, dans lequel l'étape 2 inclut,
avant que la fonction d'essai préliminaire soit validée, le réglage de la fonction de réglage de raideur (231) avec l'indice initial de raideur désigné dans l'étape 1, et le réglage de l'indice initial de réponse d'instruction avec la fonction de réglage de réponse d'instruction (221).

6. Procédé de servo-ajustement pour le dispositif d'excitation de moteur selon la revendication 4, dans lequel l'étape 2 inclut,
avant que la fonction d'essai préliminaire (211) soit validée, l'invalidation inconditionnelle de la fonction de filtrage adaptative (251) et d'un filtre à encoche de l'unité de limitation de résonance (25).

7. Procédé de servo-ajustement pour le dispositif d'excitation de moteur selon la revendication 4, dans lequel l'étape 2 inclut,
avant que la fonction d'essai préliminaire soit validée, la validation de la fonction de détection d'oscillation (26) au niveau de détection d'oscillation désigné dans l'étape 1, et
lorsqu'une oscillation est détectée durant l'opération d'essai préliminaire, la notification à la fonction de réglage de raideur (231) qu'une oscillation est détectée, la limitation de l'oscillation en réduisant l'indice de raideur, et puis la réalisation de la mesure de caractéristique de charge à nouveau depuis le début.

8. Procédé de servo-ajustement pour le dispositif d'excitation de moteur selon la revendication 4, dans lequel l'étape 2 inclut
le démarrage de l'opération d'essai préliminaire à une accélération maximum que la fonction de mesure de caractéristique de charge (241) peut appliquer,
la mesure des indices d'évaluation tout en augmentant l'accélération, et le réglage du compensateur de caractéristique de charge (24) dans l'étape 3 et ultérieurement avec le résultat de mesure de caractéristique de charge à un point auquel l'indice d'évaluation concernant l'instruction de couple atteint la limite de couple maximum désignée dans l'étape 1.

9. Procédé de servo-ajustement pour le dispositif d'excitation de moteur selon la revendication 2, dans lequel l'étape 2 inclut
le démarrage de l'opération d'essai préliminaire à une accélération maximum que la fonction de mesure de caractéristique de charge (241) peut appliquer,
la mesure des indices d'évaluation tout en augmentant l'accélération, et le réglage d'un modèle d'accélération la plus élevée à un point auquel l'indice d'évaluation concernant l'instruction de couple atteint la limite de couple maximum désignée dans l'étape 1 n tant que modèle de fonctionnement de la fonction d'essai préliminaire (211) dans l'étape 3, dans lequel, lorsque l'instruction de couple dépasse la limite de couple maximum, la quantité de mouvement actuelle, la vitesse la plus élevée, le temps d'accélération et de ralentissement sont stockés en tant que modèle d'accélération la plus élevée.

10. Procédé de servo-ajustement pour le dispositif d'excitation de moteur selon la revendication 9, dans lequel l'étape 3 inclut
la réalisation de l'opération d'essai préliminaire le nombre de fois d'essai désigné dans l'étape 1 dans le modèle d'accélération la plus élevée dans l'étape 2,
l'augmentation de l'indice de raideur jusqu'à ce qu'elle atteigne la limite de raideur la plus élevée désignée dans l'étape 1, et
lorsque l'indice de raideur atteint la limite de raideur la plus élevée désignée dans l'étape 1, la prise d'une décision concernant une raideur la plus élevée sur la base de la limite de raideur la plus élevée.

11. Procédé de servo-ajustement pour le dispositif d'excitation de moteur selon la revendication 10, dans lequel l'étape 3 inclut,
avant que l'opération d'essai préliminaire commence, la réalisation du réglage de validité/d'invalidité de la fonction de filtrage adaptative (251) désigné dans l'étape 1, et
l'invalidation de la fonction de filtrage adaptative (251) après que la décision concernant la raideur la plus élevée est prise.

12. Procédé de servo-ajustement pour le dispositif d'excitation de moteur selon la revendication 10, dans lequel l'étape 3 inclut
le stockage d'une valeur de réglage de l'unité de limitation de résonance (25) immédiatement avant que l'indice de raideur soit augmenté en association avec un réglage de raideur actuel.

13. Procédé de servo-ajustement pour le dispositif d'excitation de moteur selon la revendication 10, dans lequel l'étape 3 inclut,
lorsque l'oscillation est détectée durant l'opération d'essai préliminaire, la prise d'une décision concernant la raideur la plus élevée sur la base de l'indice de raideur à un moment auquel l'oscillation est détectée.

14. Procédé de servo-ajustement pour le dispositif d'excitation de moteur selon la revendication 10, dans lequel l'étape 3 inclut,
lorsque l'indice d'évaluation concernant la vibration dépasse le niveau de détection de vibration désigné dans l'étape 1 durant l'opération d'essai préliminaire, la prise d'une décision concernant la raideur la plus élevée sur la base du dernier indice de raideur.

15. Procédé de servo-ajustement pour le dispositif d'excitation de moteur selon la revendication 9, dans lequel l'étape 4 inclut
la prise d'une décision concernant des modèles de recherche à partir de la raideur la plus élevée désignée dans l'étape 3, les modèles de recherche étant obtenus en combinant une pluralité d'indices de raideur et une pluralité d'indices de réponse d'instruction,
la mise en fonctionnement du moteur (3) dans la fonction d'essai préliminaire (211) le nombre de fois d'essai réglé dans l'étape 1 dans le modèle d'accélération la plus élevée dans l'étape 2 tout en changeant l'indice de réponse d'instruction et l'indice de raideur en ordre séquentiel, en utilisant la fonction de réglage de réponse d'instruction (221) et la fonction de réglage de raideur (231), et
la mesure et le stockage des indices d'évaluation par rapport à la totalité des combinaisons des modèles de recherche.

16. Procédé de servo-ajustement pour le dispositif d'excitation de moteur selon la revendication 15, dans lequel l'étape 4 inclut,
lorsque l'indice de raideur est changé, la réflexion du réglage de l'unité de limitation de résonance (25) sur la base de l'indice de raideur stocké dans l'étape 3 sur l'unité de limitation de résonance (25).

17. Procédé de servo-ajustement pour le dispositif d'excitation de moteur selon la revendication 15, dans lequel, à la place de la mise en fonctionnement du moteur (3) dans la fonction d'essai préliminaire (211) le nombre de fois d'essai réglé dans l'étape 1 dans le modèle d'accélération la plus élevée,
dans l'étape 2, l'étape 4 comprend une étape de resélection d'instruction du changement du modèle de fonctionnement de la fonction d'essai préliminaire (211), ou de la sélection du fonctionnement sur la base de l'instruction de position externe.

18. Procédé de servo-ajustement pour le dispositif d'excitation de moteur selon la revendication 15, dans lequel l'étape 4 inclut
la mesure d'au moins un temps de réglage, une quantité de dépassement, un niveau de vibration, un nombre de changements de signal de sortie d'achèvement de positionnement, en tant qu'indices d'évaluation.

19. Procédé de servo-ajustement pour le dispositif d'excitation de moteur selon la revendication 15, dans lequel l'étape 4 inclut,
lorsque la présence de compensation de friction est sélectionnée dans l'étape 1, la validation de la compensation de friction de la fonction de compensation de caractéristique de charge.

20. Procédé de servo-ajustement pour le dispositif d'excitation de moteur selon la revendication 1, dans lequel l'étape 5 inclut
la sélection d'une condition recommandée, et
puis, la sélection d'une combinaison de l'indice de raideur et de l'indice de réponse d'instruction ayant l'indice d'évaluation de priorité la plus élevée spécifié par la condition recommandée à partir du résultat de mesure d'indice d'évaluation dans l'étape 4, en tant que résultat d'ajustement final.

21. Procédé de servo-ajustement pour le dispositif d'excitation de moteur selon la revendication 20, dans lequel, dans l'étape 5, la condition recommandée est faite d'une condition de restriction devant être respectée, et d'une condition de tri qui est exécutable selon une amplitude d'une valeur.

22. Procédé de servo-ajustement pour le dispositif d'excitation de moteur selon la revendication 20, dans lequel l'étape 5 inclut,
après que la condition recommandée est sélectionnée, le réglage de l'indice de réponse d'instruction et de l'indice de raideur du résultat d'ajustement final, en utilisant la fonction de réglage de réponse d'instruction (221) et la fonction de réglage de raideur (231), et
la mise en fonctionnement du moteur (3) dans les mêmes procédé et modèle de fonctionnement que dans l'étape 4, et la remesure des indices d'évaluation.

23. Procédé de servo-ajustement pour le dispositif d'excitation de moteur selon la revendication 20, dans lequel l'étape 5 inclut
la répétition de la réalisation des étapes depuis la sélection de la condition recommandée jusqu'à la remesure des indices d'évaluation, jusqu'à ce que les indices d'évaluation remesurés atteignent une cible de commande.

24. Procédé de servo-ajustement pour le dispositif d'excitation de moteur selon la revendication 20, dans lequel l'étape 5 inclut une fonction de la réalisation d'ajustement fin de paramètres des fonctions de base après que le résultat d'ajustement final est sélectionné à partir de la condition recommandée.

25. Procédé de servo-ajustement pour le dispositif d'excitation de moteur selon la revendication 20, dans lequel l'étape 5 inclut,
après que le résultat d'ajustement final qui atteint la cible de commande est produit en sortie,
l'invalidation de la totalité des fonctions d'ajustement automatiques.
